# EUROPEAN PATENT APPLICATION

(11) **EP 4 221 366 A1**
(43) Date of publication of application: **02.08.2023**
(21) Application number: 23153821.6
(22) Date of filing: 27.01.2023
(51) Int. Cl.: H04W 52/02

(54) **FAILURE AND RECOVERY OF ELECTRICAL SUPPLY SERVICE FOR WIRELESS COMMUNICATIONS**

(30) Priority: 28.01.2022 US 202263304499 P
(71) Applicant: Comcast Cable Communications LLC, Philadelphia, Pennsylvania 19103 (US)
(72) Inventor: QIAO, Weihua, Philadelphia, 19103 (US); ZHOU, Hua, Philadelphia, 19103 (US); DINAN, Esmael Hejazi, Philadelphia, 19103 (US); PARK, Kyungmin, Philadelphia, 19103 (US); KIM, Taehun, Philadelphia, 19103 (US); CHUN, SungDuck, Philadelphia, 19103 (US); TALEBI FARD, Peyman, Philadelphia, 19103 (US)
(74) Representative: V.O.

(57) **Abstract**

A wireless communication system may communicate information about an electrical supply service to one or more devices. One or more services associated with the wireless communication system may be configured to change one or more operations, for example, based on a failure and/or reduction in the electrical supply service. By changing the one or more operations, at least some services associated with the wireless communication may be maintained during a period of reduced and/or insufficient supply of electricity.

## Description

### CROSS-REFERENCE TO RELATED APPLICATIONS

This application claims the benefit of U.S. Provisional Application No. 63/304,499, filed on January 28, 2022. The above referenced application is hereby incorporated by reference in its entirety.

### BACKGROUND

A communication system relies on electrical supply service to operate. Power supply failure may occur from time to time, for example, due to various conditions such as severe weather, overload, or equipment failure. A backup electrical supply may be provided on a limited basis during such failure.

### SUMMARY

The following summary presents a simplified summary of certain features. The summary is not an extensive overview and is not intended to identify key or critical elements.

A wireless communication network may use power from an electrical supply service. A failure of the electrical supply service may result in one or more devices in the wireless communication network using a backup electrical supply, such a battery, a secondary electrical supply, and/or an alternative energy supply (e.g., wind, solar, hydroelectric, geothermal, etc.). The backup electrical supply (and/or the primary electrical supply service) may be insufficient to provide all services of the wireless communication network. One or more services may experience a failure and/or degradation, for example, if there is an insufficient supply of power. Failure and/or degradation of services may be reduced and/or avoided, based on communications among devices of the wireless communication network that provide information relating to one or more electrical supply services. For example, a first network device (e.g., a policy control function (PCF) device) may communicate with a second network device (e.g., an application function (AF) device) to indicate information about an electrical supply service, such as a status (e.g., failure, reduction, recovery, etc.), location (e.g., of a fault, of a secondary/alternative supply source, etc.), and/or time (e.g., recovery time, duration of expected outage, etc.) of an event associated with an electrical supply (e.g., power outage, reduced supply, etc.). Based on the information about the electrical supply service, one or more changes may be made to one or more services that may reduce a potential negative impact of the insufficient supply of electricity on the wireless communication network. For example, higher power consumption communications that may have low priority (e.g., video transmission) may be disabled and/or restricted so that lower power consumption communications that may have higher priority (e.g., voice calls, emergency services, etc.) may be maintained at an acceptable level during a period of reduced and/or insufficient supply of electricity. By communicating information about an electrical supply service and adjusting one or more services based on the information, a wireless communications network may be able to maintain operation of at least some services during periods of reduced and/or insufficient electrical power.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A and FIG. 1B show example communication networks.
FIG. 2A, FIG. 2B, FIG. 2C, and FIG. 2D show examples frameworks for a service-based architecture within a core network.
FIG. 3 shows an example communication network.
FIG. 4A and FIG. 4B show example core network architectures.
FIG. 5 shows an example of a core network architecture.
FIG. 6 shows an example of network slicing.
FIG. 7A shows an example a user plane protocol stack.
FIG. 7B shows an example a control plane protocol stack.
FIG. 7C shows example services provided between protocol layers of the user plane protocol stack.
FIG. 8 shows an example quality of service (QoS) model.
FIG. 9A, FIG. 9B, FIG. 9C, and FIG. 9D show example states and state transitions of a wireless device.
FIG. 10 shows an example registration procedure for a wireless device.
FIG. 11 shows an example service request procedure for a wireless device.
FIG. 12 shows an example of a protocol data unit session establishment procedure for a wireless device.
FIG. 13A shows example elements in a communications network.
FIG. 13B shows example elements of a computing device that may be used to implement any of the various devices described herein.
FIG. 14A, FIG. 14B, FIG. 14C, and FIG. 14D show various example arrangements of physical core network deployments.
FIG. 15 shows an example method for RRC connection establishment.
FIG. 16 shows an example of a power system.
FIG. 17 shows an example architecture for a wireless communication network and a power system.
FIG. 18 shows example communications in a wireless communication network.
FIG. 19 shows an example of a Diameter AA-Request (AAR) message comprising information about an electrical supply service.
FIG. 20A and FIG. 20B show example methods for communiating information about an electrical supply service.
FIG. 21 shows an example of communicating information about an electrical supply service.
FIG. 22 shows example method for communicating information about an electrical supply service.
FIG. 23 shows example method for communicating information about an electrical supply service.
FIG. 24A and FIG. 24B show examples of communicating information about an electrical supply service.
FIG. 25 shows an example of communicating information about an electrical supply service.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to a multiple access procedure for wireless communications.

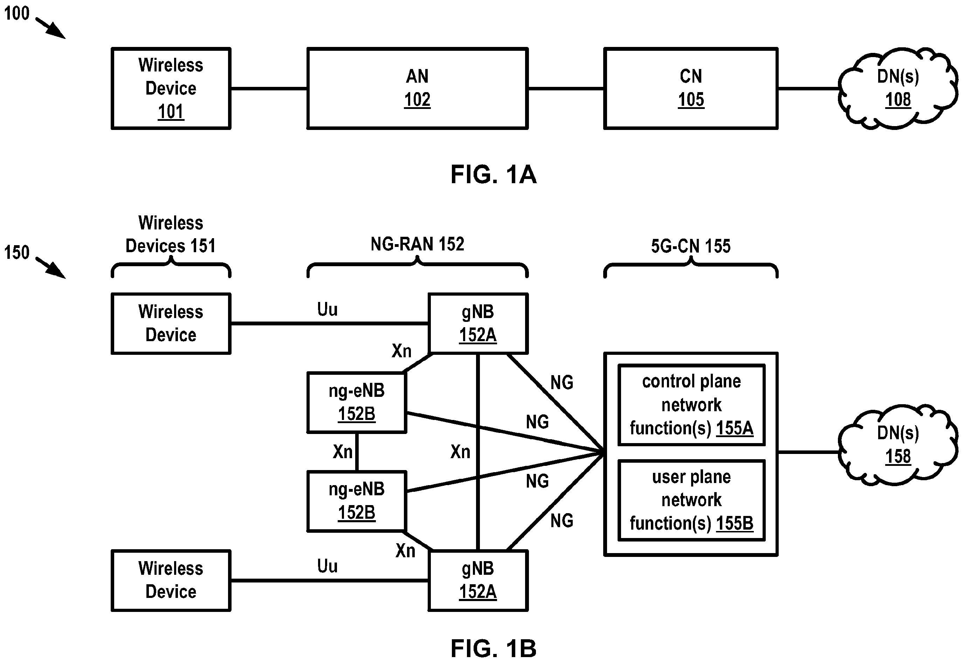

FIG. 1A shows an example communication network 100. The communication network 100 may comprise, for example, a public land mobile network (PLMN) operated/managed/run by a network operator. The communication network 100 comprise one or more of a wireless device 101, an access network (AN) 102, a core network (CN) 105, and/or one or more data network(s) (DNs) 108.

The wireless device 101 may communicate with DNs 108, for example, via AN 102 and/or CN 105. As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, an unmanned aerial vehicle, an urban air mobility aircraft, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The AN 102 may connect the wireless device 101 to the CN 105. A communication direction from the AN 102 to the wireless device 101 may be referred to as a downlink and/or a downlink communication direction. The communication direction from the wireless device 101 to the AN 102 may be referred to as an uplink and/or an uplink communication direction. Downlink transmissions may be separated and/or distinguished from uplink transmissions using frequency division duplexing (FDD), time-division duplexing (TDD), any other duplexing and/or multiplexing schemes, and/or some combination of the two duplexing techniques. The AN 102 may connect to and/or communicate with wireless device 101 via radio communications over an air interface. An AN that at least partially operates over the air interface may be referred to as a radio access network (RAN). A RAN may comprise one or more of: a radio unit (RU), distributed unit (DU), and/or a centralized unit (CU). A RAN may operate in a virtualized and/or in a non-virtualized environment. A RAN may perform one or more network functions in hardware. A RAN may perform one or more network functions in software. A RAN may perform one or more network functions in hardware and/or software. The CN 105 may set up/configure one or more end-to-end connections between wireless device 101 and the one or more DNs 108. The CN 105 may authenticate wireless device 101, provide a charging functionality, and/or provide/configure one or more additional functionalities/services for the wireless device 101.

As used throughout, the term "base station" may refer to, comprise, and/or encompass any element of the AN 102 that facilitates communication between wireless device 101 and the AN 102 (and/or any other elements of the communication network 100). A base station may comprise an RU. ANs and base stations may be referred to by other terminologies and/or may have other implementations. The base station may be a terrestrial base station at a fixed location on the earth. The base station may be a mobile base station with a moving coverage area. The base station may be on an aerial vehicle and/or may be located in space. For example, the base station may be on board an aircraft or a satellite. The RAN may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

The base station may be referred to using different terminologies in different communication standards/protocols. For example, WiFi and other standards may use the term access point. The Third-Generation Partnership Project (3GPP) has produced specifications for three generations of mobile networks, each of which uses a different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use different terminologies to refer to the elements/components which implement the methods described in the present disclosure (e.g., wireless devices, base stations, ANs, CNs, components thereof, and/or other elements in a communication network). A base station may be and/or comprise a repeater or relay node used to extend the coverage area of a donor node. A repeater node may amplify and rebroadcast a radio signal received from a donor node. A relay node may perform the same/similar functions as a repeater node. A relay node may decode radio signals received from the donor node (e.g., to remove noise) before amplifying and rebroadcasting the radio signal.

The AN 102 may include one or more base stations. The one or more base stations may have/serve one or more coverage areas. A geographical size and/or an extent of a coverage area may be based on a range at which a receiver of AN 102 can successfully receive transmissions from a transmitter (e.g., the wireless device 101) operating within the coverage area (and/or vice-versa). The coverage areas may be referred to as sectors or cells. In some contexts, the term cell may refer to a carrier frequency used in a particular coverage area. Base stations with large coverage areas may be referred to as macrocell base stations. Base stations may cover/serve smaller areas, for example, to provide coverage in areas/locations with weak macrocell coverage, and/or to provide additional coverage in areas with high traffic (e.g., referred to as hotspots). Examples of small cell base stations comprise (e.g., in order of decreasing coverage areas) microcell base stations, picocell base stations, femtocell base stations, and/or home base stations. In combination, the coverage areas of the base stations may provide radio coverage/service to the wireless device 101 over a wide geographic area to support wireless device mobility.

A base station may comprise one or more sets of antennas for communicating with the wireless device 101 over an air interface. Each set of antennas may be separately controlled by the base station. Each set of antennas may have a corresponding coverage area. For example, a base station may comprise three sets of antennas to respectively control three coverage areas (e.g., on three different sides) of the base station. A base station may comprise any quantity of antennas, which may correspond to any quantity of coverage areas. The entirety of the base station (and its corresponding antennas) may be deployed at a single location or at a plurality of locations. A controller (e.g., at a central location) may control/operate one or more sets of antennas at one or more distributed locations. The controller may be, for example, a baseband processing unit that comprises a centralized and/or cloud-based RAN architecture. The baseband processing unit may be either centralized in a pool of baseband processing units or may be virtualized. A set of antennas at a distributed location may be referred to as a remote radio head (RRH).

FIG. 1B shows another example communication network 150. The communication network 150 may comprise, for example, a PLMN operated/run by a network operator. The communication network 150 may comprise wireless devices 151, a next generation radio access network (NG-RAN) 152, a 5G core network (5G-CN) 155, and one or more DNs 158. The NG-RAN 152 may comprise one or more base stations (e.g., generation node Bs (gNBs) 152A and/or next generation evolved Node Bs (ng eNBs) 152B). The 5G-CN 155 may comprise one or more network functions (NFs). The one or more NFs may comprise control plane functions 155A and user plane functions 155B. The one or more DNs 158 may comprise public DNs (e.g., the Internet), private DNs, and/or intra-operator DNs. The components/elements shown in FIG. 1B may represent specific implementations and/or terminology of components/elements shown in FIG. 1A.

The base stations of the NG-RAN 152 may be connected to the wireless devices 151 via one or more Uu interfaces. The base stations of the NG-RAN 152 may be connected to each other via one or more first interface(s) (e.g., Xn interface(s)). The base stations of the NG-RAN 152 may be connected to 5G-CN 155 via one or more second interfaces (e.g., NG interface(s)). An interfaces may comprise one or more air interfaces, direct physical connections, indirect connections, and/or combinations thereof. For example, the Uu interface may comprise an air interface. The NG and Xn interfaces may comprise an air interface, direct physical connections, and/or indirect connections over an underlying transport network (e.g., an internet protocol (IP) transport network).

Each of the Uu, Xn, and NG interfaces may be associated with a protocol stack. The protocol stacks may comprise a user plane (UP) protocol stack and a control plane (CP) protocol stack. User plane data may comprise data corresponding to (e.g., associated with and/or pertaining to) users of the wireless devices 151. For example, user plane data may comprise internet content downloaded via a web browser application, sensor data uploaded via a tracking application, and/or email data communicated to and/or from an email server. Control plane data may comprise signaling and/or control message messages. For example, control plane data may facilitate packaging and routing of user plane data such that the user plane data may be communicated with (e.g., sent to and/or received from) the DN(s). The NG interface may be divided into (e.g., may comprise) an NG user plane interface (NG-U) and an NG control plane interface (NG-C). The NG-U interface may provide/perform delivery of user plane data between the base stations and the one or more user plane network functions 155B. The NG-C interface may be used for control signaling between the base stations and the one or more control plane network functions 155A. The NG-C interface may provide, for example, NG interface management, wireless device context management, wireless device mobility management, transport of non-access stratum (NAS) messages, paging, protocol data unit (PDU) session management, and configuration transfer and/or warning message transmission. In at least some scenarios, the NG-C interface may support transmission of user data (e.g., a small data transmission for an IoT device).

One or more of the base stations of the NG-RAN 152 may be split into a central unit (CU) and one or more distributed units (DUs). A CU may be coupled to one or more DUs via an interface (e.g., an F1 interface). The CU may handle one or more upper layers in the protocol stack and the DU may handle one or more lower layers in the protocol stack. For example, the CU may handle a radio resource control (RRC) layer, a physical data convergence protocol (PDCP) layer, and/or a service data application protocol (SDAP) layer, and the DU may handle radio link control (RLC) layer, a medium access control (MAC) layer, and/or a physical (PHY) layer. The one or more DUs may be in geographically diverse locations relative to the CU and/or each other. The CU/DU split architecture may permit increased coverage and/or better coordination.

The gNBs 152A and ng-eNBs 152B may provide different user plane and control plane protocol termination towards the wireless devices 151. For example, the gNB 154A may provide new radio (NR) protocol terminations over a Uu interface associated with a first protocol stack. The ng-eNBs 152B may provide Evolved UMTS Terrestrial Radio Access (E-UTRA) protocol terminations over a Uu interface associated with a second protocol stack.

The 5G-CN 155 may authenticate wireless devices 151, set up end-to-end connections between wireless devices 151 and the one or more DNs 158, and/or provide charging functionality. The 5G-CN 155 may be based on a service-based architecture. The service-based architecture may enable the NFs comprising the 5G-CN 155 to offer services to each other and to other elements of the communication network 150 via interfaces. The 5G-CN 155 may include any quantity of other NFs and any quantity of instances of each NF.

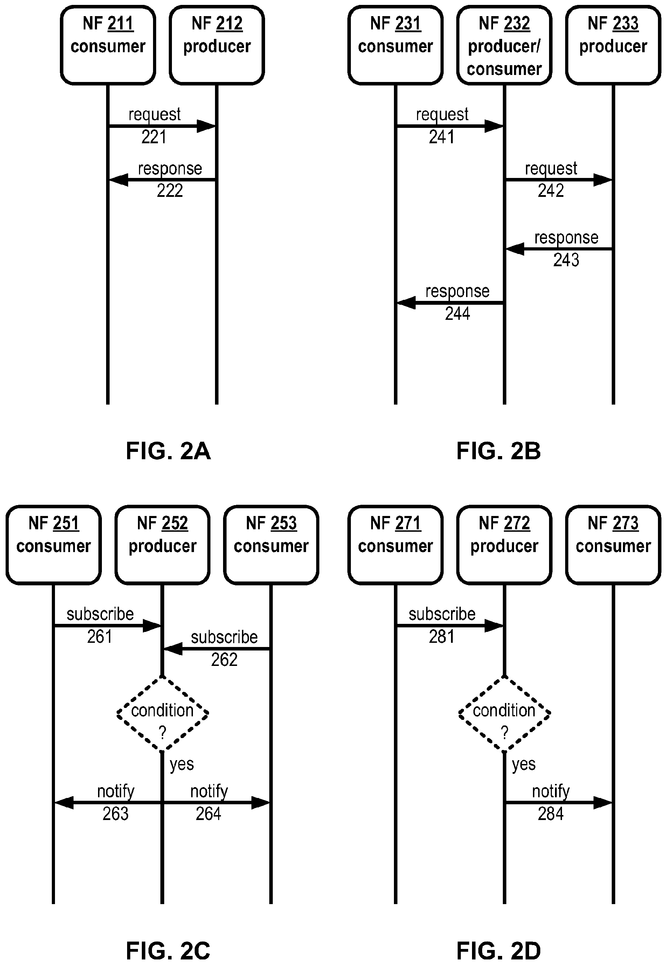

FIG. 2A, FIG. 2B, FIG. 2C, and FIG. 2D show example frameworks for a service-based architecture within a core network. A service, in a service-based architecture, may be requested/sought by a service consumer and provided by a service producer. An NF may determine, prior to obtaining the requested service, where the requested service may be obtained. The NF may communicate with a network repository function (NRF) to discover a service. For example, an NF that provides one or more services may register with a network repository function (NRF). The NRF may store data relating to the one or more services that the NF is prepared to provide to other NFs in the service-based architecture. A consumer NF may query the NRF to discover/determine a producer NF. For example, the consumer NF may obtain, from the NRF, a list of NF instances that provide a particular service).

As shown in FIG. 2A, an NF 211 (e.g., a consumer NF) may send a request 221 to an NF 212 (e.g., a producer NF). The request 221 may be a request for a particular service. The request 221 may be sent based on a discovery that NF 212 is a producer of that service. The request 221 may comprise data relating to NF 211 and/or the requested service. The NF 212 may receive the request 221, perform one or more actions associated with the requested service (e.g., retrieving data), and provide/send a response 221. The one or more actions performed by the NF 212 may be based on request data included in the request 221, data stored by the NF 212, and/or data retrieved by the NF 212. The response 222 may notify/indicate, to the NF 211, that the one or more actions have been completed. The response 222 may comprise response data relating to the NF 212, the one or more actions, and/or the requested service.

As shown in FIG. 2B, an NF 231 may send a request 241 to an NF 232. A service produced/provided by the NF 232 may comprise sending a request 242 to an NF 233 (e.g., based on receiving the request 241). The NF 233 may perform one or more actions and provide/send a response 243 to the NF 232. The NF 232 may send a response 244 to the NF 231, for example, based on receiving the response 243. As shown in FIG. 2B, an NF (e.g., a single NF) may perform the role of a producer of services, consumer of services, and/or both. A particular NF service may comprise any quantity/number of nested NF services produced by one or more other NFs.

FIG. 2C shows an example of subscribe-notify interactions between a consumer NF and a producer NF. An NF 251 may send a subscription 261 (e.g., a subscription request) to an NF 252. An NF 253 may send a subscription 262 (e.g., a subscription request) to the NF 252. Although FIG. 2C shows two NFs and the NF 252 providing multiple subscription services to the two NFs, a subscribe-notify interaction may comprise one subscriber, and/or any other quantity of subscribers. The NFs 251, 253 may be independent from one another. For example, the NFs 251, 253 may independently discover the NF 252 and/or independently determine to subscribe to the service offered by the NF 252. The NF 252 may provide/send a notification to a subscribing NF, for example, based on receiving the subscription. For example, the NF 252 may send a notification 263 to the NF 251 based on the subscription 261 and/or may send a notification 264 to the NF 253 based on the subscription 262.

The sending of the notifications 263, 264 may be conditional. The sending of the notifications 263, 264 may be based on a determination that a condition has occurred. The notifications 263, 264 may be based on a determination that a particular event has occurred, a determination that a particular condition is outstanding, and/or a determination that a duration of time associated with the subscription has elapsed. The duration of time may be a time period associated with a subscription for notifications (e.g., periodic notifications). The NF 252 may send the notifications 263, 264 to the NFs 251, 253 simultaneously, substantially simultaneously, and/or based on/in response to a same condition. The NF 252 may send the notifications 263, 264 at different times and/or based on/in response to different notification conditions. The NF 251 may request a notification based on a certain parameter, as measured by the NF 252, exceeding a first threshold. The NF 252 may request a notification based on the parameter exceeding a second threshold (e.g., different from the first threshold). A parameter of interest and/or a corresponding threshold may be indicated in the subscriptions 261, 262.

FIG. 2D shows another example of a subscribe-notify interaction. An NF 271 may send a subscription 281 to an NF 272. The NF 272 may send a notification 284, for example, based on/in response to receipt of the subscription 281 and/or a determination that a notification condition has occurred. The notification 284 may be sent to an NF 273. While the example of FIG. 2C shows a notification being sent to the subscribing NF, the example of FIG. 2D shows that a subscription and its corresponding notification may be associated with (e.g., received from and sent to) different NFs. For example, the NF 271 may subscribe to the service provided by the NF 272 on behalf of the NF 273.

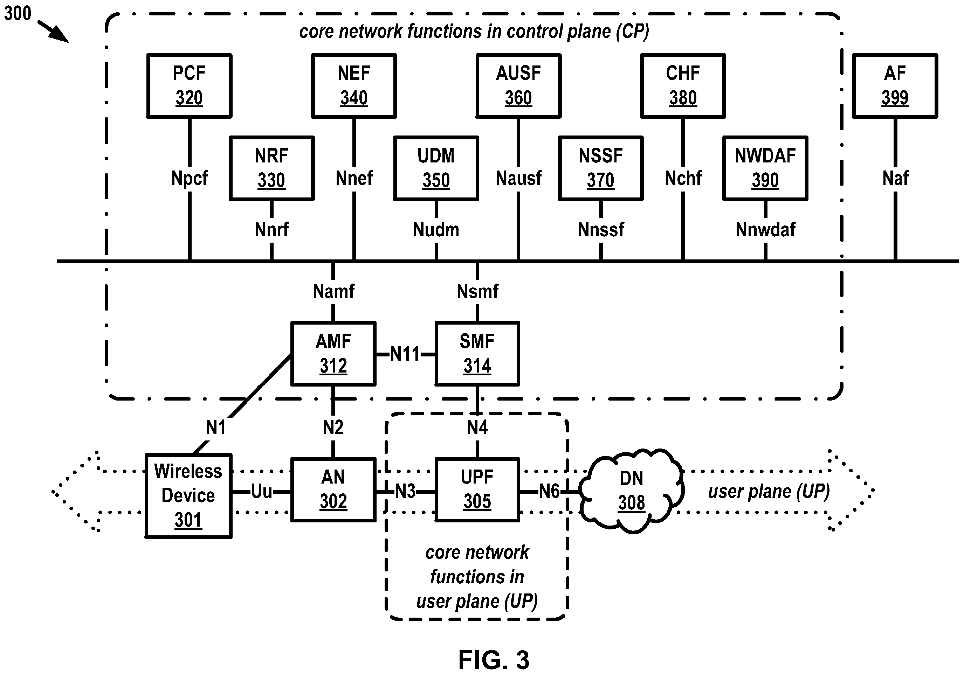

FIG. 3 shows an example communication network 300. The Communication network 300 may comprise a wireless device 301, an AN 302, and/or a DN 308. The other elements shown in FIG. 3 may be included in and/or associated with a core network. An element (e.g., each element) of the core network may be an NF.

The NFs may comprise a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and/or an application function (AF) 399. The UPF 305 may be a user plane core network function. The NFs 312, 314, and 320-390 may be control plane core network functions. The core network may comprise additional instances of any of the NFs shown in FIG. 3 and/or one or more different types of NF that provide different services. Other examples of NF type may comprise a gateway mobile location center (GMLC), a location management function (LMF), an operations, administration, and maintenance function (OAM), a public warning system (PWS), a short message service function (SMSF), a unified data repository (UDR), and/or an unstructured data storage function (UDSF).

An element (e.g., each element) shown in FIG. 3 may comprise an interface with at least one other element. The interface may be a logical connection and/or a direct physical connection. Any interface may be identified/indicated using a reference point representation and/or a service-based representation. In a reference point representation, the letter N may be used followed by a numeral to indicate an interface between two specific elements. For example, as shown in FIG. 3, the AN 302 and the UPF 305 may interface via N3, whereas UPF 305 and DN 308 may interface via N6. In a service-based representation, the letter N may be followed by one or more alphabets/letters. The letters may identify/indicate an NF that provides services to the core network. For example, PCF 320 may provide services via interface Npcf. The PCF 320 may provide services to any NF in the core network via Npcf. A service-based representation may correspond to a bundle of reference point representations. For example, the Npcf interface between PCF 320 and the core network may generally correspond to an N7 interface between PCF 320 and SMF 314, an N30 interface between PCF 320 and NEF 340, and/or an N# interface between any functions where # may indicate any number.

The UPF 305 may serve as a gateway for user plane traffic between the AN 302 and the DN 308. The wireless device 301 may connect to UPF 305 via a Uu interface and an N3 interface (also described as NG-U interface). The UPF 305 may connect to the DN 308 via an N6 interface. The UPF 305 may connect to one or more other UPFs (not shown) via an N9 interface. The wireless device 301 may be configured to receive services through a protocol data unit (PDU) session. The PDU session may be a logical connection between the wireless device 301 and the DN 308. The UPF 305 (or a plurality of UPFs) may be selected by the SMF 314 to handle/process a particular PDU session between the wireless device 301 and the DN 308. The SMF 314 may control the functions of the UPF 305 with respect to the PDU session. The SMF 314 may connect to the UPF 305 via an N4 interface. The UPF 305 may handle/process any quantity of PDU sessions associated with any quantity of wireless devices (via any quantity of ANs). The UPF 305 may be controlled, for handling the one or more PDU sessions, by any quantity of SMFs via any quantity of corresponding N4 interfaces.

The AMF 312 may control wireless device access to the core network. The wireless device 301 may register with the network via the AMF 312. for the wireless device 301 may register with the network prior to establishing a PDU session. The AMF 312 may manage a registration area of the wireless device 301, which may enable the network to track the physical location of wireless device 301 within the network. The AMF 312 may manage wireless device mobility for a wireless device in connected mode. For example, the AMF 312 may manage wireless device handovers from one AN (or portion thereof) to another. The AMF 312 may perform, for a wireless device in idle mode, registration updates, and/or page the wireless device to transition the wireless device to connected mode.

The AMF 312 may receive, from the wireless device 301, NAS messages. The NAS messages may be sent/transmitted in accordance with NAS protocol. NAS messages may relate to communications between the wireless device 301 and the core network. NAS messages may be relayed to the AMF 312 via the AN 302. Communication between the wireless device 301 and the AMF 312 may be represented as communication via the N1 interface. NAS messages may facilitate wireless device registration and mobility management, for example, by authenticating, identifying, configuring, and/or managing a connection of the wireless device 301. NAS messages may support session management procedures for maintaining user plane connectivity and quality of service (QoS) of a session between the wireless device 301 and the DN 309. The AMF 312 may send a NAS message to SMF 314, for example, if the NAS message involves (e.g., is associated with, corresponds to) session management. NAS messages may be used to transport messages between wireless device 301 and other components of the core network (e.g., core network components other than AMF 312 and SMF 314). The AMF 312 may act on/process a NAS message, or alternatively, forward the NAS message to an appropriate core NF (e.g., SMF 314, etc.).

The SMF 314 may establish, modify, and/or release a PDU session based on messaging received from the wireless device 301. The SMF 314 may allocate, manage, and/or assign an IP address to the wireless device 301, for example, based on establishment of a PDU session. Multiple SMFs may be in/associated with the network. Each of the SMFs may be associated with a respective group of wireless devices, base stations, and/or UPFs. A wireless device with multiple PDU sessions may be associated with a different SMF for each PDU session. The SMF 314 may select one or more UPFs to handle/process a PDU session. The SMF 314 may control the handling/processing of the PDU session by the selected UPF by providing rules for packet handling (e.g., packet detection rules (PDRs), forwarding action rules (FARs), QoS enforcement rules (QERs), etc.). Rules relating to QoS and/or charging for a particular PDU session may be obtained from the PCF 320 and provided to the UPF 305 (e.g., by the SMF 314).

The PCF 320 may provide/send, to other NFs, services relating to policy rules. The PCF 320 may use subscription data and information about network conditions to determine policy rules. The PCF 320 may provide the policy rules to a particular NF which may be responsible for enforcement of those rules. Policy rules may relate to policy control for access and mobility, and may be enforced by the AMF 312. Policy rules may relate to session management, and may be enforced by the SMF 314. Policy rules may be network-specific, wireless devicespecific, session-specific, and/or data flow-specific.

The NRF 330 may provide service discovery functions. The NRF 330 may belong/correspond to a particular PLMN. The NRF 330 may maintain NF profiles relating to other NFs in the communication network 300. The NF profile may comprise, for example, an address, PLMN, and/or type of the NF, a slice indicator/identifier, a list of the one or more services provided by the NF, and/or authorization required to access the services.

The NEF 340 may provide an interface to external domains, permitting the external domains to selectively access the control plane of the communication network 300. The external domain may comprise, for example, third-party network functions, application functions, and/or any other functions. The NEF 340 may act as a proxy between external elements and network functions such as the AMF 312, the SMF 314, the PCF 320, the UDM 350, and/or any other functions. As an example, the NEF 340 may determine a location and/or reachability status of the wireless device 301 based on reports from the AMF 312, and/or may provide status information to an external element. An external element may provide, via the NEF 340, information that facilitates the setting of parameters for establishment of a PDU session. The NEF 340 may determine which data and capabilities of the control plane are exposed to the external domain. The NEF 340 may provide secure exposure (e.g., by authenticating and/or authorizing an external entity) to exposed data or capabilities of the communication network 300. The NEF 340 may selectively control the exposure such that the internal architecture of the core network is hidden/obscured from the external domain.

The UDM 350 may provide data storage for other NFs. The UDM 350 may permit a consolidated view of network information. The consolidated view may be used to ensure that the most relevant information may be made available to different NFs from a single resource. The UDM 350 may store and/or retrieve information from a unified data repository (UDR). For example, the UDM 350 may obtain user subscription data relating to the wireless device 301 from the UDR.

The AUSF 360 may support mutual authentication of the wireless device 301 by the core network and authentication of the core network by the wireless device 301. The AUSF 360 may perform key agreement procedures and provide keying material that may be used to improve security.

The NSSF 370 may select/determine one or more network slices to be used by the wireless device 301. The NSSF 370 may select a slice based on slice selection information. For example, the NSSF 370 may receive single network slice selection assistance information (S-NSSAI) and map the S-NSSAI to a network slice instance identifier (NSI).

The CHF 380 may control billing-related tasks associated with wireless device 301. For example, the UPF 305 may report/send traffic usage information, associated with wireless device 301, to the SMF 314. The SMF 314 may collect usage data from the UPF 305 and one or more other UPFs. The usage data may indicate a quantity of data exchanged, a DN that the data is exchanged with, a network slice associated with the data, and/or any other information that may influence billing. The SMF 314 may share the collected usage data with the CHF 380. The CHF 380 may use the collected usage data to perform billing-related tasks associated with wireless device 301. The CHF 380 may, depending on the billing status of wireless device 301, instruct the SMF 314 to limit and/or influence/control access of the wireless device 301 and/or provide billing-related notifications to wireless device 301.

The NWDAF 390 may collect and/or analyze data from other NFs and/or offer data analysis services to other NFs. The NWDAF 390 may receive/collect, from the UPF 305, the AMF 312, and/or the SMF 314, data/information relating to a load level for a particular network slice instance. The NWDAF 390 may provide (e.g., based on the collected data) load level data to the PCF 320 and/or the NSSF 370, and/or may notify the PCF 320 and/or the NSSF 370 if a load level for a slice reaches and/or if a load level for a slice exceeds a load level threshold.

The AF 399 may be outside the core network, but may interact with the core network to provide information relating to the QoS requirements and/or traffic routing preferences associated with a particular application. The AF 399 may access the core network based on the exposure constraints imposed by the NEF 340. An operator of the core network may consider the AF 399 to be a trusted domain that may directly access the core network (and/or the communication network 300).

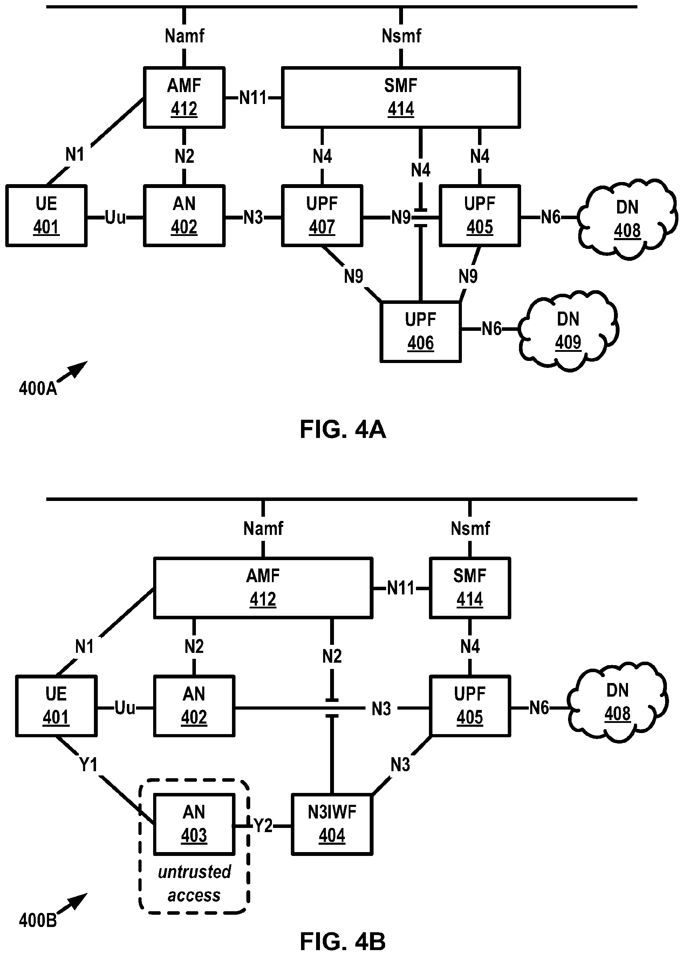

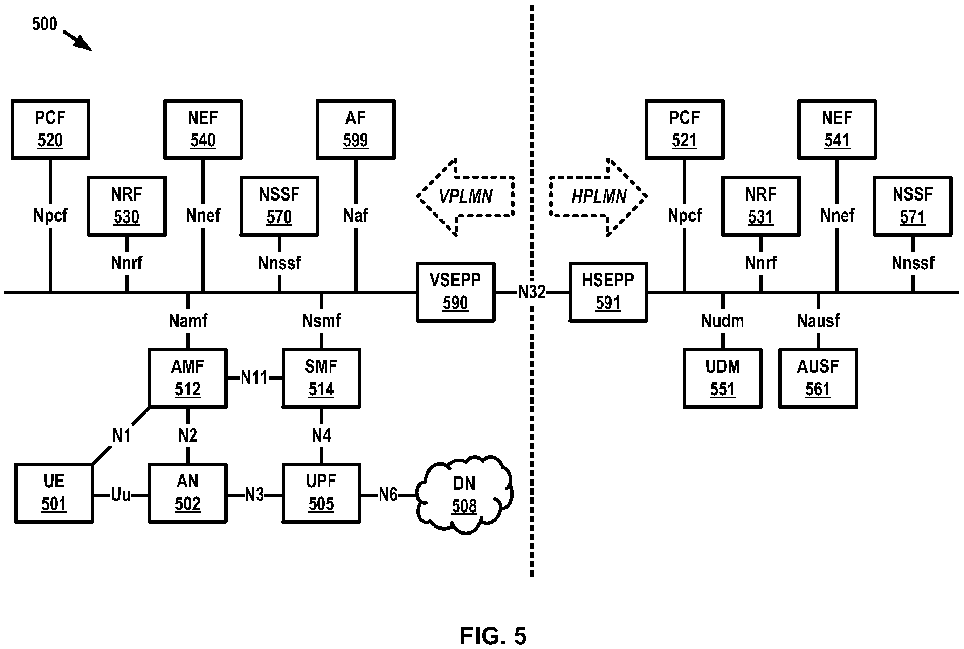

FIGS. 4A, 4B, and 5 show examples of core network architectures. The core network architectures shown in FIGS. 4A, 4B, and 5 may be analogous in some respects to the core network architecture 300 shown in FIG. 3. For brevity, some of the core network elements shown in FIG. 3 are not shown in FIGS. 4A, 4B, and 5 but may be included in one or more of these core network architectures. Many of the elements shown in FIGS. 4A, 4B, and 5 may be analogous in some respects to elements depicted in FIG. 3. For brevity, some of the details relating to their functions or operation are not shown but may be included in one or more of these core network architectures. Operation of one or more elements shown in FIGS. 4A, 4B, and 5 may be similar, or substantially similar, to corresponding elements shown in FIG. 3.

FIG. 4A shows an example of a core network architecture. The core network architecture 400A of FIG. 4A may comprise an arrangement of multiple UPFs. Core network architecture 400A may comprise one or more of: a wireless device 401, an AN 402, an AMF 412, and/or an SMF 414. The core network architecture 400A may comprise multiple UPFs (e.g., a UPF 405, a UPF 406, and a UPF 407) and multiple DNs (e.g., a DN 408 and a DN 409). Each of the multiple UPFs 405, 406, 407 may communicate with the SMF 414 via a corresponding N4 interface. The DNs 408, 409 may communicate with the UPFs 405, 406, respectively, via N6 interfaces. The multiple UPFs 405, 406, 407 may communicate with one another via N9 interfaces.

The UPFs 405, 406, 407 may perform traffic detection. The UPFs 405, 406, 407 may indicate, identify, and/or classify packets. Packet indication/identification may be performed based on PDRs provided by the SMF 414. PDRs may comprise packet detection information. Packet detection information may comprise one or more of: a source interface, a wireless device IP address, core network (CN) tunnel information (e.g., a CN address of an N3/N9 tunnel corresponding to a PDU session), a network instance indicator/identifier, a QoS flow indicator/identifier (QFI), a filter set (e.g., an IP packet filter set and/or an ethernet packet filter set), and/or an application indicator/identifier.

PDRs may indicate one or more rules for handling the packet upon detection thereof. The one or more rules may comprise, for example, FARs, multi-access rules (MARs), usage reporting rules (URRs), QERs, and/or any other rule. For example, the PDR may comprise one or more FAR identifiers, MAR identifiers, URR identifiers, and/or QER identifiers. The identifiers may indicate the rules that are prescribed/to be used for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface (e.g., "access" for downlink or "core" for uplink). The FAR may indicate a buffering action rule (BAR), for example, if a packet is to be buffered. The UPF 405 may perform data buffering of a certain quantity downlink packets, for example, if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark/indicate packets belonging to a particular QoS flow with a corresponding QFI. The marking may enable a recipient of the packet to determine a QoS of the packet (e.g., a QoS to be enforced for the packet).

The UPF 405 may provide/send usage reports to the SMF 414 in accordance with a URR. The URR may indicate one or more triggering conditions for generation and/or reporting of the usage report. The reporting may be based on immediate reporting, periodic reporting, a threshold for incoming uplink traffic, and/or any other suitable triggering condition. The URR may indicate a method for measuring usage of network resources (e.g., data volume, duration, and/or event).

The DNs 408, 409 may comprise public DNs (e.g., the Internet), private DNs (e.g., private, internal corporateowned DNs), and/or intra-operator DNs. A DN (e.g., each DN) may provide an operator service and/or a third-party service. The service provided by a DN may be an Internet service, an IP multimedia subsystem (IMS), an augmented or virtual reality network, an edge computing or mobile edge computing (MEC) network, and/or any other service. A DN (e.g., each DN) may be indicated/identified using a data network name (DNN). The wireless device 401 may be configured to establish a first logical connection with the DN 408 (e.g., a first PDU session), a second logical connection with DN 409 (e.g., a second PDU session), or both simultaneously (e.g., the first PDU session and the second PDU sessions).

A PDU session (e.g., each PDU) session may be associated with at least one UPF configured to operate as a PDU session anchor (PSA, or anchor). The anchor may be a UPF that may provide an N6 interface with a DN.

The UPF 405 may be the anchor for the first PDU session between wireless device 401 and DN 408. The UPF 406 may be the anchor for the second PDU session between wireless device 401 and DN 409. The core network may use the anchor to provide service continuity of a particular PDU session (e.g., IP address continuity) as wireless device 401 moves from one access network to another. The wireless device 401 may establish a PDU session using a data path to the DN 408 and using an access network other than AN 402. The data path may use the UPF 405 acting as anchor. The wireless device 401 may (e.g., later) move into the coverage area of the AN 402. The SMF 414 may select a new UPF (e.g., the UPF 407) to bridge the gap between the newly-entered access network (e.g., the AN 402) and the anchor UPF (e.g., the UPF 405). The continuity of the PDU session may be preserved as any quantity/number of UPFs may be added and/or removed from the data path. A UPF added to a data path (e.g., as shown in FIG. 4A) may be described as an intermediate UPF and/or a cascaded UPF.

The UPF 406 may be the anchor for the second PDU session between wireless device 401 and the DN 409. The anchor for the first PDU session and the anchor for the second PDU sessions being associated with different UPFs (e.g., as shown in FIG. 4A) is merely exemplary. Multiple PDU sessions with a single DN may correspond to any quantity/number of anchors. A UPF at the branching point (e.g., the UPF 407 in FIG. 4) may operate as an uplink classifier (UL-CL), for example, if there are multiple UPFs. The UL-CL may divert uplink user plane traffic to different UPFs.

The SMF 414 may allocate, manage, and/or assign an IP address to the wireless device 401. The SMF 414 may allocate, manage, and/or assign an IP address to the wireless device 401, for example, based on establishment of a PDU session. The SMF 414 may maintain an internal pool of IP addresses to be assigned. The SMF 414 may (e.g., if necessary) assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of wireless device 401 may be maintained (and the same anchor UPF may be used) as the wireless device moves within the network. In SSC mode 2, the IP address of wireless device 401 may be changed as the wireless device 401 moves within the network. For example, the old IP address and an old anchor UPF may be abandoned and a new IP address and a new anchor UPF may be established, for example, as the wireless device 401 moves within the network. In SSC mode 3, it may be possible to maintain an old IP address (e.g., similar to SSC mode 1) temporarily while establishing a new IP address (e.g., similar to SSC mode 2). Applications that may be sensitive to IP address changes may operate in accordance with SSC mode 1.

UPF selection may be controlled by the SMF 414. The SMF 414 may select the UPF 405 as the anchor for the PDU session and/or the UPF 407 as an intermediate UPF, for example, based on establishment and/or modification of a PDU session between the wireless device 401 and DN 408. Criteria for UPF selection may comprise path efficiency and/or speed (e.g., a data rate) between the AN 402 and the DN 408. Reliability, load status, location, slice support and/or other capabilities of candidate UPFs may also be considered for UPF selection.

FIG. 4B shows an example of a core network architecture. The core network architecture 400B of FIG. 4B may accommodate untrusted access. The wireless device 401, as shown in FIG. 4B, may communicate with (e.g., connect to) the DN 408 via the AN 402 and the UPF 405. The AN 402 and the UPF 405 may constitute/comprise/provide trusted (e.g., 3GPP) access to the DN 408. The wireless device 401 may access the DN 408 using an untrusted access network. The untrusted access network may comprise the AN 403 and/or a non-3GPP interworking function (N3IWF) 404.

The AN 403 may be a wireless local area network (WLAN) (e.g., operating in accordance with the IEEE 802.11 standard). The wireless device 401 may communicate with (e.g., connect to) the AN 403 via an interface Y1. The connection may be in a manner that is prescribed for the AN 403. The connection to the AN 403 may or may not involve authentication. The wireless device 401 may obtain/receive an IP address from the AN 403. The wireless device 401 may determine to connect to the core network 400B using untrusted access. The AN 403 may communicate with N3IWF 404 via a Y2 interface. After selecting untrusted access, the wireless device 401 may provide N3IWF 404 with sufficient information to select an AMF. The selected AMF may be, for example, the same AMF that is used by wireless device 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA). The UPF 405 may remain the anchor for a PDU session, for example, even as wireless device 401 shifts between trusted access and untrusted access.

FIG. 5 shows an example of a core network architecture. The core network architecture 500 of FIG. 5 may correspond to an example in which a wireless device 501 may be roaming. The wireless device 501 (e.g., in a roaming scenario) may be a subscriber of a first PLMN (e.g., a home PLMN, or HPLMN) but may attach to a second PLMN (e.g., a visited PLMN, or VPLMN). The core network architecture 500 may comprise a wireless device 501, an AN 502, a UPF 505, and/or a DN 508. The AN 502 and the UPF 505 may be associated with a VPLMN. The VPLMN may manage the AN 502 and/or the UPF 505 using core network elements associated with the VPLMN. The core network elements associated with the VPLMN may comprise an AMF 512, an SMF 514, a PCF 520, an NRF 530, an NEF 540, and/or an NSSF 570. An AF 599 may be adjacent the core network of the VPLMN.

The wireless device 501 may not be a subscriber of the VPLMN. The AMF 512 may authorize the wireless device 501 to access the network (e.g., the VPLMN), for example, based on roaming restrictions that may apply to wireless device 501. The core network of the VPLMN may interact with core network elements of an HPLMN of the wireless device 501 (e.g., a PCF 521, an NRF 531, an NEF 541, a UDM 551, and/or an AUSF 561), for example, to obtain network services provided by the VPLMN. The VPLMN and the HPLMN may communicate using an N32 interface connecting respective security edge protection proxies (SEPPs). The respective SEPPs may be a VSEPP 590 and/or an HSEPP 591.

The VSEPP 590 and/or the HSEPP 591 may communicate via an N32 interface (e.g., for defined purposes). The VSEPP 590 and the HSEPP 591 may communicate via an N32 interface while concealing information about each PLMN from the other. The SEPPs may apply roaming policies, for example, based on communications via the N32 interface. The PCF 520 and/or the PCF 521 may communicate via the SEPPs to exchange policy-related signaling. The NRF 530 and/or the NRF 531 may communicate via the SEPPs to enable service discovery of NFs in the respective PLMNs. The VPLMN and HPLMN may independently maintain the NEF 540 and the NEF 541. The NSSF 570 and/or the NSSF 571 may communicate via the SEPPs to coordinate slice selection for the wireless device 501. The HPLMN may handle all authentication and subscription related signaling. The VPLMN may authenticate the wireless device 501 and/or obtain subscription data of the wireless device 501 by accessing, via the SEPPs, the UDM 551 and the AUSF 561 of the HPLMN, for example, if the wireless device 501 registers and/or requests service via the VPLMN.

The core network architecture 500 may be referred to as a local breakout configuration, in which the wireless device 501 may access the DN 508 using one or more UPFs of the VPLMN (i.e., the UPF 505). Other configurations are possible. For example, in a home-routed configuration (not shown in FIG. 5), the wireless device 501 may access a DN using one or more UPFs of the HPLMN. In the home-routed configuration, an N9 interface may run parallel to the N32 interface, crossing the frontier between the VPLMN and the HPLMN, to carry user plane data. One or more SMFs of the respective PLMNs may communicate, via the N32 interface, to coordinate session management for the wireless device 501. The SMFs may control their respective UPFs on either side of the frontier.

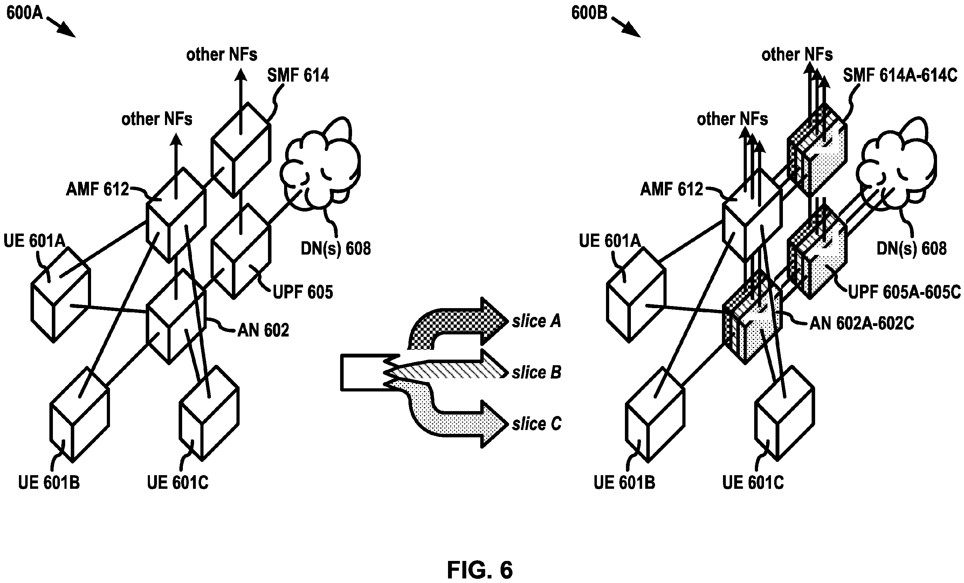

FIG. 6 shows an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A shows an un-sliced physical network corresponding to a single logical network. The network architecture 600A may comprise a user plane. Wireless devices 601A, 601B, 601C (collectively, wireless devices 601) may have a physical and/or a logical connection to a DN 608 via an AN 602 and a UPF 605 of the user plane. The network architecture 600A may comprise a control plane. An AMF 612 and an SMF 614, in the control plane, may control various aspects of the user plane.

The network architecture 600A may have a specific set of characteristics (e.g., relating to maximum bit rate, reliability, latency, bandwidth usage, power consumption, etc.). The set of characteristics may be affected by the nature/properties of the network elements (e.g., processing power, availability of free memory, proximity to other network elements, etc.) and/or the management thereof (e.g., optimization to maximize bit rate or reliability, reduce latency, reduce power, reduce bandwidth usage, etc.). The characteristics of the network architecture 600A may change over time. For example, by upgrading equipment and/or by modifying procedures to target a particular characteristic may change the characteristics of the network architecture 600A. At any given time, the network architecture 600A may have a single set of characteristics that may or may not be optimized for a particular use case. For example, wireless devices 601A, 601B, 601C may have different requirements, with the network architecture 600A being optimized for one of the three wireless devices.

The network architecture 600B shows an example of a sliced physical network divided into multiple logical networks. The physical network may be divided into three logical networks (e.g., slice A, slice B, and slice C). For example, the wireless device 601A may be served by AN 602A, UPF 605A, AMF 612, and SMF 614A. Wireless device 601B may be served by AN 602B, UPF 605B, AMF 612, and SMF 614B. Wireless device 601C may be served by AN 602C, UPF 605C, AMF 612, and SMF 614C. Although the respective wireless devices 601 may communicate with different network elements from a logical perspective, the network elements may be deployed by a network operator using the same physical network elements.

One or more network slices (e.g., each network slice) may be configured for providing network services with different sets of characteristics. For example, slice A may correspond to an enhanced mobile broadband (eMBB) service. Mobile broadband may refer to internet access by mobile users, commonly associated with smartphones. Slice B may correspond to ultra-reliable low-latency communication (URLLC), which may focus on reliability and speed. Relative to eMBB, URLLC may improve the feasibility of use cases such as autonomous driving and telesurgery. Slice C may correspond to massive machine type communication (mMTC), which may focus on lowpower services delivered to a large number of users. For example, slice C may be optimized for a dense network of battery-powered sensors that may provide small amounts of data at regular intervals. Many mMTC use cases may be prohibitively expensive if they operated using an eMBB or URLLC network.

A network slice serving a wireless device 601 may be updated (e.g., to provide better and/or more suitable services), for example, if service requirements for one of the wireless devices 601 changes. The set of network characteristics corresponding to eMBB, URLLC, and mMTC may be varied, such that differentiated species of eMBB, URLLC, and mMTC may be provided for a wireless device. Network operators may provide entirely new services, for example, based on/in response to customer demand.

A wireless device 601 (e.g., each of the wireless devices 601) may have/use (or be associated with) a corresponding network slice. A single slice may serve any number/quantity of wireless devices and a single wireless device may operate using any number/quantity of slices. The AN 602, the UPF 605 and the SMF 614 may be separated into three separate slices, and the AMF 612 may be unsliced. A network operator may deploy any architecture that selectively utilizes any mix of sliced and unsliced network elements, with different network elements divided into different numbers/quantities of slices. Although FIG. 6 shows three core network functions (e.g., the UPF 605, the AMF 612, the SMF 614), other core network functions (e.g., such as other core network functions not shown) may be sliced. A PLMN that supports multiple network slices may maintain a separate network repository function (NFR) for each slice, which may enable other NFs to discover network services associated with that slice.

Network slice selection may be controlled by an AMF, or alternatively, by a separate network slice selection function (NSSF). For example, a network operator may define/configure and implement distinct network slice instances (NSIs). Each NSI may be associated with single network slice selection assistance information (S-NSSAI). The S-NSSAI may comprise a particular slice/service type (SST) indicator (e.g., indicating eMBB, URLLC, mMTC, etc.). For example, a particular tracking area may be associated with one or more configured S-NSSAIs. wireless devices may identify one or more requested and/or subscribed S-NSSAIs (e.g., during registration). The network may indicate to the wireless device one or more allowed and/or rejected S-NSSAIs.

The S-NSSAI may comprise a slice differentiator (SD) to distinguish between different tenants of a particular slice and/or service type. For example, a tenant may be a customer (e.g., a vehicle manufacture, a service provider, etc.) of a network operator that obtains (e.g., purchases) guaranteed network resources and/or specific policies for servicing its subscribers. The network operator may configure different slices and/or slice types, and use the SD to determine which tenant is associated with a particular slice.

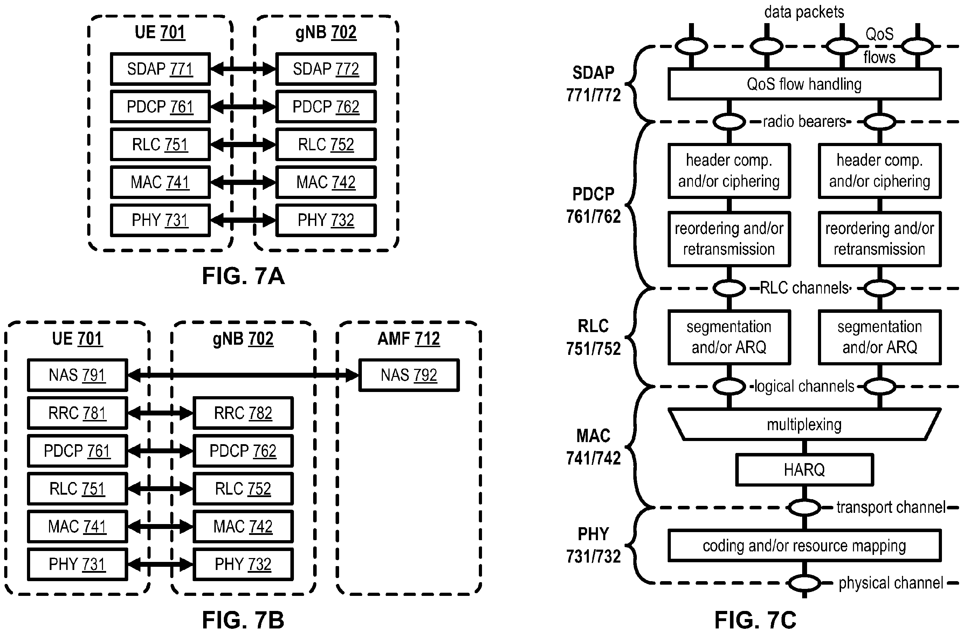

FIG. 7A shows an example UP protocol stack. FIG. 7B shows an example CP protocol stack. FIG. 7C shows example services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a PHY layer. PHY layer may correspond to physical infrastructure used for transfer of signals (e.g., cables, fiber optics, and/or radio frequency transceivers). Layer 1 (e.g., in NR protocols) may comprise a PHY layer. Layer 2 may correspond to a data link layer. Layer 2 may correspond to/be associated with packaging of data (into, e.g., data frames) for transfer, between nodes of the network (e.g., using the physical infrastructure of layer 1). Layer 2 (e.g., in NR protocols) may comprise a MAC layer, an RLC layer, a PDCP layer, and an SDAP layer.

Layer 3 may correspond to a network layer. Layer 3 may be associated with routing of the data which has been packaged in layer 2. Layer 3 may handle prioritization of data and traffic avoidance. Layer 3 (e.g., in NR protocols) may comprise an RRC layer and a NAS layer. Layers 4 through 7 may correspond to a transport layer, a session layer, a presentation layer, and an application layer. The application layer may interact with an end user to provide data associated with an application. An end user, implementing the application, may generate data associated with the application and initiate sending of that information to a targeted data network (e.g., the Internet, an application server, etc.). Starting at the application layer, each layer in the OSI model may manipulate and/or repackage the information and/or deliver it to a lower layer. At the lowest layer, the manipulated and/or repackaged information may be exchanged via physical infrastructure (e.g., electrically, optically, and/or electromagnetically). The information, approaching/received at the targeted data network, may be unpackaged and provided to higher layers, for example, until it reaches the application layer in a form that is usable by the targeted data network (e.g., the same form in which it was provided by the end user). The data network may perform this procedure, in reverse, for responding to the end user.

FIG. 7A shows an example UP protocol stack. The UP protocol stack may be an NR protocol stack for a Uu interface between a wireless device 701 and a base station 702. In layer 1 of the UP protocol stack, the wireless device 701 may implement a PHY layer (e.g., PHY 731) and the base station 702 may implement a PHY layer (e.g., PHY 732). In layer 2 of the UP protocol stack, the wireless device 701 may implement a MAC layer (e.g., MAC 741), an RLC layer (e.g., RLC 751), a PDCP layer (e.g., PDCP 761), and an SDAP layer (e.g., SDAP 771). The base station 702 may implement a MAC layer (e.g., MAC 742), an RLC layer (e.g., RLC 752), a PDCP layer (e.g., PDCP 762), and an SDAP layer (e.g., SDAP 772).

FIG. 7B shows a CP protocol stack. The CP protocol stack may be an NR protocol stack for the Uu interface between the wireless device 701 and the base station 702 and/or an N1 interface between the wireless device 701 and an AMF 712. In layer 1 of the CP protocol stack, the wireless device 701 may implement the PHY 731 and the base station 702 may implement the PHY 732. In layer 2 of the CP protocol stack, the wireless device 701 may implement the MAC 741, the RLC 751, the PDCP 761, an RRC layer (e.g., RRC 781), and a NAS layer (e.g., NAS 791). The base station 702 may implement the MAC 742, the RLC 752, the PDCP 762, and an RRC layer (e.g., RRC 782). The AMF 712 may implement a NAS layer (e.g., NAS 792).

The NAS (e.g., NAS 791 and NAS 792) may be concerned with/correspond to the non-access stratum. The non-access stratum may comprise communication between the wireless device 701 and the core network (e.g., the AMF 712). Lower layers may be concerned with/correspond to the access stratum. The access stratum may comprise communication between the wireless device 701 and the base station 702. Messages sent between the wireless device 701 and the core network may be referred to as NAS messages. A NAS message may be relayed by the base station 702 Content of the NAS message (e.g., information elements of the NAS message) may not be visible to the base station 702.

FIG. 7C shows an example of services provided between protocol layers (e.g., of the NR user plane protocol stack shown in FIG. 7A). The wireless device 701 may receive services through a PDU session. The PDU session may be a logical connection between the wireless device 701 and a DN. The wireless device 701 and the DN may exchange data packets associated with the PDU session. The PDU session may comprise one or more QoS flows. The SDAP 771 and/or the SDAP 772 may perform mapping and/or demapping between the one or more QoS flows of the PDU session and one or more radio bearers (e.g., data radio bearers). The mapping between the QoS flows and the data radio bearers may be determined in the SDAP 772 by the base station 702. The wireless device 701 may be notified of the mapping (e.g., based on control signaling and/or reflective mapping). The SDAP 772 of the base station 220 may mark downlink packets with a QFI and/or deliver the downlink packets to the wireless device 701 (e.g., for reflective mapping). The wireless device 701 may determine the mapping based on the QFI of the downlink packets.

The PDCP 761 and the PDCP 762 may perform header compression and/or decompression. Header compression may reduce the amount of data transmitted over the physical layer. The PDCP 761 and the PDCP 762 may perform ciphering and/or deciphering. Ciphering may reduce unauthorized decoding of data sent/transmitted over the physical layer (e.g., intercepted on an air interface), and/or may protect data integrity (e.g., to ensure control messages originate from intended sources). The PDCP 761 and/or the PDCP 762 may perform retransmissions of undelivered packets, in-sequence delivery and/or reordering of packets, duplication of packets, and/or identification and removal of duplicate packets. The PDCP 761 and/or the PDCP 762 may perform mapping between a split radio bearer and RLC channels, for example, in a dual connectivity scenario.

The RLC 751 and the RLC 752 may perform segmentation and retransmission through automatic repeat request (ARQ). The RLC 751 and the RLC 752 may perform removal of duplicate data units received from the MAC 741 and the MAC 742, respectively. The RLC 751 and the RLC 752 may provide RLC channels as a service to the PDCP 761 and the PDCP 762, respectively.

The MAC 741 and/or the MAC 742 may perform multiplexing and/or demultiplexing of logical channels. The MAC 741 and/or the MAC 742 may map logical channels to transport channels. The wireless device 701 may (e.g., in MAC 741) multiplex data units of one or more logical channels into a transport block. The wireless device 701 may send/transmit the transport block to the base station 702 using PHY 731. The base station 702 may receive the transport block using the PHY 732. The base station 702 may demultiplex data units of the transport blocks back into logical channels. The MAC 741 and/or the MAC 742 may perform error correction through hybrid automatic repeat request (HARQ), logical channel prioritization, and/or padding.

The PHY 731 and/or the PHY 732 may perform mapping of transport channels to physical channels. The PHY 731 and/or the PHY 732 may perform digital and analog signal processing functions (e.g., coding/decoding and modulation/demodulation) for sending and receiving information (e.g., transmission via an air interface). The PHY 731 and/or the PHY 732 may perform multi-antenna mapping.

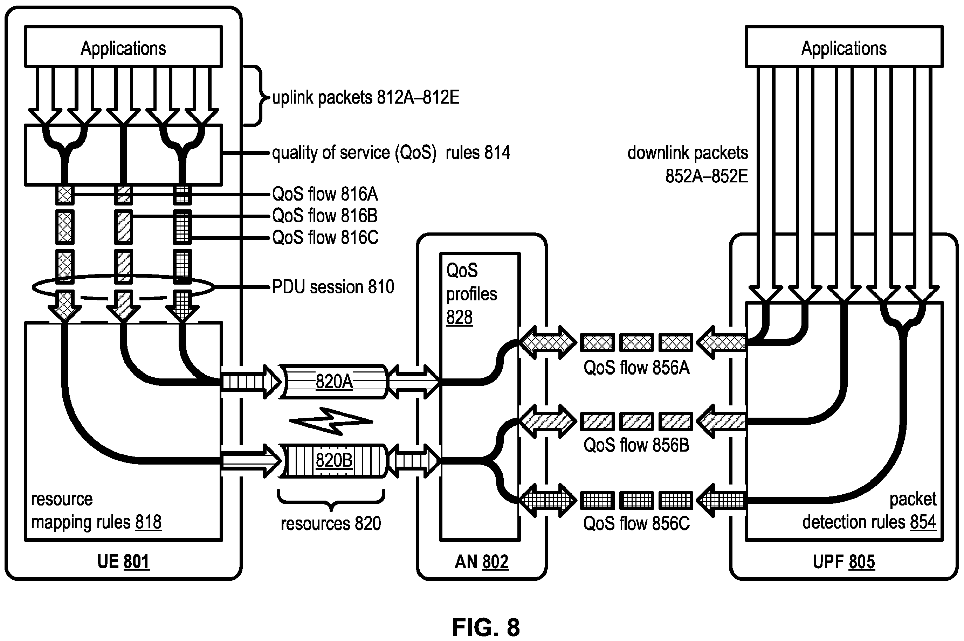

FIG. 8 shows an example of a QoS model. The QoS model may be for differentiated data exchange. The QoS model may comprise a wireless device 801, an AN 802, and/or a UPF 805. The QoS model may facilitate prioritization of PDUs (which may also be referred to as packets). Higher-priority packets may be exchanged faster and/or more reliably than lower-priority packets. The network may devote more resources to exchange of high QoS packets (e.g., high priority packets).

A PDU session 810 may be established between the wireless device 801 and the UPF 805. The PDU session 810 may be a logical connection enabling the wireless device 801 to exchange data with a particular data network (e.g., the Internet). The wireless device 801 may request establishment of the PDU session 810. The wireless device 801 may indicate/identify the targeted data network based on its data network name (DNN), for example, at the time that the PDU session 810 is established. The PDU session 810 may be managed by an SMF (not shown). The SMF may select the UPF 805 (and/or optionally, one or more other UPFs, not shown), for example, to facilitate exchange of data associated with the PDU session 810, between the wireless device 801 and the data network.

One or more applications 808 associated with wireless device 801 may generate uplink packets 812A-812E associated with the PDU session 810. The wireless device 801 may apply QoS rules 814 to the uplink packets 812A-812E in accordance with a QoS model. The QoS rules 814 may be associated with the PDU session 810. The QoS rules 814 may be determined by and/or provided to the wireless device 801, for example, based on establishment and/or modification of the PDU session 810 (e.g., if/when the PDU session 810 is established and/or modified). The wireless device 801, based on the QoS rules 814, may classify the uplink packets 812A-812E, map each of the uplink packets 812A-812E to a QoS flow, and/or mark the uplink packets 812A-812E with a QFI. A packet may be sent through the network. A packet may mix with other packets from other wireless devices (e.g., having potentially different priorities). The QFI may indicate how the packet should be handled in accordance with the QoS model. As shown in the example of FIG. 8, uplink packets 812A, 812B may be mapped to a QoS flow 816A, an uplink packet 812C may be mapped to a QoS flow 816B, and the remaining packets may be mapped to QoS flow 816C.

The QoS flows may be the finest granularity of QoS differentiation in a PDU session. In FIG. 8, three QoS flows 816A-816C are shown. A different quantity/number of QoS flows may be present/used (e.g., 1, 2, 4, 5, or any other number/quantity). One or more QoS flows may be associated with a guaranteed bit rate (e.g., guaranteed bit rate (GBR) QoS flows). One or more QoS flows may have bit rates that are not guaranteed (non-GBR QoS flows). QoS flows may be subject to per-wireless device and/or per-session aggregate bit rates. A QoS flow of the QoS flows may be a default QoS flow. QoS flows may have different priorities. For example, the QoS flow 816A may have a higher priority than the QoS flow 816B, which may have a higher priority than the QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may be subject to per-wireless device and/or per-session aggregate bit rates.

The wireless device 801 may apply resource mapping rules 818 to the QoS flows 816A-816C for operating within the QoS model. The air interface between wireless device 801 and/or the AN 802 may be associated with resources 820. The QoS flow 816A may be mapped to resource 820A, and the QoS flows 816B, 816C may be mapped to resource 820B. The resource mapping rules 818 may be provided by the AN 802. The resource mapping rules 818 may designate more resources for relatively high priority QoS flows for meeting QoS requirements. A high priority QoS flow (e.g., the QoS flow 816A) may, based on the resources, be more likely to obtain the high flow bit rate, low packet delay budget, and/or other satisfy other characteristics associated with QoS rules 814. The resources 820 may comprise radio bearers. The radio bearers (e.g., data radio bearers) may be established between the wireless device 801 and the AN 802. The radio bearers in 5G, between the wireless device 801 and the AN 802, may be distinct from bearers in LTE (e.g., evolved packet system (EPS) bearers between a wireless device and a packet data network gateway (PGW), S1 bearers between an eNB and a serving gateway (SGW), and/or an S5/S8 bearer between an SGW and a PGW).

A packet associated with a particular QoS flow may be received at the AN 802 via the resource 820A or the resource 820B. The AN 802 may separate packets into respective QoS flows 856A-856C based on QoS profiles 828. The QoS profiles 828 may be received from an SMF. A QoS profile (e.g., each QoS profile) may correspond to a QFI (e.g., the QFI marked on the uplink packets 812A-812E). A QoS profile (e.g., each QoS profile) may comprise QoS parameters. The QoS parameters may comprise/indicate one or both of 5G QoS identifier (5QI) and/or an allocation and retention priority (ARP). The QoS profile for non-GBR QoS flows may comprise/indicate other/additional QoS parameters (e.g., a reflective QoS attribute (RQA)). The QoS profile for GBR QoS flows may further comprise/indicate additional QoS parameters (e.g., a GFBR, an MFBR, and/or a maximum packet loss rate). The 5QI may be a standardized 5QI having one-to-one mapping to a standardized combination of 5G QoS characteristics. The 5QI may be a dynamically assigned 5QI for which the standardized 5QI values may not be defined. The 5QI may represent 5G QoS characteristics. The 5QI may comprise/indicate one or more of a resource type, a default priority level, a packet delay budget (PDB), a packet error rate (PER), a maximum data burst volume, and/or an averaging window. The resource type may indicate a non-GBR QoS flow, a GBR QoS flow, and/or a delay-critical GBR QoS flow. The averaging window may represent a duration over which the GFBR and/or MFBR may be calculated/determined. The ARP may be a priority level comprising pre-emption capability and a pre-emption vulnerability. The AN 802 may apply admission control for the QoS flows (e.g., if resource limitations are determined), for example, based on the ARP.

The AN 802 may select/determine one or more N3 tunnels for transmission of the QoS flows 856A-856C. The packets (e.g., the uplink packets 812A-812E) may be sent to the UPF 805 (e.g., towards a DN) via the selected one or more N3 tunnels. The UPF 805 may verify that the QFIs of the uplink packets 812A-812E are aligned with the QoS rules 814 provided to the wireless device 801. The UPF 805 may measure, count packets, and/or provide packet metrics to one or more other entities in the network (e.g., a NF such as a PCF).

FIG. 8 shows a process that may comprise downlink transmissions. One or more applications may generate downlink packets 852A-852E. The UPF 805 may receive the downlink packets 852A-852E from one or more DNs and/or one or more other UPFs. The UPF 805 may apply PDRs 854 to downlink the packets 852A-852E, for example, based on the QoS model. The UPF 805 may map, based on the PDRs 854, the packets 852A-852E into QoS flows. As shown in FIG. 8, downlink packets 852A, 852B may be mapped to a QoS flow 856A, downlink packet 852C may be mapped to a QoS flow 856B, and/or the remaining packets may be mapped to a QoS flow 856C.

The QoS flows 856A-856C may be sent to the AN 802. The AN 802 may apply resource mapping rules to the QoS flows 856A-856C. The QoS flow 856A may be mapped to the resource 820A. The QoS flows 856B, 856C may be mapped to the resource 820B. The resource mapping rules may designate more resources to high priority QoS flows in order to meet QoS requirements.

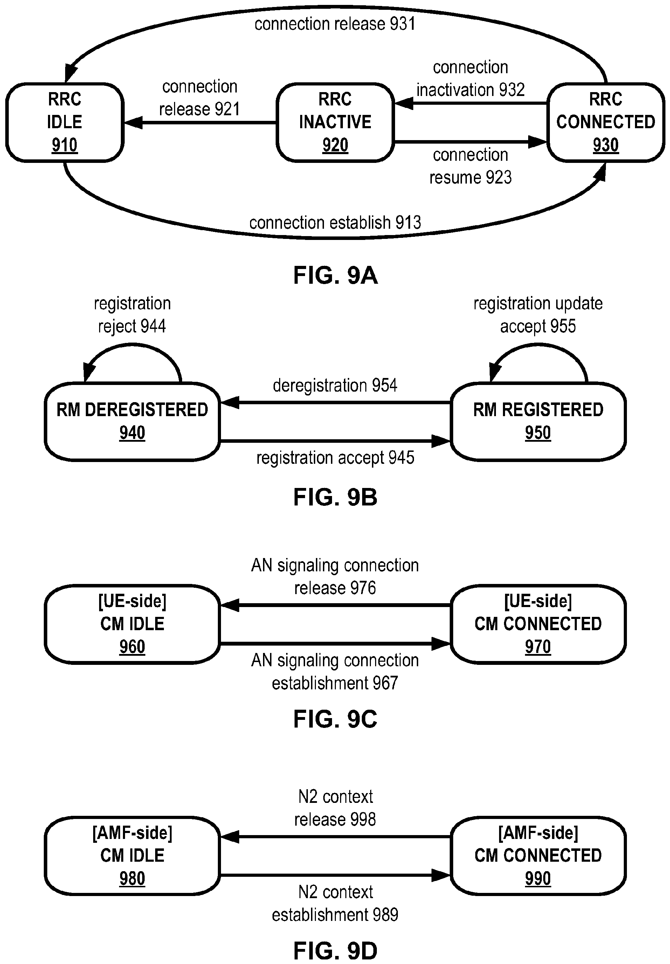

FIGS. 9A- 9D show example states and state transitions of a wireless device. The wireless device, at any given time, may have (or be associated with) one or more of an RRC state, a registration management (RM) state, and/or a connection management (CM) state.

FIG. 9A shows RRC state transitions of a wireless device. The wireless device may be in one of three RRC states: RRC idle 910 (e.g., RRC_IDLE), RRC inactive 920 (e.g., RRC INACTIVE), or RRC connected 930 (e.g., RRC_CONNECTED). The wireless device may implement/apply/use different RAN-related control plane procedures, for example, depending on the RRC state of the wireless device. Other elements of the network (e.g., a base station) may track RRC state(s) of one or more wireless devices and/or implement/apply/use RAN-related control plane procedures appropriate to an RRC state of each wireless device.

The wireless device may exchange data with a network (e.g., a base station) in an RRC connected state (e.g., RRC connected 930). The parameters necessary for exchange of data may be established and/or may be known to both the wireless device and the network. The parameters may be referred to (and/or may be included in) an RRC context of the wireless device (e.g., which may be referred to as a wireless device context). The parameters may comprise, for example, one or more access stratum (AS) contexts, one or more radio link configuration parameters, bearer configuration information (e.g., relating to a data radio bearer, signaling radio bearer, logical channel, QoS flow, and/or PDU session), security information, and/or PHY layer, MAC layer, RLC layer, PDCP layer, and/or SDAP layer configuration information. The base station with which the wireless device may be connected may store the RRC context of the wireless device.

Mobility of the wireless device, in the RRC connected state, may be managed by the access network. The wireless device may manage mobility, for example, if the wireless device is in an RRC idle state (e.g., the RRC idle 910) and/or an RRC inactive state (e.g., the RRC inactive 920). The wireless device may manage mobility, for example, by measuring signal levels (e.g., reference signal levels) of signals from a serving cell and neighboring cells, and/or by reporting measurements to the base station currently serving the wireless device. The network may initiate handover, for example, based on the reported measurements. The RRC state may transition from the RRC connected state to the RRC idle state via a connection release procedure 930. The RRC state may transition from the RRC connected state to the RRC inactive state via a connection inactivation procedure 932.

An RRC context may not be established for the wireless device. For example, this may be during the RRC idle state. During the RRC idle state (e.g., the RRC idle 910), an RRC context may not be established for the wireless device. During the RRC idle state (e.g., the RRC idle 910), the wireless device may not have an RRC connection with the base station. During the RRC idle state (e.g., the RRC idle 910), the wireless device may be in a sleep state for the majority of the time (e.g., to conserve battery power). The wireless device may wake up periodically (e.g., each discontinuous reception (DRX) cycle) to monitor for paging messages (e.g., paging messages set from the AN). Mobility of the wireless device may be managed by the wireless device via a procedure of a cell reselection. The RRC state may transition from the RRC idle state (e.g., the RRC idle 910) to the RRC connected state (e.g., the RRC connected 930) via a connection establishment procedure 913, which may involve a random-access procedure.

A previously established RRC context may be maintained for the wireless device. For example, this may be during the RRC inactive state. During the RRC inactive state (e.g., the RRC inactive 920), the RRC context previously established may be maintained in the wireless device and the base station. The maintenance of the RRC context may enable/allow a fast transition to the RRC connected state (e.g., the RRC connected 930) with reduced signaling overhead as compared to the transition from the RRC idle state (e.g., the RRC idle 910) to the RRC connected state (e.g., the RRC connected 930). The RRC state may transition from the RRC inactive state (e.g., the RRC inactive 920) to the RRC connected state (e.g., the RRC connected 930) via a connection resume procedure 923. The RRC state may transition from the RRC inactive state (e.g., the RRC inactive 920) to the RRC idle state (e.g., the RRC idle 910) via a connection release procedure 921 that may be the same as or similar to connection release procedure 931.

An RRC state may be associated with a mobility management mechanism. During the RRC idle state (e.g., RRC idle 910) and the RRC inactive state (e.g., the RRC inactive 920), mobility may be managed/controlled by the wireless device via a cell reselection. The purpose of mobility management during the RRC idle state (e.g., the RRC idle 910) or during the RRC inactive state (e.g., the RRC inactive 920) may be to enable/allow the network to be able to notify the wireless device of an event via a paging message without having to broadcast the paging message over the entire mobile communications network. The mobility management mechanism used during the RRC idle state (e.g., the RRC idle 910) and/or during the RRC inactive state (e.g., the RRC inactive 920) may enable/allow the network to track the wireless device on a cell-group level, for example, so that the paging message may be broadcast over the cells of the cell group that the wireless device currently resides within (e.g., instead of sending the paging message over the entire mobile communication network). The mobility management mechanisms may be based on different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN may send to the wireless device a list of TAIs associated with a wireless device registration area (e.g., a wireless device registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 920), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 920).

FIG. 9B shows example registration management (RM) state transitions of a wireless device. The states may be RM deregistered 940, (e.g., an RM deregistered state, RM-DEREGISTERED) and RM registered 950 (e.g., an RM deregistered state, RM-REGISTERED).

The wireless device (e.g., in RM deregistered state) may not be registered with the network, and/or the wireless device may not be reachable by the network. The wireless device may perform an initial registration, for example, in order to be reachable by the network. The wireless device may register with an AMF of the network. The wireless device may remain in the RM deregistered state, for example, if registration is rejected (e.g., via a registration reject procedure 944). The wireless device may transition to the RM registered state, for example, if the registration is accepted (e.g., via a registration accept procedure 945). The network may store, keep, and/or maintain a wireless device context for the wireless device, for example, if (e.g., while) the wireless device is in RM registered state. The wireless device context corresponding to network registration (e.g., maintained by the core network) may be different from the RRC context corresponding to RRC state (e.g., maintained by an access network or an element thereof, such as a base station). The wireless device context may comprise a wireless device indicator/identifier and a record of information relating to the wireless device. The information relating to the wireless device may comprise one or more of wireless device capability information, policy information for access and mobility management of the wireless device, lists of allowed or established slices or PDU sessions, and/or a registration area of the wireless device (i.e., a list of tracking areas covering the geographical area where the wireless device is likely to be found).

The network may store the wireless device context of the wireless device, for example, if (e.g., while) the wireless device is in an RM registered state. The network may (e.g., if necessary) use the wireless device context to reach/communicate the wireless device, for example, if (e.g., while) the wireless device is in an RM registered state. Some services may not be provided by the network unless the wireless device is registered. The wireless device may update its wireless device context while remaining in the RM registered state (e.g., via a registration update accept procedure 955). The wireless device may provide a tracking area indicator/identifier to the network, for example, if the wireless device leaves one tracking area and enters another tracking area. The network may deregister the wireless device, or the wireless device may deregister itself (e.g., via a deregistration procedure 954). The network may automatically deregister the wireless device if the wireless device is inactive for a certain amount of time. The wireless device may transition to the RM deregistered state, for example, based on the deregistration.

FIG. 9C shows example connection management (CM) state transitions of a wireless device. The example CM state transitions of the wireless device as shown in FIG. 9C are from a perspective of the wireless device. The wireless device may be in CM idle 960 (e.g., CM idle state, CM-IDLE) or CM connected 970 (e.g., CM connected state, CM-CONNECTED).

The wireless device may not have a NAS signaling connection with the network, for example, if the wireless device is in a CM idle state. The wireless device may not communicate with core network functions, for example, based on not having the NAS signaling connection. The wireless device may transition to a CM connected state by establishing an AN signaling connection (e.g., via an AN signaling connection establishment procedure 967). The transition may be initiated by sending an initial NAS message. The initial NAS message may be a registration request (e.g., if the wireless device is in an RM deregistered state) or a service request (e.g., if the wireless device is in an RM registered state). The wireless device may initiate the AN signaling connection establishment by sending a service request and/or the network may send a page (e.g., triggering the wireless device to send the service request), for example, If the wireless device is in an RM registered state.

The wireless device may communicate with core network functions using NAS signaling, for example, if the wireless device is in a CM connected state. For example, the wireless device may exchange (e.g., send and/or receive) NAS signaling with an AMF for registration management purposes, service request procedures, and/or authentication procedures. The wireless device may exchange NAS signaling, with an SMF, to establish and/or modify a PDU session. The network may disconnect the wireless device, or the wireless device may disconnect itself (e.g., via an AN signaling connection release procedure 976). The wireless device may transition to the CM idle state, for example, if the wireless device transitions to the RM deregistered state. The network may deactivate a user plane connection of a PDU session of the wireless device, for example, based on the wireless device transitioning to the CM idle state.

FIG. 9D shows example CM state transitions of the wireless device. The example CM state transitions of the wireless device as shown in FIG. 9D may be from a network perspective (e.g., an AMF perspective). The CM state of the wireless device, as tracked by the AMF, may be CM idle 980 (e.g., CM idle state, CM-IDLE) or CM connected 990 (e.g., CM connected state, CM-CONNECTED). The AMF many establish an N2 context of the wireless device (e.g., via an N2 context establishment procedure 989), for example, based on the wireless device transitioning from CM idle 980 to CM connected 990. The AMF may release the N2 context of the wireless device (e.g., via an N2 context release 998 procedure), for example, based on the wireless device transitioning from CM connected 990 to CM idle 980.

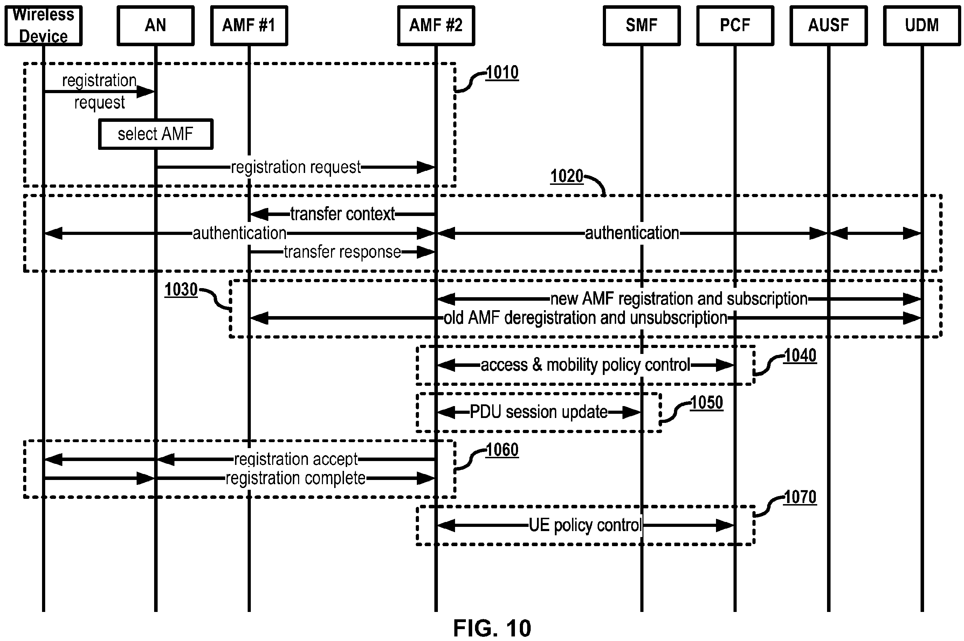

FIG. 10, FIG. 11, and FIG. 12 show example procedures for registering, service request, and PDU session establishment of a wireless device. FIG. 10 shows an example registration procedure for a wireless device. The wireless device 1002 may transition from an RM deregistered state (e.g., RM deregistered 940) to an RM registered state (e.g., RM registered 950), for example, based on the registration procedure.

Registration may be initiated by a wireless device 1002 for obtaining authorization to receive services, enabling mobility tracking, enabling reachability, and/or any other purpose. The wireless device 1002 may perform an initial registration (e.g., as a first step toward connecting to the network). For example, the wireless device 1002 may perform an initial registration based on the wireless device being powered on (e.g., if the wireless device is powered on), based on an airplane mode being turned off (e.g., if an airplane mode is turned off), and/or based on one or more other conditions and/or events. Registration may be performed periodically which may keep the network informed of the wireless device's presence (e.g., while the wireless device 1002 is in a CM idle state). Registration may be performed based on (e.g., in response to) a change in wireless device capability and/or registration area. Deregistration (not shown in FIG. 10) may be performed to stop network access.

At step 1010, the wireless device 1002 may send/transmit a registration request to an AN 1004. For example, the wireless device 1002 may have moved from a coverage area of a previous AMF (e.g., AMF 1006) into a coverage area of a new AMF (e.g., AMF 1008). The registration request may be/comprise a NAS message. The registration request may comprise a wireless device identifier. The AN 1004 may determine/select an AMF for registration of the wireless device. The AN 1004 may select a default AMF, or may determine/select an AMF that is already mapped to the wireless device 1002 (e.g., a previous AMF). The NAS registration request may comprise a network slice identifier. The AN 1004 may determine/select an AMF based on the requested slice. The AN 1004 may send the registration request to the selected AMF, for example, based on determination of the selected AMF. The selected AMF (e.g., AMF 1008) may receive the registration request.

At step 1020, the AMF that receives the registration request (e.g., AMF 1008) may perform a context transfer. The context may be a wireless device context (e.g., an RRC context for the wireless device). The AMF 1008 may send, to the AMF 1006, a message (e.g., an Namf_Communication_UEContextTransfer message) requesting a context of the wireless device. The message may comprise the wireless device indicator/identifier. The AMF 1006 may send, to the AMF 1008, a message (e.g., an Namf_Communication_UEContextTransfer message) that comprises the requested wireless device context. The AMF 1008 may coordinate authentication of the wireless device 1002, for example, based on receiving the wireless device context. The AMF 1008 may send, to the AMF 1006 and based on completion of authentication, a message (e.g., an Namf_Communication_UEContextTransfer Response message) indicating that the wireless device context transfer is complete.

The authentication may involve participation of one or more of the wireless device 1002, an AUSF 1016, a UDM 1018 and/or a UDR (not shown). The AMF 1008 may request that the AUSF 1016 authenticate the wireless device 1002. The AUSF may execute authentication of the wireless device 1002 (e.g., based on the request). The AUSF 1016 may get authentication data from the UDM 1018. The AUSF 1016 may send, to the AMF 1008, a subscription permanent identifier (SUPI), for example, based on the authentication being successful. The AUSF 1016 may provide an intermediate key to the AMF 1008. The intermediate key may be used to derive an access-specific security key for the wireless device 1002. The access-specific security key may enable the AMF 1008 to perform security context management (SCM). The AUSF 1016 may obtain subscription data from the UDM 1018. The subscription data may be based on information obtained from the UDM 1018 (and/or the UDR). The subscription data may comprise subscription identifiers/indicators, security credentials, access and mobility related subscription data, and/or session related data.

At step 1030, the AMF 1008 may register and/or subscribe to the UDM 1018. The AMF 1008 may perform registration using a wireless device context management service of the UDM 1018 (e.g., Nudm_UECM). The AMF 1008 may obtain subscription information of the wireless device 1002 using a subscriber data management service of the UDM 1018 (e.g., Nudm_SDM). The AMF 1008 may further request that the UDM 1018 notify/send a notification to the AMF 1008 if the subscription information of the wireless device 1002 changes. The AMF 1006 may deregister and unsubscribe, for example, based on the AMF 1008 registering and/or subscribing. The AMF 1006 may no longer need to perform mobility management of the wireless device 1006, for example, based on (e.g., after) deregistering.

At step 1040, the AMF 1008 may retrieve access and mobility (AM) policies from the PCF 1014. The AMF 1008 may provide subscription data of the wireless device 1002 to the PCF 1014. The PCF 1014 may determine access and mobility policies for the wireless device 1002, for example, based on the subscription data, network operator data, current network conditions, and/or other suitable information. For example, the owner/user of a first wireless device may purchase a higher level of service than the owner/user of a second wireless device. The PCF 1014 may provide the rules associated with the different levels of service. The network may apply different policies which facilitate different levels of service, for example, based on the subscription data of the respective wireless devices.

Access and mobility policies may relate to (e.g., may be based on and/or comprise) service area restrictions, radio access technology (RAT) frequency selection priority (RFSP), authorization and prioritization of access type (e.g., LTE versus NR), and/or selection of non-3GPP access (e.g., access network discovery and selection policy (ANDSP)). The service area restrictions may comprise list(s) of tracking areas where the wireless device is allowed to be served (and/or forbidden from being served). The access and mobility policies may comprise a wireless device (e.g., UE) route selection policy (URSP) that may influence routing to an established PDU session and/or a new PDU session. Different policies may be obtained and/or be enforced based on subscription data of the wireless device, location of the wireless device (e.g., location of the AN and/or AMF), and/or other suitable factors.

At step 1050, the AMF 1008 may update a context of a PDU session. The AMF 1008 may coordinate/communicate with an SMF (e.g., SMF 1012) to activate a user plane connection associated with an existing PDU session, for example, if the wireless device has/is associated with the existing PDU session. The SMF 1012 may update and/or release a session management context of the PDU session (e.g., Nsmf_ PDUSession UpdateSMContext, Nsmf_PDUSession_ReleaseSMContext).

At step 1060, the AMF 1008 may send a registration accept message to the AN 1004. The AN 1004 may forward the registration accept message to the wireless device 1002. The registration accept message may comprise a new wireless device indicator/identifier and/or a new configured slice indicator/identifier. The wireless device 1002 may send/transmit a registration complete message to the AN 1004. The AN 1004 may forward the registration complete message to the AMF 1008. The registration complete message may acknowledge receipt of the new wireless device identifier and/or new configured slice identifier.

At step 1070, the AMF 1008 may receive/obtain wireless device policy control information from the PCF 1014. The PCF 1014 may send/provide an ANDSP (e.g., to facilitate non-3GPP access). The PCF 1014 may provide URSP to facilitate mapping of particular data traffic to particular PDU session connectivity parameters. The URSP may indicate that data traffic associated with a particular application should be mapped to a particular SSC mode, network slice, PDU session type, and/or preferred access type (e.g., 3GPP or non-3GPP).

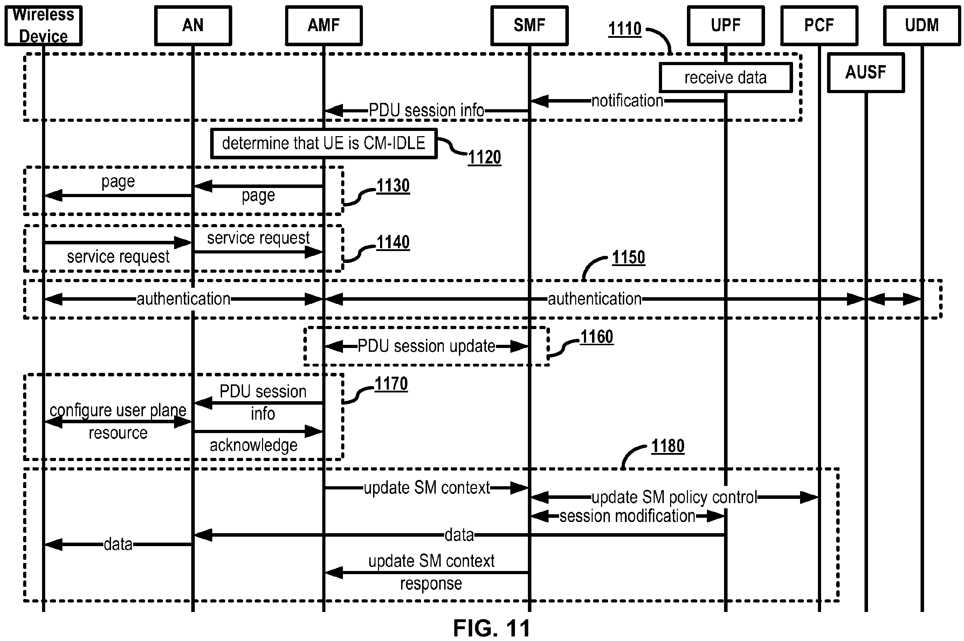

FIG. 11 shows an example service request procedure for a wireless device. The service request procedure may be a network-triggered service request procedure for a wireless device in a CM idle state. Other service request procedures (e.g., a wireless device-triggered service request procedure) may be performed in a manner similar to that described with reference to FIG. 11.

At step 1110, a UPF 1112 may receive data. The data may be downlink data for transmission to a wireless device (e.g., wireless device 1102). The data may be associated with an existing PDU session between the wireless device 1102 and a DN. The data may be received from a DN and/or another UPF. The UPF 1112 may buffer the received data. The UPF 1112 may notify an SMF (e.g., SMF 1108) of the received data, for example, based on (e.g., in response to) receiving the data. The identity of the SMF to be notified may be determined based on the received data. The notification may be an N4 session report. The notification may indicate that the UPF 1112 has received data associated with the wireless device 1102 and/or a particular PDU session associated with the wireless device 1102. The SMF 1108 may send PDU session information to an AMF 1106, for example, based on (e.g., in response to) receiving the notification. The PDU session information may be sent in an N1N2 message transfer for forwarding to an AN 1104. The PDU session information may comprise UPF tunnel endpoint information and/or QoS information.

At step 1120, the AMF 1106 may determine that the wireless device 1102 is in a CM idle state. The determining may be based on (e.g., in response to) the receiving of the PDU session information. The service request procedure may proceed to steps 1130 and 1140, for example, based on the determination that the wireless device is in CM idle state. The steps 1130 and 1140 may be skipped, and the service request procedure may proceed directly to 1150, for example, based on determining that the wireless device is not in CM idle state (e.g., the wireless device is in CM connected state).

At step 1130, the AMF 1106 may page the wireless device 1102. The paging at step 1130 may be performed based on the wireless device being in a CM idle state. The AMF 1106 may send a page to the AN 1104 to perform the paging. The page may be referred to as a paging or a paging message. The page may be an N2 request message. The AN 1104 may be one of a plurality of ANs in a RAN notification area of the wireless device 1102. The AN may send a page to the wireless device 1102. The wireless device 1102 may be in a coverage area of the AN 1104 and may receive the page.

At step 1140, the wireless device 1102 may request service. The wireless device 1102 may send/transmit a service request to the AMF 1106 via the AN 1104. The wireless device 1102 may request service at step 1140, for example, based on (e.g., in response to) receiving the paging at step 1130. The wireless device 1102 may receive the page and request service based on the service request procedure being a network-triggered service request procedure. The wireless device 1102 may commence a wireless device-triggered service request procedure in some scenarios (e.g., if uplink data becomes available at the wireless device). The wireless device-triggered service request procedure may commence starting at step 1140 (e.g., one or more of steps 1110 and 1120 may be skipped).

At step 1150, the network may authenticate the wireless device 1102. Authentication may require participation of the wireless device 1102, an AUSF 1116, and/or a UDM 1118 (e.g., as described herein). The authentication at step 1150 may be skipped, for example, in one or more scenarios (e.g., if the wireless device 1102 has recently been authenticated).

At step 1160, the AMF 1106 and the SMF 1108 may perform a PDU session update. The PDU session update may comprise the SMF 1108 providing, to the AMF 1106, with one or more UPF tunnel endpoint identifiers. The SMF 1108 may coordinate with one or more other SMFs and/or one or more other UPFs to set up a user plane.

At step 1170, the AMF 1106 may send PDU session information to the AN 1104. The PDU session information may be included in an N2 request message. The AN 1104 may configure a user plane resource for the wireless device 1102, for example, based on the PDU session information. The AN 1104 may perform an RRC reconfiguration of the wireless device 1102, for example, to configure the user plane resource. The AN 1104 may acknowledge the AMF 1106 (e.g., send an acknowledgment message to the AMF 1106 indicating) that the PDU session information has been received. The AN 1104 may notify the AMF 1106 (e.g., via the acknowledgment message) that the user plane resource has been configured, and/or provide information relating to the user plane resource configuration.

The wireless device 1102 may receive (e.g., at step 1170), for a wireless device-triggered service procedure, a NAS service accept message from the AMF 1106 via the AN 1104. The wireless device 1102 may send/transmit uplink data (e.g., the uplink data that caused the wireless device 1102 to trigger the service request procedure), for example, based on (e.g., after) configuring the user plane resource.

At step 1180, the AMF 1106 may update a session management (SM) context of the PDU session. The AMF 1106 may notify the SMF 1108 (and/or one or more other associated SMFs) that the user plane resource has been configured, and/or may provide information relating to the user plane resource configuration. The AMF 1106 may provide/send to the SMF 1108 (and/or one or more other associated SMFs) one or more AN tunnel endpoint identifiers/indicators of the AN 1104. The SMF 1108 may send an update SM context response message to the AMF 1106, for example, based on (e.g., after) the SM context update being complete.

The SMF 1108 may update a PCF (e.g., the PCF 1114) for purposes of policy control, for example, based on the update of the session management context. For example, the SMF 1108 may notify (e.g., via PCF 1114 update) the PCF 1114 of a new location of the wireless device 1102 if a location of the wireless device 1102 has changed. The SMF 1108 and the UPF 1112 may perform a session modification, for example, based on the update of the session management context. The session modification may be performed using N4 session modification messages. The UPF 1112 may send/transmit downlink data (e.g., the downlink data that caused the UPF 1112 to trigger the network-triggered service request procedure) to the wireless device, for example, based on the session modification being completed. The sending/transmitting of the downlink data may be based on the one or more AN tunnel endpoint identifiers of the AN 1104.

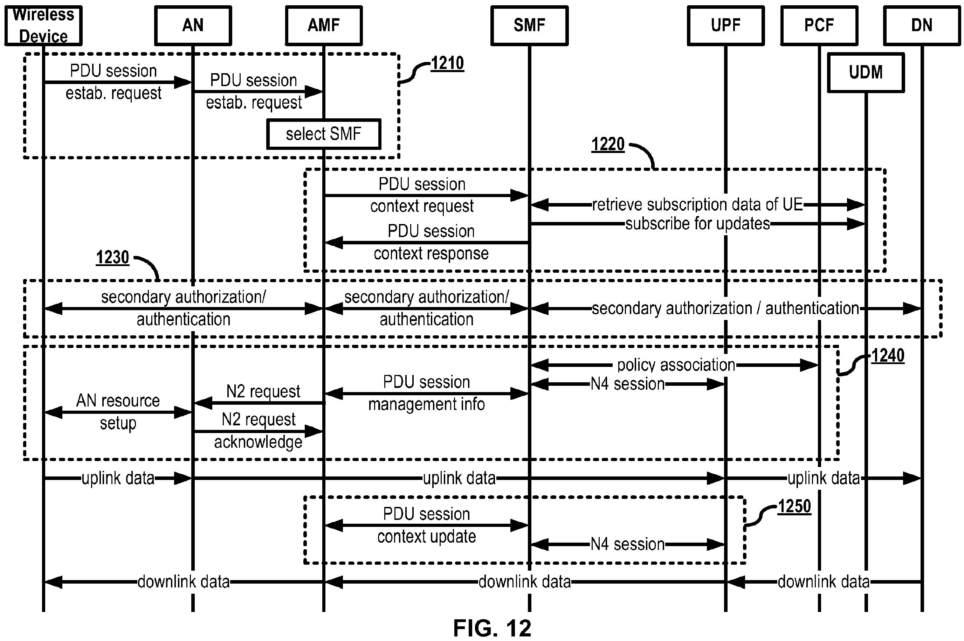

FIG. 12 shows an example PDU session establishment procedure for a wireless device. The wireless device 1202 may determine to send/transmit a PDU session establishment request (e.g., for the PDU session establishment procedure) to create a new PDU session, to hand over an existing PDU session to a 3GPP network, and/or for any other suitable reason.

At step 1210, the wireless device 1202 may initiate PDU session establishment. The wireless device 1202 may send/transmit a PDU session establishment request, via an AN 1204, to an AMF 1206. The PDU session establishment request may be a NAS message. The PDU session establishment request may indicate/comprise one or more of: a PDU session indicator/ID; a requested PDU session type (e.g., whether the requested PDU session is new or existing); a requested DN (e.g., a DNN); a requested network slice (S-NSSAI); a requested SSC mode; and/or any other suitable information. The PDU session ID may be generated by the wireless device 1202. The PDU session type may be, for example, an Internet Protocol (IP)-based type (e.g., IPv4, IPv6, or dual stack IPv4/IPv6), an Ethernet type, or an unstructured type.

The AMF 1206 may determine/select an SMF (e.g., SMF 1208) based on the PDU session establishment request. The requested PDU session may, in at least some scenarios, already be associated with a particular SMF. For example, the AMF 1206 may store a wireless device context of the wireless device 1202, and the wireless device context may indicate that the PDU session ID of the requested PDU session is already associated with the particular SMF. In some scenarios, the AMF 1206 may select the SMF based on a determination that the SMF is prepared to handle the requested PDU session. For example, the requested PDU session may be associated with a particular DNN and/or S-NSSAI. The SMF may be selected based on a determination that the SMF can manage a PDU session associated with the particular DNN and/or S-NSSAI.

At step 1220, the network may manage a context of the PDU session. The AMF 1206 may send a PDU session context request to the SMF 1208, for example, based on (e.g., after) selecting the SMF 1208 at 1210. The PDU session context request may comprise the PDU session establishment request received from the wireless device 1202 at step 1210. The PDU session context request may be a Nsmf_PDUSession_CreateSMContext Request and/or a Nsmf_PDUSession_UpdateSMContext Request. The PDU session context request may indicate/comprise indicators/identifiers of the wireless device 1202; the requested DN; and/or the requested network slice. The SMF 1208 may retrieve subscription data from a UDM 1216, for example, based on the PDU session context request. The subscription data may be session management subscription data of the wireless device 1202. The SMF 1208 may subscribe for updates to the subscription data. The PCF 1208 may send, to the SMF 1208, new information if the subscription data of the wireless device 1202 changes, for example, based on the SMF 1208 subscribing for the updates. The SMF 1208 may send/transmit a PDU session context response to the AMF 1206, for example, based on (e.g., after) receiving/obtaining the subscription data of the wireless device 1202. The PDU session context response may be a Nsmf_PDUSession_CreateSMContext Response and/or a Nsmf_PDUSession_UpdateSMContext Response. The PDU session context response may include/comprise a session management context ID.

At step 1230, secondary authorization/authentication may be performed, if necessary. The secondary authorization/authentication may involve the wireless device 1202, the AMF 1206, the SMF 1208, and/or the DN 1218. The SMF 1208 may access the DN 1218 via a server (e.g., a data network authentication, authorization, and accounting (DN AAA) server).

At step 1240, the network may set up a data path for uplink data associated with the PDU session. The SMF 1208 may select/determine a PCF (e.g., a PCF 1214). The SMF 1208 may establish a session management policy association. The PCF 1214 may provide an initial set of policy control and charging rules (PCC rules) for the PDU session, for example, based on the association. The PCF 1214 may (e.g., if targeting a particular PDU session) indicate, to the SMF 1208, one or more of a method for allocating an IP address to the PDU Session, a default charging method for the PDU session, an address of the corresponding charging entity, triggers for requesting new policies, and/or any other method, action, and/or information. The PCF 1214 may target a service data flow (SDF) comprising one or more PDU sessions. The PCF may (e.g., if targeting an SDF) indicate, to the SMF 1208, policies for one or more of applying QoS requirements, monitoring traffic (e.g., for charging purposes), steering traffic (e.g., by using one or more particular N6 interfaces), and/or any other purpose.

The SMF 1208 may determine and/or allocate an IP address for the PDU session. The SMF 1208 may select one or more UPFs (e.g., a single UPF 1212 as shown in FIG. 12) to handle the PDU session. The SMF 1208 may send an N4 session message to the selected UPF 1212. The N4 session message may be an N4 session establishment request and/or an N4 session modification request. The N4 session message may include/comprise packet detection, enforcement, and/or reporting rules associated with the PDU session. The UPF 1212 may acknowledge the N4 session message by sending an N4 session establishment response and/or an N4 session modification response.

The SMF 1208 may send PDU session management information to the AMF 1206. The PDU session management information may be/comprise a Namf_Communication_N1N2MessageTransfer message. The PDU session management information may include/comprise the PDU session ID. The PDU session management information may be/comprise a NAS message. The PDU session management information may include/comprise N1 session management information and/or N2 session management information. The N1 session management information may include/comprise a PDU session establishment accept message. The PDU session establishment accept message may include/comprise tunneling endpoint information of the UPF 1212 and QoS information associated with the PDU session.

The AMF 1206 may send an N2 request to the AN 1204. The N2 request may include/comprise the PDU session establishment accept message. The AN 1204 may determine AN resources for the wireless device 1202, for example, based on the N2 request. The AN resources may be used by the wireless device 1202 to establish the PDU session, via the AN 1204, with the DN 1218. The AN 1204 may determine resources to be used for the PDU session and indicate, to the wireless device 1202, the determined resources. The AN 1204 may send the PDU session establishment accept message to the wireless device 1202. The AN 1204 may perform an RRC reconfiguration of the wireless device 1202. The AN 1204 may send an N2 request acknowledge to the AMF 1206, for example, based on (e.g., after) the AN resources being set up. The N2 request acknowledge may include/comprise N2 session management information (e.g., the PDU session ID and tunneling endpoint information of the AN 1204).

The wireless device 1202 may (e.g., optionally) send uplink data associated with the PDU session, for example, based on the data path for uplink data being set up (e.g., at step 1240). The uplink data may be sent to a DN 1218, associated with the PDU session, via the AN 1204 and the UPF 1212.

At step 1250, the network may update the PDU session context. The AMF 1206 may send/transmit a PDU session context update request to the SMF 1208. The PDU session context update request may be a Nsmf_PDUSession_UpdateSMContext request. The PDU session context update request may comprise the N2 session management information received from the AN 1204. The SMF 1208 may acknowledge (e.g., send an acknowledgment message based on/in response to) the PDU session context update. The acknowledgement may be a Nsmf_PDUSession_UpdateSMContext response. The acknowledgement may comprise a subscription requesting that the SMF 1208 be notified of any wireless device mobility event. The SMF 1208 may send an N4 session message to the UPF 1212, for example, based on the PDU session context update request. The N4 session message may be an N4 session modification request. The N4 session message may comprise tunneling endpoint information of the AN 1204. The N4 session message may comprise forwarding rules associated with the PDU session. The UPF 1212 may acknowledge (e.g., reception of the N4 session message) by sending an N4 session modification response.

The UPF 1212 may relay downlink data associated with the PDU session, for example, based on (e.g., after) the UPF 1212 receiving the tunneling endpoint information of the AN 1204The downlink data may be received from a DN 1218, associated with the PDU session, via the AN 1204 and the UPF 1212.

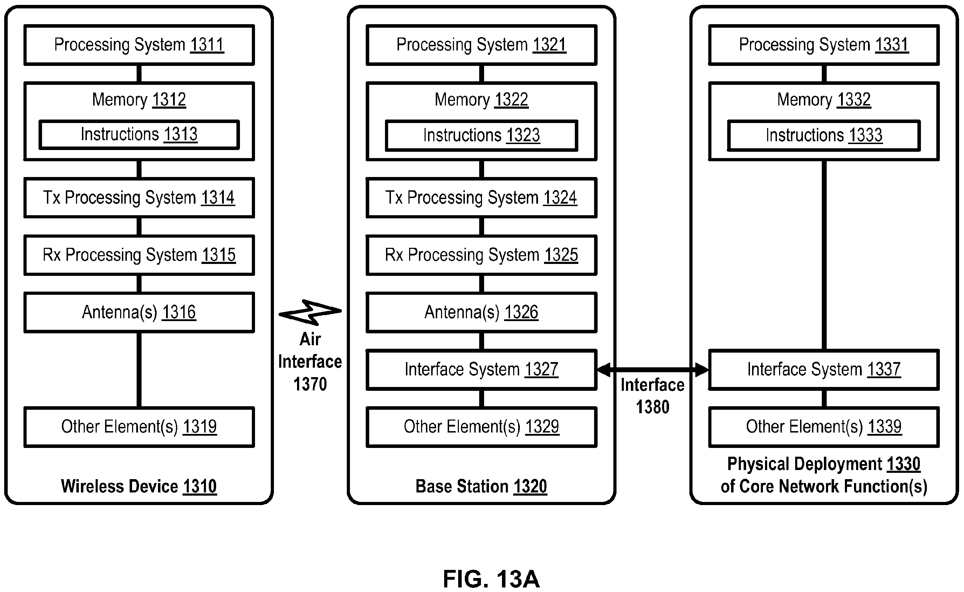

FIG. 13A shows example elements in a communications network. FIG. 13A shows a wireless device 1310, a base station 1320, and a physical deployment of one or more network functions 1330 (henceforth, "deployment 1330"). Any wireless device described herein may have similar components and/or may be implemented in a similar manner as the wireless device 1310. Any base station described herein (or any portion of the base station, depending on the architecture of the base station) may have similar components and/or may be implemented in a similar manner as the base station 1320. Any physical core network deployment described herein (or any portion of the deployment, depending on the architecture of the deployment) may have similar components and may be implemented in a similar manner as the deployment 1330.

The wireless device 1310 may communicate with base station 1320 over an air interface 1370. A communication direction from wireless device 1310 to base station 1320 over air interface 1370 may be known as uplink, and a communication direction from base station 1320 to wireless device 1310 over air interface 1370 may be known as downlink. Downlink transmissions may be separated from uplink transmissions using FDD, TDD, and/or some combination of duplexing techniques. FIG. 13A shows a single wireless device 1310 and a single base station 1320, but it may be understood that wireless device 1310 may communicate with any number/quantity of base stations and/or other access network components over air interface 1370, and it may be understood that that base station 1320 may communicate with any number/quantity of wireless devices over air interface 1370.

The wireless device 1310 may comprise a processing system 1311 and a memory 1312. The memory 1312 may comprise one or more computer-readable media (e.g., one or more non-transitory computer readable media). The memory 1312 may include/comprise/store instructions 1313. The processing system 1311 may process and/or execute the instructions 1313. Processing and/or execution of the instructions 1313 may cause the wireless device 1310 and/or the processing system 1311 to perform one or more functions or activities. The memory 1312 may include/comprise data (not shown). One of the functions or activities performed by the processing system 1311 may be to store data in the memory 1312 and/or retrieve previously-stored data from the memory 1312. For example, downlink data received from the base station 1320 may be stored in the memory 1312, and uplink data for transmission to the base station 1320 may be retrieved from the memory 1312. The wireless device 1310 may communicate with the base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13A, the transmission processing system 1314 and/or the reception processing system 1315 may be coupled to a dedicated memory that may be analogous to but separate from the memory 1312. The dedicated memory may comprise instructions that may be processed and/or executed to carry out one or more respective functionalities of the transmission processing system 1314 and/or the reception processing system 1315. The wireless device 1310 may comprise one or more antennas 1316 to access the air interface 1370.

The wireless device 1310 may comprise one or more other elements 1319. The one or more other elements 1319 may comprise software and/or hardware that may provide features and/or functionalities. For example, the one or more other elements 1319 may comprise one or more of a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise or connect to one or more sources of power (e.g., a battery, a solar cell, a fuel cell, a wall outlet, an electrical grid, and/or any combination thereof).

The wireless device 1310 may send/transmit uplink data to and/or receive downlink data from the base station 1320 via the air interface 1370. One or more of the processing system 1311, transmission processing system 1314, and/or reception system 1315 may implement open systems interconnection (OSI) functionality to perform transmission and/or reception. For example, the transmission processing system 1314 and/or the reception system 1315 may perform layer 1 OSI functionality, and the processing system 1311 may perform higher layer functionality. The wireless device 1310 may transmit and/or receive data over the air interface 1370 via/using one or more antennas 1316. For scenarios where the one or more antennas 1316 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media (e.g., one or more non-transitory computer readable media). The memory 1322 may comprise instructions 1323. The processing system 1321 may process and/or execute the instructions 1323. Processing and/or execution of the instructions 1323 may cause the base station 1320 and/or the processing system 1321 to perform one or more functions or activities. The memory 1322 may comprise data (not shown). One of the functions or activities performed by the processing system 1321 may be to store data in the memory 1322 and/or retrieve previously-stored data from the memory 1322. The base station 1320 may communicate with the wireless device 1310 using a transmission processing system 1324 and/or a reception processing system 1325. The transmission processing system 1324 and/or the reception processing system 1325 may be coupled to a dedicated memory (not shown) that may be analogous to but separate from memory 1322. The dedicated memory may comprise instructions that may be processed and/or executed to carry out one or more of their respective functionalities. The base station 1320 may comprise one or more antennas 1326 to access the air interface 1370.

The base station 1320 may send/transmit downlink data to and/or receive uplink data from wireless device 1310 via the air interface 1370. To perform the transmission and/or reception, one or more of the processing system 1321, the transmission processing system 1324, and/or the reception system 1325 may implement OSI functionality. For example, the transmission processing system 1324 and/or the reception system 1325 may perform layer 1 OSI functionality, and the processing system 1321 may perform higher layer functionality. The base station 1320 may transmit and/or receive data via the air interface 1370 using one or more antennas 1326. For scenarios where the one or more antennas 1326 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless. The interface system 1327 may comprise one or more components suitable for communicating via the interface 1380. As shown in FIG. 13A, the interface 1380 may connect the base station 1320 to a single deployment 1330 (e.g., as shown in FIG. 13A), but it may be understood that wireless device 1310 may communicate with any number/quantity of base stations and/or CN deployments via the interface 1380, and it may be understood that that deployment 1330 may communicate with any number/quantity of base stations and/or other CN deployments via the interface 1380. The base station 1320 may comprise one or more other elements 1329 analogous to one or more of the one or more other elements 1319.

The deployment 1330 may comprise any quantity/number of portions of any quantity /number of instances of one or more NFs. The deployment 1330 may comprise a processing system 1331 and a memory 1332. The memory 1332 may comprise one or more computer-readable media (e.g., one or more non-transitory computer readable media). The memory 1332 may comprise instructions 1333. The processing system 1331 may process and/or execute instructions 1333. Processing and/or execution of the instructions 1333 may cause the deployment 1330 and/or the processing system 1331 to perform one or more functions or activities. The memory 1332 may comprise data (not shown). One of the functions or activities performed by processing system 1331 may be to store data in the memory 1332 and/or retrieve previously-stored data from the memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

The wireless device 1310, the base station 1320, and/or the deployment 1330 may implement timers and/or counters. A timer/counter may start and/or restart at an initial value. The timer/counter may run based on the starting. Running of the timer/counter may be associated with an occurrence. The value of the timer/counter may change (e.g., increment or decrement). The occurrence may be an exogenous event (e.g., a reception of a signal, a measurement of a condition, etc.), an endogenous event (e.g., a transmission of a signal, a calculation, a comparison, a performance of an action or a decision to so perform, etc.), and/or any combination thereof. The occurrence may be the passage of a particular amount of time. A timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused (e.g., a present value of the timer/counter may be held, maintained, and/or carried over), for example, even after an occurrence of one or more occurrences that would otherwise cause the value of the timer/counter to change. The timer/counter may be un-paused or continued (e.g., the value that was held, maintained, and/or carried over may begin changing again), for example, after an occurrence of the one or more occurrence occur. A timer/counter may be set and/or reset. As used herein, setting may comprise resetting. The value of the timer/counter may be set to the initial value, for example, if the timer/counter sets and/or resets. A timer/counter may be started and/or restarted. Starting may comprise restarting. The value of the timer/counter may be set to the initial value and the timer/counter may begin to run (e.g., increment or decrement), for example, if the timer/counter restarts.

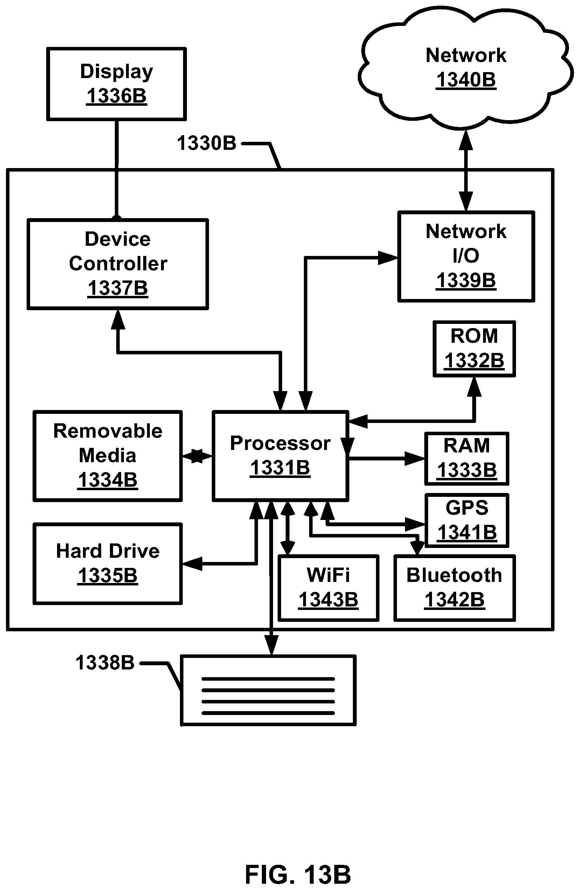

FIG. 13B shows example elements of a computing device that may be used to implement any of the various devices described herein, including, for example, a base station 152A, 152B, 302, 402, 403, 502 602, 602A, 602B, 602C, 702, 802, 1004, 1104, 1204, and/or 1320, ; a wireless device 101, 151, 301, 401, 501, 601A, 601B, 601C, 701, 801, 1002, 1102, 1202, and/or 1310; , or any other base station, wireless device, node, NF (e.g., AMF, SMF, UPF, PCF, etc.), UDM, OAM, UDM/OAM, network device, or computing device described herein. The computing device 1330B may include one or more processors 1331B, which may execute instructions stored in the random-access memory (RAM) 1333B, the removable media 1334B (such as a Universal Serial Bus (USB) drive, compact disk (CD) or digital versatile disk (DVD), or floppy disk drive), or any other desired storage medium. Instructions may also be stored in an attached (or internal) hard drive 1335B. The computing device 1330B may also include a security processor (not shown), which may execute instructions of one or more computer programs to monitor the processes executing on the processor 1331B and any process that requests access to any hardware and/or software components of the computing device 1330B (e.g., ROM 1332B, RAM 1333B, the removable media 1334B, the hard drive 1335B, the device controller 1337B, a network interface 1339B, a GPS 1341B, a Bluetooth interface 1342B, a WiFi interface 1343B, etc.). The computing device 1330B may include one or more output devices, such as the display 1336B (e.g., a screen, a display device, a monitor, a television, etc.), and may include one or more output device controllers 1337B, such as a video processor. There may also be one or more user input devices 1338B, such as a remote control, keyboard, mouse, touch screen, microphone, etc. The computing device 1330B may also include one or more network interfaces, such as a network interface 1339B, which may be a wired interface, a wireless interface, or a combination of the two. The network interface 1339B may provide an interface for the computing device 1330B to communicate with a network 1340B (e.g., a RAN, or any other network). The network interface 1339B may include a modem (e.g., a cable modem), and the external network 1340B may include communication links, an external network, an inhome network, a provider's wireless, coaxial, fiber, or hybrid fiber/coaxial distribution system (e.g., a DOCSIS network), or any other desired network. Additionally, the computing device 1330B may include a locationdetecting device, such as a global positioning system (GPS) microprocessor 1341B, which may be configured to receive and process global positioning signals and determine, with possible assistance from an external server and antenna, a geographic position of the computing device 1330B.

The example in FIG. 13B may be a hardware configuration, although the components shown may be implemented as software as well. Modifications may be made to add, remove, combine, divide, etc. components of the computing device 1330B as desired. Additionally, the components may be implemented using basic computing devices and components, and the same components (e.g., processor 1331B, ROM storage 1332B, display 1336B, etc.) may be used to implement any of the other computing devices and components described herein. For example, the various components described herein may be implemented using computing devices having components such as a processor executing computer-executable instructions stored on a computer-readable medium, as shown in FIG. 13B. Some or all of the entities described herein may be software based, and may coexist in a common physical platform (e.g., a requesting entity may be a separate software process and program from a dependent entity, both of which may be executed as software on a common computing device).

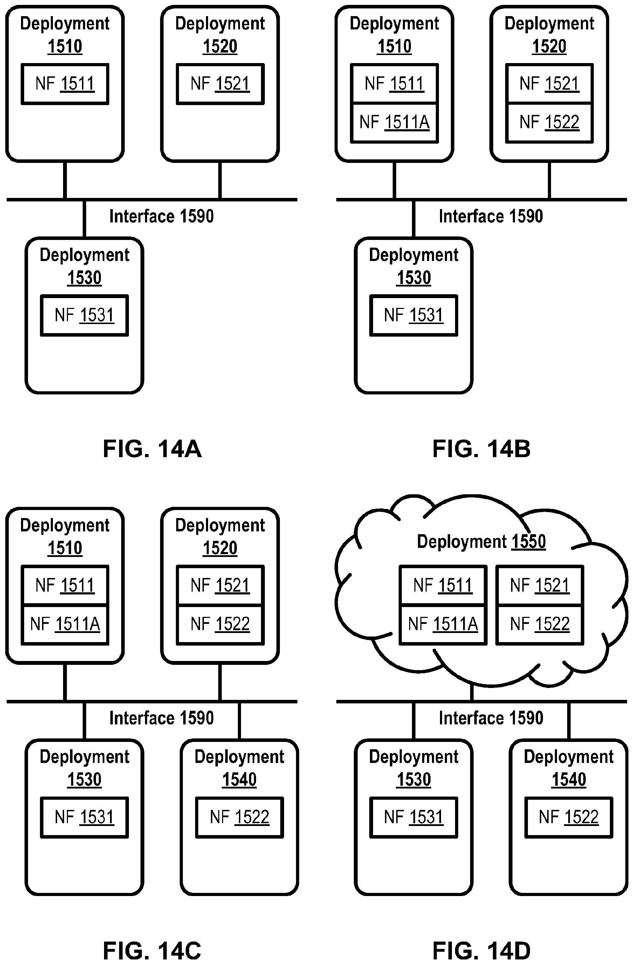

FIGS. 14A, 14B, 14C, and 14D show various example arrangements of physical core network deployments. Each of the arrangements may comprise one or more network functions and/or portions thereof. The core network deployments may comprise a deployment 1410, a deployment 1420, a deployment 1430, a deployment 1440, and/or a deployment 1450. Any of the deployments (e.g., each deployment) may be analogous to the deployment 1330 as shown in FIG. 13A. Any of the deployments (e.g., each deployment) may comprise a processing system for performing one or more functions and/or activities, memory for storing data and/or instructions, and/or an interface system for communicating with other network elements (e.g., other core network deployments). Any of the deployments (e.g., each deployment) may comprise one or more NFs. An NF may refer to a particular set of functionalities and/or one or more physical elements configured to perform those functionalities (e.g., a processing system and memory comprising instructions that, when executed by the processing system, cause the processing system to perform the functionalities). As described herein, a network function performing X, Y, and Z, may comprise the one or more physical elements configured to perform X, Y, and Z (e.g., irrespective of configuration and/or location of the deployment of the one or more physical elements), where X, Y, and Z, each may refer to one or more operations. An NF may comprise one or more of a network node, network element, and/or network device.

Different types of NF may be present in a deployment. Each type of NF may be associated with a different set of one or more functionalities. A plurality of different NFs may be flexibly deployed at different locations (e.g., in different physical core network deployments) or in a same location (e.g., co-located in a same deployment). A single NF may be flexibly deployed at different locations (e.g., implemented using different physical core network deployments) or in a same location. Physical core network deployments may also implement one or more base stations, application functions (AFs), data networks (DNs), and/or any portions thereof. NFs may be implemented in many ways, including as network elements on dedicated or shared hardware, as software instances running on dedicated or shared hardware, and/or as virtualized functions instantiated on a platform (e.g., a cloud-based platform).

FIG. 14A shows an example arrangement of core network deployments. Any of the core network deployments (e.g., each of the core network deployments) may comprise one network function. A deployment 1410 may comprise an NF 1411, a deployment 1420 may comprise an NF 1421, and a deployment 1430 may comprise an NF 1431. The deployments 1410, 1420, 1430 may communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B shows an example arrangement where a single deployment may comprise more than one NF. Multiple NFs may be deployed in deployments 1410, 1420. Deployments 1410, 1420 may implement a software-defined network (SDN) and/or a network function virtualization (NFV).

Deployment 1410 may comprise an additional network function, NF 1411A. The NFs 1411, 1411A may comprise multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. NFs 1411, 1411A may be associated with different PLMNs, but deployment 1410, which implements NFs 1411, 1411A, may be owned and/or operated by a single entity.

Deployment 1420 may comprise a NF 1421 and an additional NF 1422. The NFs 1421, 1422 may be different NF types. Similar to NFs 1411, 1411A, the NFs 1421, 1422 may be co-located within the same deployment 1420, but may be separately implemented. For example, a first PLMN may own and/or operate deployment 1420 comprising NFs 1421, 1422. As another example, the first PLMN may implement the NF 1421 and a second PLMN may obtain, from the first PLMN (e.g., rent, lease, procure, etc.), at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. Networks may operate with greater speed, coverage, security, and/or efficiency, for example, if multiple NFs are provided at a single deployment.

FIG. 14C shows an example arrangement of core network deployments in which a single instance of an NF may be implemented using a plurality of different deployments. For example, a single instance of NF 1422 may be implemented at deployments 1420, 1440. The functionality provided by NF 1422 may be implemented as a bundle or sequence of subservices. Any subservice (e.g., each subservice) may be implemented independently, for example, at a different deployment. Any subservice (e.g., each subservice) may be implemented in a different physical location. By distributing implementation of subservices of a single NF across different physical locations, the mobile communications network may operate with greater speed, coverage, security, and/or efficiency.

FIG. 14D shows an example arrangement of core network deployments in which one or more network functions may be implemented using a data processing service. As shown in FIG. 14D, NFs 1411, 1411A, 1421, 1422 may be included in a deployment 1450 that may be implemented as a data processing service. The deployment 1450 may comprise a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the FIGS. 14A-14D, different network elements (e.g., NFs) may be located in different physical deployments, or co-located in a single physical deployment. Sending and receiving of messages among different network elements, as described herein, is not limited to inter-deployment transmission or intra-deployment transmission, unless explicitly indicated.

A deployment may be a black box that may be preconfigured with one or more NFs and preconfigured to communicate, in a prescribed manner, with other black box deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O-RAN) standards.

In at least some wireless communications, time service may be used. A time service may comprise, for example, a service that provides time information (e.g., absolute time information, relative time information) to a wireless device. The time service may be provided by and/or via a communication network. The time service may determine and/or obtain time information from one or more time sources. The time service may be, for example, a coordinated universal time (UTC) service.

The time service may require traceability for at least some wireless communication systems. Traceability may comprise tracing, authentication, verification, confirmation, and/or proof. Traceability of a time service (e.g., traceability to UTC) may comprise an indication that time information is accurate (e.g., accurate to a particular degree of accuracy), precise (e.g., to a particular degree of precision) provided by and/or determined, for example, based on one or more particular (e.g., identified) sources of time, authentic, and/or calibrated. Traceability may be associated with particular time information and/or a particular time service. A wireless device may require and/or request that a network provide traceability associated with particular time information and/or a particular time service. A network that provides a time service may or may not provide traceability and/or specific aspects of traceability.

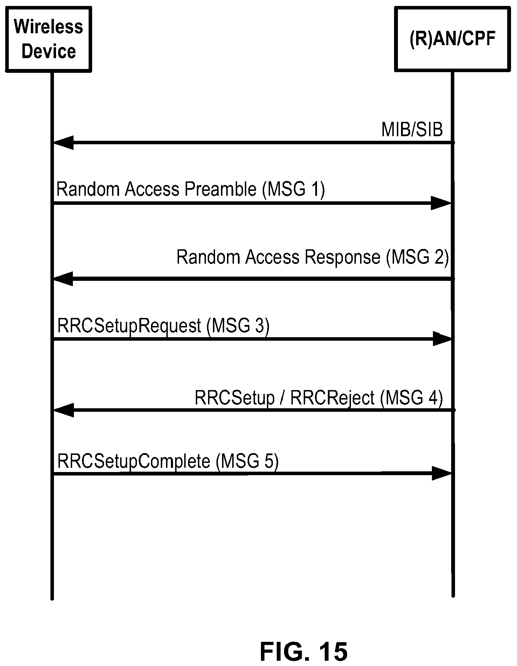

FIG. 15 shows an example method for RRC connection establishment. A wireless device may receive master information block (MIB) information (e.g., information element, parameter, message) and/or system information block (SIB) information (e.g., information element, parameter, message, SIB 1, etc.) from a base station (e.g., (R)AN) and/or a control plane function (CPF) (e.g., an AMF). For example, the wireless device may receive SIB (e.g., SIB 1) information from the base station (e.g., (R)AN). The MIB information may comprise system information. For example, the MIB information may comprise one or more parameters such as: systemFrameNumber, subCarrierSpacingCommon, ssb-SubcarrierOffset, dmrs-TypeA-Position, pdcch-ConfigSIB1, cellBarred, intraFreqReselection, and/or the like. The SIB (e.g., SIB 1) information may comprise information relevant if evaluating whether a wireless device is allowed to access a cell and defines the scheduling of other system information. The SIB (e.g., SIB 1) information may comprise radio resource configuration information that is common for all wireless devices and barring information used for the unified access control. The wireless device may receive SIB x information (e.g., information element, parameter, message) from the base station (e.g., (R)AN) and/or the CPF (e.g., an AMF). For example, the SIB (e.g., SIB x) information may comprise SIB 2, SIB 3, SIB 4, and/or the like, other than SIB 1. The SIB 2 information may comprise cell re-selection information common for intra-frequency, inter-frequency and/or inter-RAT cell reselection (e.g., applicable for more than one type of cell re-selection but not necessarily all) as well as intra-frequency cell re-selection information other than neighbouring cell related. The SIB 2 message may comprise one or more of the following parameters: cellReselectionInfoCommon, cellReselectionServingFreqInfo, intraFreqCellReselectionInfo, and/or the like. The SIB 3 information may comprise neighbouring cell related information relevant for (e,g, only relevant for) intra-frequency cell re-selection. The IE may include cells with specific re-selection parameters as well as blacklisted cells. The SIB 3 information may comprise one or more parameters such as: intraFreqNeighCellList, intraFreqBlackCellList, and/or the like.

The wireless device may send (e.g., transmit) at least one random access preamble to the base station (e.g., (R)AN), for example, based on (e.g., after or in response to) the message being received from the base station (e.g., (R)AN) and/or the CPF (e.g., an AMF). The wireless device may send (e.g., transmit) at least one random access preamble to the CPF (e.g., an AMF), for example, via the base station (e.g., (R)AN). For example, the wireless device may send the at least one random access preamble to the base station (e.g., (R)AN) via a message 1 (MSG 1). The base station (e.g., (R)AN) may send a random-access response message to the wireless device, for example, based on (e.g., after or in response to) the at least one random access preamble being received from the wireless device. The CPF (e.g., an AMF) may send (e.g., transmit) a random-access response message to the wireless device, for example, via the base station (e.g., (R)AN). For example, the CPF and/or the base station (e.g., (R)AN) may send the random-access response message to the wireless device via a message 2 (MSG 2).

The wireless device may send a message (e.g., RRC setup request or RRCSetupRequest) to the base station (e.g., (R)AN) and/or the CPF (e.g., an AMF), for example, based on (e.g., in response to) the random access response message (e.g., MSG 2). For example, the wireless device may send the RRC setup request message via a message 3 (MSG 3). For example, the wireless device may send the RRC setup request message to the CPF via the base station (e.g., (R)AN). For example, the RRC setup request message may indicate establishing an RRC connection for the wireless device. The RRC setup request message may comprise at least one of parameters including a wireless device identity (e.g., TMSI), a parameter (e.g., establishmentcause) indicating a cause value of RRC establishment, a dedicatedNAS-Message, and/or the like. For example, the establishmentCause may comprise at least one of values including emergency, highPriority Access, mt-Access, mo-Signalling, mo-Data, mo-VoiceCall, mo-VideoCall, mo-SMS, mps-PriorityAccess, mcs-PriorityAccess, and/or the like.

The base station (e.g., (R)AN) and/or the CPF (e.g, an AMF) may send an RRC setup (or RRCSetup) message to the wireless device via a message 4 (MSG 4), for example, based on (e.g., after or in response to) the message (e.g., MSG 3) being received from the wireless device. For example, the CPF may send the RRC setup message to the wireless device via the base station (e.g., (R)AN). For example, the RRC setup message may be used to establish a signaling radio bearer (SRB) (e.g., SRB 1). The RRC setup message may comprise at least one of information elements including a masterCellGroup, a radioBearerConfig, dedicatedNAS-Message, and/or the like. The masterCellGroup may indicate that the network configures the RLC bearer for the SRB (e.g., SRB1). The radioBearerConfig may indicate that the SRB (e.g., SRB1) may be configured in RRC setup. Alternatively, the base station (e.g., (R)AN) and/or the CPF (e.g, an AMF) may send an RRC reject (or RRCReject) message to the wireless device via a message 4 (MSG 4), for example, based on (e.g., after or in response to) the message (e.g., MSG 3) being received from the wireless device. The RRC reject message may contain failure information (e.g., FESSI as will be described later), wait time, and/or the like.

The wireless device may send an RRC setup complete (or RRCSetupComplete) message to the base station (e.g., (R)AN), for example, based on (after or in response to) the message (e.g., MSG 4) being received from the base station (e.g., (R)AN) and/or the CPF (e.g., an AMF). For example, the wireless device may send an RRC setup complete message to the base station (e.g., (R)AN) via a message 5 (MSG 5). For example, the wireless device may send the RRC setup complete message to the CPF (e.g., an AMF) via the base station (e.g., (R)AN). The RRC setup complete message may comprise at least one of parameters including a selectedPLMN-Identity, a registeredCPF, a guami-Type (e.g., native, mapped), s-NSSAI-List (e.g., list of network slice identifiers), dedicatedNAS-Message, a TMSI, and/or the like. The registeredCPF may comprise a PLMN identity and/or a CPF identifier. The RRC setup complete message may comprise a NAS message. For example, the dedicatedNAS-Message of the RRC setup complete message may comprise the NAS message. For example, the dedicatedNAS-Message may comprise a registration request message.

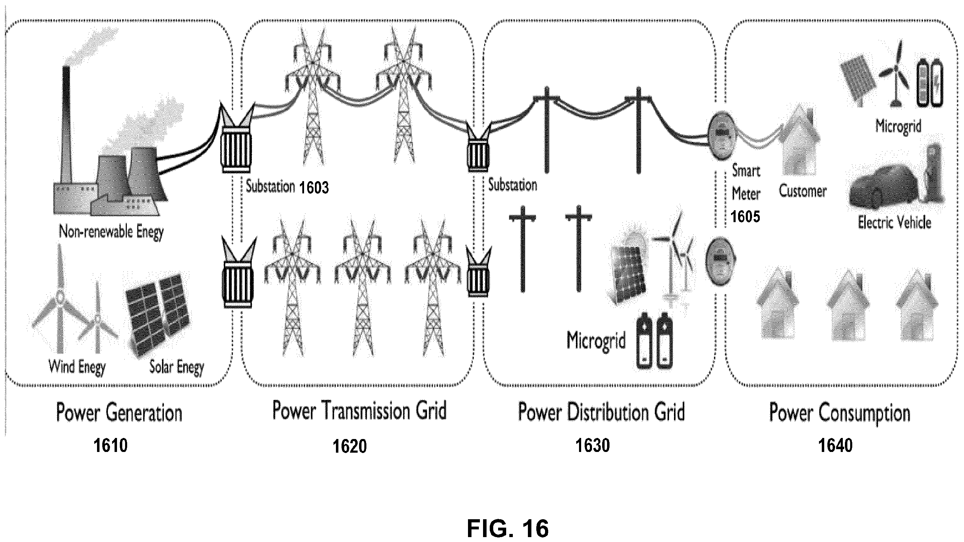

FIG. 16 shows an example of a power system. The "power system", "electrical power system", "power grid", "smart grid" and/or "smart energy system" may be used interchangeably. A power system (e.g., power system/smart energy system) may comprise power generation 1610, power transmission 1620, power distribution 1630, and/or power consumption 1640. The power generation 1610 may comprise generating/supplying (electric) power by means of solar, wind, fuel cell, gas, and/or the like, individually or combined in one or more power generating centers. For example, the power generation 1610 may comprise coal-fired power generation, gas-fired power generation, hydropower, solar energy, wind energy, geothermal energy, and/or the like. The power transmission (or power transmission grid) 1620 may comprise sending (e.g., transmitting) the power from at least one power generating center to one or more load center (e.g., power station, power substation). The power distribution (or power distribution grid) 1630 may comprise distributing the power to nearby power users/consumers (e.g., homes, industries, electric vehicles). The power consumption 1640 may comprise consuming/using the power by the power users/consumers (e.g., homes, industries, electric vehicles). As shown in FIG. 16, one or more substations 1603 may be connected between the power generation and power transmission, and/or between power transmission and power distribution. For example, these substations may be equipped with one or more communication equipment. As shown in FIG. 16, one or more smart meters 1605 may be connected between the power distribution and the power consumption.

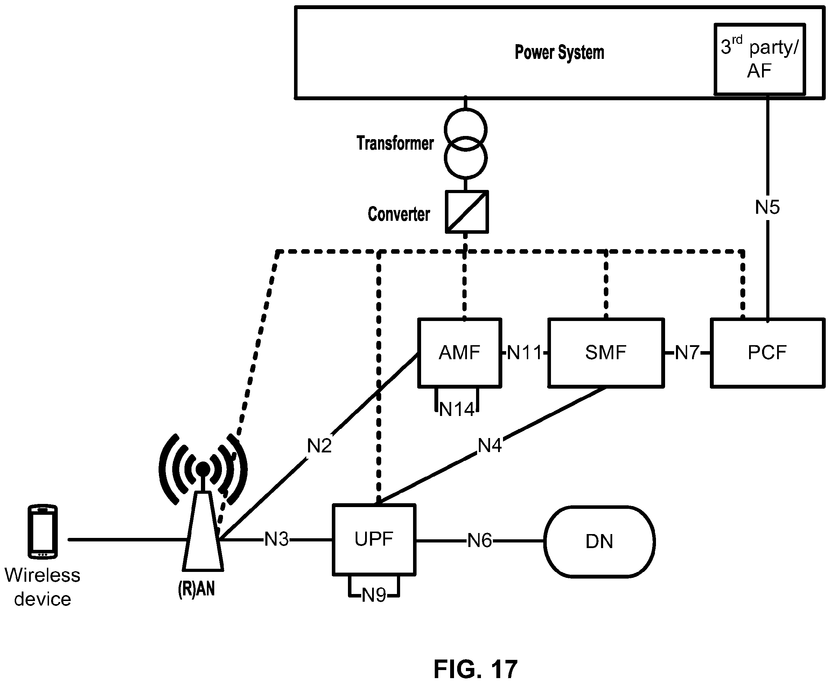

FIG. 17 shows example architecture for a wireless communication network and a power system. As shown in FIG. 17, a power system (e.g., power station, power substation, power transmission, power distribution, power consumption, and/or the like, as shown in FIG. 16) may provide electrical supply service (e.g., power supply, electric power) to at least one communication system (e.g., LTE, 5G, 6G, and/or any communication system). The communication system may comprise at least one base station (e.g., (R)AN as shown in FIG. 17), at least one CPF (e.g., AMF as shown in FIG. 17), at least one SMF, at least one UPF, at least one PCF, and/or the like. The voltage of the power system (e.g., 69 kilovolt (kV), 138 kV, 500kV) may be too high for the communication system. The power system may convert the high voltage (e.g., 69 kV) to low voltage (e.g., 1 10v), for example, via a transformer, for the electrical supply service of the at least one communication system. For example, an alternating current (AC) to direct current (DC) converter may be used to convert AC (e.g., 110v) to DC (e.g., -48v) for the electrical supply service of the at least one communication system (dotted line as shown in FIG. 17).

A wireless communication system may experience a failure and/or reduction in an electrical power supply. A power system may detect a fault of one or more power line/power equipment. For example, there may be one or more short circuits caused by various reasons such as loose connections, unwanted contact with conductors (e.g., metal pieces, conductive fluids like water, animal parts, etc.), device failure, and/or the like. The power system may open, for example, one or more associated circuit breaker to isolate the fault power line/power equipment. This may cause power outage for one or more associated area. There may be power outage caused by breakage of power line/power equipment due to severe weather, accidents, overload, and/or the like. There may be other problems related to the power system. The power system may be unable to provide an electrical supply service for at least one communication system. A communication system may be required to indicate/identify an ability of the communication system to continue operation despite a lack of electrical supply service. For example, a network may be required to maintain power and/or communication even in the event of power failure. The ability of the communication system to continue operation may indicate/comprise one or more backup electrical supply (e.g., battery, Uninterruptible Power Supply (UPS), diesel, solar panels, wind turbines, geothermal energy, hydroelectric power, and/or the like) of the communication system. At least some wireless communication systems experience challenges in maintaining operation if losing electrical supply service from the power system. At least some wireless communication systems may experience challenges in communication with a third party (e.g., the power system) an ability (and/or lack thereof) of the communication system to continue operation if losing electrical supply service from the power system. At least some wireless communication systems may not be able to to take proper actions if receiving a recovery status indication from a third party (e.g., the power system) in the event of an electrical supply service interruption.

As described herein, a wireless communication network may be be configured to continue one or more operations despite a failure and/or reduction of an electrical supply service. For example, communications may be configured to enable a wireless communication system to continue operation (e.g., operate as long as possible) if losing electrical supply service from the power system. For example, actions may be taken to enable one or more backup electrical supplies (e.g., battery, UPS, diesel, solar panels, wind turbines, geothermal energy, hydroelectric power, and/or the like) of the communication system to last as long as possible. For example, an energy saving mode for one or more wireless devices may be determined and/or enabled. As described herein, a wireless communication system/network may indicate to a third party (e.g., a primary power system) an ability of the wireless communication system to continue operation if losing electrical supply service from the power system. The wireless communication system may perform one or more actions if receiving recovery status from a third party (e.g., the primary power system) in the event of an electrical supply service interruption.

A first device (e.g., a policy control function (PCF) device) of a network may receive a first message from a second device (e.g., an application function (AF)) or a third party (e.g., the power system). The first message may comprise at least a parameter indicating status of electrical supply service for the network, for example, if a failure of one or more power line/power equipment occurs. The second device or a third party (e.g., the power system) may determine if the status of electrical supply service for the network should be reported. For example, if the electrical supply that experiences a failure falls below a predetermined threshold (e.g., 5%, 10%, 25%, and/or any other percentage, quantity, or measurement) of power and/or if the performance of the communication system is not significantly affected, the second device (e.g., AF) and/or the third party may not send the first message. As another example, if a significant portion (e.g., 90% or any other portion) of the electrical supply experiences a failure, the second device (e.g., AF) and/or the third party may send the first message. The first device (e.g., PCF) may determine at least one policy and charging control (PCC) rule for at least one wireless device, for example, based on one or more parameters. The first device (e.g., PCF) may send a second message to a third device (e.g., session and management function (SMF)). The second message may comprise the at least one PCC rule.

The PCC rule may be used to control allowed service(s) (e.g., applied to service data flow). For example, if there is limited backup power supply, the wireless communication system may be able to work longer by limiting the service(s) allowed in the network. For example, in a power system, there may be smart meters, controllers for circuits, cameras for superivising equipment, and/or other devices. If the power supply service experiences a failure and if there is limited backup power supply, at least one device (e.g., the PCF) may determine that communications to/from one or more other devices (e.g., cameras) are not allowed because they may use a significant quantity of bandwidth and/or energy. One or more messages comprising the PCC rule may be sent to one or more other devices (e.g., an AMF, a base station, and/or a wireless device). For example, a message may indicate to a wireless device that it may use control signaling for voice but not for video. One or more devices (e.g., AMF and/or the base station) may determine whether one or more wireless devices are using allowed services and/or may block one or more services that are not allowed. The PCC rule may be used to adjust (e.g., increase) one or more charging rates for certain service(s), for example, if a power supply is limited. For example, higher rates may be charged for one or more services that may consume more bandwidth and/or energy (such as for video services).

One or more devices (e.g., the SMF, AMF, and/or base station) may perform one or more actions to save power for the wireless communication system. For example, the one or more devices may at least partially limit and/or reduce their use of a power supply (e.g., a backup electrical supply). Communications between the power system and the wireless communication system/network may provide collaborative energy-saving, for example, if a power failure occurs. For example, based on the knowledge of a capability of the network to continue one or more services, the power system may have the urgency and/or incentive to recover the power failure as soon as possible. For example, by determining allowed services based on the status (e.g., failure) of the power supply service and the capability of the network to continue one or more services, and/or by enabling allowed services for one or more wireless devices, energy consumption of the network may be reduced and/or a capability of the network to maintain/continue one or more services may be improved. Interruption to the communication system in the event of power failure may be reduced.

As shown in FIG. 17, the SMF may send further messages (e.g., N11, N4) to an AMF and/or a UPF. The AMF may communicate with one or more other AMFs via an N14 interface. The UPF may communicate with one or more other UPFs via an N9 interface. The AMF may send one or more messages (e.g., N2) to a base station (e.g., (R)AN). The UPF may communicate with a base station (e.g., (R)AN) and/or a data network (DN) via an N3 interface and/or an N6 interface.

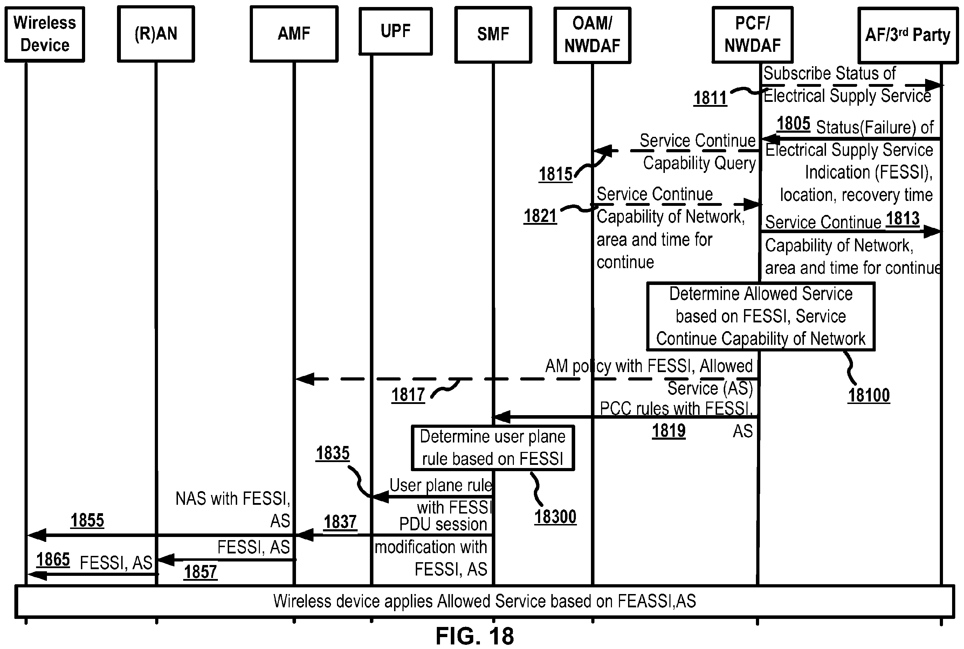

FIG. 18 shows example communications in a wireless communication network. A PCF of a network may send a message (e.g., Npcf_PolicyAuthorization_Notify Request, HTTP PUT, HTTP POST, Diameter Re-Auth-Request (RAR) command, Subscribe Status of Electrical Supply Service) 1811 to a network function (e.g., AF, NEF, OAM, NWDAF, AAA, a data network of power system) indicating subscribing changing of the status of electrical supply service for the network. The network may comprise a communication system (e.g., LTE, 5G, 6G, and/or any communication system). The network/communication system may comprise at least one of: the PCF; at least one SMF; at least one AMF; at least one UPF; at least one base station; at least one Operations, Administration and Maintenance (OAM); and/or at least one Network Data Analytics Function (NWDAF). The AF may be part of the network deployed by the same operator. The AF may be provided by an external 3^{rd} party service provider. For example, the AF may be provided by the operator/service provider of the power system. For example, the AF may be belonged to the operator/service provider of the power system. For example, the AF may be part of the power system. The operator/service provider of the power system may own, operate, administrate, and/or maintain the power system. The operator/service provider of the power system may monitor and operate switchboards and related equipment in electrical control centers to control the electrical power in transmission, sub-transmission and distribution networks.

The status of electrical supply service for the network may indicate a failure of electrical supply service for the network, which may be referred to herein as a failure of electrical supply service indication (FESSI). For example, the status of electrical supply service for the network may indicate that the power system is not able to provide the electrical supply service to the network/communication system. The status of electrical supply service for the network may indicate a recovery of electrical supply service for the network. For example, the status of electrical supply service for the network may indicate that the power system is able to provide the electrical supply service to the network/communication system again. Subscribing changing of the status of electrical supply service for the network may indicate that the PCF may receive a notification 1805 from the AF if the status of electrical supply service for the network is changed. The PCF may or may not send a message 1811 to the AF, asking for the status information. For example, the AF may inform the PCF (via e.g., FESSI) if the AF detects that the electrical supply service for the network is failure. The AF may inform the PCF if the AF detects that the electrical supply service for the network is recovered (e.g., available again).

A request message may comprise at least one identity of a network. For example, a
Npcf_PolicyAuthorization_Notify Request message may comprise at least one identity of the network and/or at least one identity of at least one network function (e.g., the PCF, NWDAF, OAM, SMF, UPF, AMF, (R)AN, and/or the like) of the network. The Npcf_PolicyAuthorization_Notify Request message may comprise location information of the network. The Npcf Policy Authorization Notify Request message may comprise location information of the at least one network function of the network. The at least one identity of the network, the at least one identity of at least one network function of the network, the location information of the network, and/or the location information of the at least one network function of the network may indicate that subscribing changing of the status of electrical supply service for the network may be used for the network and/or the at least one network function with the location information. For example, the Npcf_PolicyAuthorization_Notify Request message may comprise at least one identity of the network (e.g., an identity of a public land mobile network (PLMN)) and/or location information (e.g., geography area 1) of the network. This may indicate that the PCF may receive a notification from the AF if the status of electrical supply service has an impact to the network with that at least one identity (e.g., PLMN) and/or network with that location information (e.g., network located in the geography area 1). The Npcf_PolicyAuthorization_Notify Request message may comprise at least one identity of the PCF (e.g., PCF ID) and/or location information (e.g., serving area 1) of the PCF. This may indicate that the PCF may receive a notification from the AF if the status of electrical supply service has an impact to the PCF with that identity (e.g., PCF ID) and/or PCF with that location information (e.g., PCF located in the serving area 1).

The PCF may receive a first message 1805 from a network function, wherein the first message may comprise a parameter indicating status of electrical supply service for the network. The network function may comprise an AF, an OAM, a NWDAF, and/or the like. The network function may comprise an authentication, authorization, and accounting (AAA) server. For example, the PCF may receive the first message from an AAA server of a data network. The data network may be part of the power system. For example, the power system may detect a fault of power line/power equipment, and the power system may be unable to provide electrical supply service to the network. For example, the AF (e.g., AF of the power system) may send a message (e.g., Diameter AA-Request (AAR) command, HTTP POST, HTTP PUT, Npcf_PolicyAuthorization_Create) to the PCF indicating status of electrical supply service for the network. The Diameter AA-Request command may comprise at least one of: a first parameter (e.g., Status of Electrical Supply Service); a second parameter (e.g., Electric Fault Location); a third parameter (e.g., Failure Recovery Time), and/or a fourth parameter (e.g., Affected Network). The first parameter/Status of Electrical Supply Service may indicate status of electrical supply service for the network. The definition/content of the status of electrical supply service for the network may be similar to the definition/content of the status of electrical supply service for the network as described herein. For example, the status of electrical supply service for the network may comprise failure or recovery of the electrical supply service for the network. The status of electrical supply service for the network may comprise degree (e.g., percentage, power quantity) of failure or recovery of the electrical supply service for the network.

A parameter may indicate a location of a power line/power equipment affected a power supply failure/reduction. For example, the second parameter/Electric Fault Location may indicate location of the power line/power equipment affected by the Status of Electrical Supply Service. The second parameter/Electric Fault Location may indicate location of faulty power line/power equipment. The second parameter/Electric Fault Location may indicate location of recovered power line/power equipment. The second parameter/Electric Fault Location may indicate a geography location of the faulty/recovered power line/power equipment. The second parameter/Electric Fault Location may indicate a geography location and/or an area of the faulty/recovered power line/power equipment. The second parameter/Electric Fault Location may indicate a Global Positioning System (GPS) coordinate (e.g., latitude and longitude) and/or an area with a radius (e.g., 5km) taking the GPS coordinate as the origin. The second parameter/Electric Fault Location may indicate a location area, a routing area, and/or tracking area(s). A location area (LA) may comprise adjacent radio cells in a radio access network, typically 30 or 40, which are grouped together into one location area. A tracking area (TA) may be a set of cells. A TA may be a logical concept of an area where a user/wireless device can move around without updating the mobility management entity (MME)/AMF. The tracking areas may be grouped into lists of tracking areas (TA lists), which may be configured on wireless device. The routing area (RA) may be the counterpart of the location area (LA) in packet-switched (PA) networks. The RA is usually a smaller area compared to the LA because using multimedia services requires more frequent paging messages. A packet switched network may follow networking protocols that divide messages into packets, for example, before sending them.

The second parameter/Electric Fault Location may be vector data of location information, wherein the vector data may use points, lines, and/or polygons to represent features such as cities, roads, mountains, and bodies of water that are mapped and stored in geographic information systems (GIS). The second parameter/Electric Fault Location may be raster data of location information, wherein the raster data may use cells to represent spatial features. An example would be remote satellite data.

The third parameter/Failure Recovery Time may indicate a recovery time of the faulty power line/power equipment, for example, a time when the faulty power line/power equipment will be recovered. The third parameter / Failure Recovery Time may indicate a time when the power system is able to resume/continue providing electrical supply service for the network. The recovery time may indicate a value of month, a value of day, a value of hours, a value of minutes, and/or a value of seconds. The recovery time may indicate a time in seconds relative to 00:00:00 on 1 January 1900 (or 1970) (calculated as continuous time without leap seconds and traceable to a common time reference) where binary encoding of the integer part is in the first 32 bits and binary encoding of the fraction part in the last 32 bits. The fraction part is expressed with a granularity of 1 /2^{∗∗}32 second. The fourth parameter/Affected Network may indicate at least one network (e.g., PLMN) and/or at least one network function (e.g., PCF, SMF, UPF, AMF, (R)AN) of the at least one network affected by the status of the electrical power supply (e.g., faulty power line/power equipment). The status of electrical supply service may impact part of the network, and/or all network functions of the network.

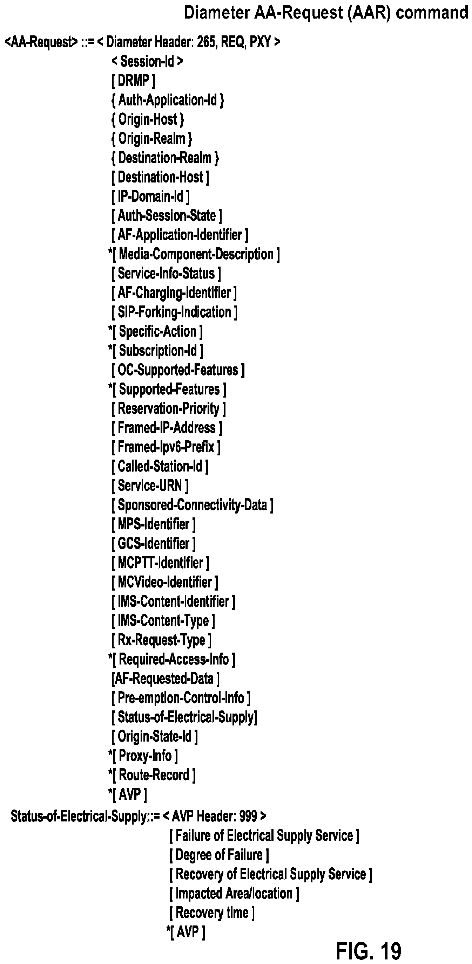

FIG. 19 shows an example of a Diameter AA-Request (AAR) message. The messge may comprise a Status-of-Electrical-Supply AVP/parameter. The Status-of-Electrical-Supply AVP may comprise at least one AVP/parameter: Failure of Electrical Supply Service; Degree of Failure; Recovery of Electrical Supply Service; Impacted Area/location; Recovery time; and/or the like. As shown in FIG. 19, the Diameter AA-Request message may comprise one or more AVPs/parameters sending from the AF to the PCF.

As shown in FIG. 18, the PCF may take one or more actions, for example, based on (e.g., after or in response to) the message being received. For example, the PCF may send a message (e.g., Service Continue Capability Query) 1815 to a second network function (e.g., OAM, NWDAF) indicating querying service continue capability of the network and/or network function (s). The Service Continue Capability Query message may comprise at least one of: the first parameter/Status of Electrical Supply Service; the second parameter/Electric Fault Location; the third parameter/Failure Recovery Time; and/or the fourth parameter/Affected Network. The PCF may receive a response message (e.g., Service Continue Capability Query Response) 1821 from the second network function, wherein the Service Continue Capability Query Response message may indicate service continue capability of the network. For example, the Service Continue Capability Query Response message may comprise a parameter (e.g., service continue capability of the network), wherein the parameter/service continue capability of the network may indicate capability of the network to continue to provide communication services, for example, after losing electrical supply service from the power system. The parameter/service continue capability of the network may indicate capability of at least one network function (e.g., PCF, SMF, UPF, AMF, (R)AN) of the network to continue to provide communication services, for example, after losing electrical supply service from the power system. The parameter/service continue capability of the network may comprises at least one of: time for service continue; area for service continue; and/or backup sources of electric power. The time for service continue may indicate a time value that how long the network can continue to provide communication services, for example, after losing electrical supply service from the power system. The time for service continue may indicate that the network may continue to provide communication services for 3 days, for example, after losing electrical supply service from the power system. The time value may indicate a value of month, a value of day, a value of hours, a value of minutes, and/or a value of seconds. The time value may indicate a time in seconds relative to 00:00:00 on 1 January 1900 (or 1970). The area for service continue may indicate the area/location of the network can continue to provide communication services, for example, after losing electrical supply service from the power system. The definition/content of the area/location may be similar to the definition/content of the area/location of the second parameter/Electric Fault Location as described herein. The backup sources of electric power may indicate type of backup electric power used by the network, for example, after losing electrical supply service from the power system. For example, the backup sources of electric power may comprise at least one of: a battery; an uninterruptible power supply (UPS); a diesel; a solar panel; and/or the like.

The PCF may send a response message (e.g., Diameter AA-Answer (AAA) command) 1813 to the network function (e.g., AF, AAA), for example, based on (after or in response to) the message being received. The Diameter AA-Answer (AAA) command may comprise the parameter/service continue capability of the network. The network function may take some actions, for example, based on (after or in response to) the message being received. For example, based on the parameter/service continue capability of the network, the network function/power system may recover the electrical supply service as soon as possible. The power system may provide additional backup sources of electric power for the network. Optionally, the network function/power system may send, to the PCF, a message 1805 with an updated status of electrical supply service, based on the actions taken by the network function/power system. The PCF may be informed of the updated status, based on the message being received.

The PCF may determine affected network(s) and/or network function(s) by the Status of Electrical Supply Service, for example, based on the first message/ Diameter AA-Request command. The PCF may determine (e.g., based on the first parameter/Status of Electrical Supply Service, the second parameter/Electric Fault Location, the third parameter/Failure Recovery Time, and/or the fourth parameter/Affected Network) which PLMN is affected by the status of electrical supply service. The PCF may determine which SMF/UPF/AMF/(R)AN are affected by failure of electrical supply service.

The PCF may determine at least one affected PLMN, SMF, UPF, AMF and/or base station, for example, based on the fourth parameter/Affected Network indicating affected network and/or network functions (SMFs, UPFs, AMFs, (R)ANs). For example, based on the second parameter/Electric Fault Location and/or the location of PLMNs, SMFs, UPFs, AMFs and/or base stations, the PCF may determine PLMN 1, PLMN 2, SMF 1, SMF 2, AMF 1, AMF 2, (R)AN 1, and/or (R)AN 2 are affected by the faulty power equipment.

The PCF may determine at least one wireless device affected by the Status of Electrical Supply Service, for example, based on the first parameter/Status of Electrical Supply Service, the second parameter/Electric Fault Location, the third parameter/Failure Recovery Time, and/or the fourth parameter/Affected Network. Based on the fourth parameter/Affected Network and/or user location information of the at least one wireless device, the PCF may determine location of the affected network and associate the affected network with the at least one wireless device, and the PCF may determine the at least one (affected) wireless device affected by the status of electrical supply service.

As indicated in box 18100, the PCF may determine at least one policy and charging control (PCC) rule for at least one (affected) wireless device, for example, based on the first message/ Diameter AA-Request command. Based on the first parameter/Status of Electrical Supply Service, the second parameter/Electric Fault Location, the third parameter/Failure Recovery Time, and/or the fourth parameter/Affected Network, the PCF may determine at least one PCC rule for the at least one wireless device. The PCF may determine to limit type of service for the affected/associated wireless devices by at least one PCC rule, for example, based on the first parameter/Status of Electrical Supply Service indicating failure of electrical supply service. The at least one PCC rule may indicate allowed service for the at least one wireless device, wherein the at least one wireless device is in the affected area by the status of electrical supply service. The at least one PCC rule may comprise at least one application identifier identifying the allowed service. The at least one PCC rule may comprise at least one QoS flow identifier (QFI) for the allowed service. The at least one PCC rule may comprise at least one service data flow (SDF) template for the allowed service. The at least one PCC rule may comprise at least one QoS parameters for the allowed service, wherein the at least one QoS parameters comprises at least one of: 5QI; QCI; ARP; RQA; GFBR; MFBR; maximum packet loss; and/or Reflective QoS Indication (RQI). The RQI may indicate a same packet scheduling is used for uplink and downlink. For example, based on a failure of the electrical power supply service, the PCF may determine a smaller bandwidth (e.g., GFBR, MFBR) for the at least one QoS parameters for the allowed service. The PCF may determine a normal/bigger bandwidth (e.g., GFBR, MFBR) for the at least one QoS parameters for the allowed service, for example, based on a recovery of the electrical power supply service. The at least one PCC rule is for per (affected) area, cell, routing area, and/or a physical location.

A service data flow (SDF) may be an aggregate set of packet flows carried through the UPF that matches a service data flow template. The service data flow template may be set of service data flow filters in a PCC Rule or an application identifier in a PCC rule referring to an application detection filter in the SMF and/or in the UPF, required for defining a service data flow. A service data flow filter may be a set of packet flow header parameter values/ranges used to identify one or more of the packet flows in the UPF. A QoS Flow may be the finest granularity of QoS differentiation in the PDU Session. A QoS flow may be similar to a bearer in 4G/LTE. A QoS flow identifier (QFI) may be used to identify a QoS Flow in the 5G System. User Plane traffic with the same QFI within a PDU Session may receive the same traffic forwarding treatment (e.g., scheduling, admission threshold). The QFI may be carried in an encapsulation header on N3 interface (and/or N9 interface), for example, without any changes to the e2e packet header. QFI may be used for all PDU Session Types. The QFI may be unique within a PDU Session. The QFI may be dynamically assigned or may be equal to the 5QI. Within the 5GS, a QoS Flow may be controlled by the SMF and may be preconfigured, and/or established via the PDU Session Establishment procedure, and/or the PDU Session Modification procedure.

The at least one PCC rule may comprise at least one of: at least one charging control rule; at least one policy control rule; at least one usage monitoring control rule; at least one application detection and control rule; at least one traffic steering control rule; and/or at least one service data flow detection information (e.g., service data flow template). The at least one charging control rule may comprise at least one of: an information element indicating a charging method/charging type; an information element indicating at least one charging rate; and/or an information element indicating at least one identifier or address of a charging function (CHF). The charging method/charging type may comprise at least one of: online charging; offline charging; and/or converged charging. For example, the PCF may determine the at least one charging control rule for the allowed service, wherein the at least one charging control rule may comprise at least one charging rate for the allowed service. The at least one charging control rule may comprise a charging method (e.g., offline charging) for the allowed service. The at least one charging control rule may comprise an address of a CHF for the allowed service.

The at least one policy control rule may comprise at least one QoS control rule and/or at least one gating control rule. The policy control rule may be used for policy control, where the at least one QoS control rule may be used for QoS control, and the at least one gating control rule may be used for gating control. The QoS control rule may be used to authorize QoS on a service data flow and/or a QoS flow. The gating control rule may be used to discard packets that don't match service data flow of the at least one gating control rule and/or associated at least one PCC rules. The usage monitoring control rule may be used to monitor, both volume and time usage, and report the accumulated usage of network resources. The application detection and control rule may comprise a request to detect a specified application traffic, report to a PCF on a start or stop of application traffic and to use a specified enforcement and charging actions. The traffic steering control rule may be used to activate/deactivate traffic steering policies for steering a subscriber's traffic to appropriate operator or 3rd party service functions (e.g., NAT, antimalware, parental control, DDoS protection) in an (S)Gi-LAN. The service data flow detection information (e.g., service data flow template) may comprise a list of service data flow filters or an application identifier that references the corresponding application detection filter for the detection of the service data flow. The service data flow detection information (e.g., service data flow template) may comprise combination of traffic patterns of the Ethernet PDU traffic.

For example, the PCF may send a message (e.g., Npcf_SMPolicyControl_UpdateNotify, SM Policy Modification Request) 1819 to at least one affected SMF, where the at least one affected SMF may be affected by the status (e.g., failure) of electrical supply service. The Npcf_SMPolicyControl_UpdateNotify message may comprise the at least one PCC rule. The Npcf_SMPolicyControl_UpdateNotify message may comprise at least one of: the first parameter/Status of Electrical Supply Service, the second parameter/Electric Fault Location, the third parameter/Failure Recovery Time, and/or the fourth parameter/Affected Network. For example, the fourth parameter/Affected Network may indicate affected network (e.g., PLMN) and/or affected network functions (e.g., AMFs, (R)ANs). The Npcf_SMPolicyControl _UpdateNotify message may comprise at least one of: identity of the at least one wireless device affected by the status of the electrical supply service; an identifier of at least one PDU session associated with the at least one wireless device; a network slice identifier (e.g., S-NSSAI) associated with the at least one wireless device; a DNN associated with the at least one wireless device. The PCF may limit type of network slice (e.g., only URLLC network slice is allowed for failure of electrical supply service), for example, based on the first parameter/Status of Electrical Supply Service.

The identity of the at least one wireless device may comprise at least one of: a Generic Public Subscription Identifier (GPSI); a Subscription Permanent Identifier (SUPI); a Subscription Concealed Identifier (SUCI); a 5G Globally unique Temporary Identity (5G-GUTI); a permanent equipment identifier (PEI); an IP address; an application level identifier to identify the at least one wireless device; an external identifier of the at least one wireless device; and/or the like to identify the at least one wireless device. The GPSI may comprise a Mobile Station Integrated Services Digital Network (MSISDN) and/or an external identifier. The SUPI may comprise an International Mobile Subscriber Identity (IMSI) and/or Network Access Identifier (NAI). The PEI may comprise an International Mobile Equipment Identity (IMEI). The IP address may comprise an IPv4 address and/or an IPv6 prefix. For avoiding disclosing the information of the at least one wireless device, the external identifier of the wireless device may be used by an AF (e.g., a 3rd party).

The PCF may determine access and mobility related policy information for allowed services, for example, based on the first parameter/Status of Electrical Supply Service, the second parameter/Electric Fault Location, the third parameter/Failure Recovery Time, and/or the fourth parameter/Affected Network. The access and mobility related policy information may comprise at least one of: UE-AMBR; List of UE-Slice-MBR; List of allowed TAIs; List of non-allowed TAIs; Maximum number of allowed TAIs; RFSP Index for Allowed NSSAI; Index to RAT/Frequency Selection Priority (RFSP Index); RFSP Index for Target NSSAI; 5G access stratum time distribution indication; Uu interface time synchronization error budget; DNN replacement of unsupported DNNs; list of S-NSSAIs; and/or Per S-NSSAI: List of DNNs. UE-AMBR may indicate aggregated maximum bit rate applies for a wireless device. The UE-AMBR may limit the aggregated bit rate across all Non-GBR QoS Flows of a wireless device in the serving network. The List of UE-Slice-MBR may indicate List of UE-Slice-MBR (UL/DL) that each applies to the network slice of the wireless device. The List of allowed TAIs may indicate the TAIs where the wireless device is allowed to be registered. The List of non-allowed TAIs may indicate the TAIs where the wireless device is not allowed to be registered. The Maximum number of allowed TAs may indicate the maximum number of allowed Tracking Areas, the list of TAI is defined in the AMF and not explicitly provided by the PCF. The RFSP Index for Allowed NSSAI and RFSP Index for Target NSSAI may indicate the RFSP Index for radio resource management functionality. The DNN replacement of unsupported DNNs may indicate that the AMF may contact the PCF for replacement of an unsupported DNN requested by the wireless device. The List of S-NSSAIs may define the S-NSSAIs, valid in the serving network, of the Allowed NSSAI that contain DNN candidates for replacement by PCF. The List of DNNs defines the DNN candidates for which the AMF may contact the PCF for replacement, for example, if such a DNN is requested by a wireless device. The 5G access stratum time distribution may indicate the 5G access stratum time distribution parameters to be indicated to the NG-RAN via AMF.

The PCF may determine limited allowed service in access and mobility related policy information for at least one wireless device, for example, based on the first parameter/Status of Electrical Supply Service indicating failure of electrical supply service. For example, the PCF may determine to decrease UE-AMBR and/or List of UE-Slice-MBR. For example, the PCF may determine to limit List of allowed TAIs and/or Maximum number of allowed TAIs because of failure of electrical supply service.

The PCF may determine to provide normal service in access and mobility related policy information for at least one wireless device, for example, based on the first parameter/Status of Electrical Supply Service indicating recovery of electrical supply service. The PCF may determine to increase UE-AMBR and/or List of UE-Slice-MBR. The PCF may determine to increase List of allowed TAIs and/or Maximum number of allowed TAIs because of recovery of electrical supply service.

The access and mobility related policy information may comprise at least one of: the first parameter/Status of Electrical Supply Service; the second parameter/Electric Fault Location; the third parameter/Failure Recovery Time; and/or the fourth parameter/Affected Network. The PCF may send a message (e.g.,
Npcf_AMPolicyControl_UpdateNotify, AM Policy Modification Request) 1817 to at least one affected AMF, where the at least one affected AMF may be affected by the status (e.g., failure) of electrical supply service. The Npcf_AMPolicyControl _UpdateNotify message may comprise access and mobility related policy information. The Npcf_AMPolicyControl_UpdateNotify message may comprise at least one of: the first parameter/Status of Electrical Supply Service; the second parameter/Electric Fault Location; the third parameter/Failure Recovery Time; and/or the fourth parameter/Affected Network. The fourth parameter/Affected Network may indicate affected network (e.g., PLMN) and/or affected network functions (e.g., AMFs, (R)ANs).

The Npcf_AMPolicyControl_UpdateNotify message 1817 may comprise at least one of: identity of the at least one wireless device affected by the status of the electrical supply service; an identifier of at least one PDU session associated with the at least one wireless device; a network slice identifier (e.g., S-NSSAI) associated with the at least one wireless device; a DNN associated with the at least one wireless device. The PCF may limit type of network slice (e.g., only URLLC network slice is allowed for failure of electrical supply service), for example, based on the first parameter/Status of Electrical Supply Service.

The at least one affected SMF may take one or more actions, for example, based on (after or in response to) the message being received from the PCF. The at least one affected SMF may determine at least one affected AMF and/or at least one base station by the status of the electrical supply service, for example, based on the first parameter/Status of Electrical Supply Service, the second parameter/Electric Fault Location, the third parameter/Failure Recovery Time, and/or the fourth parameter/Affected Network. The at least one affected SMF may determine at least one affected AMF and/or base station, for example, based on the fourth parameter/Affected Network indicating affected network and/or network functions (AMFs, (R)ANs). The at least one affected SMF may determine the at least one affected AMF and/or base station, for example, based on the second parameter/Electric Fault Location and/or the location of AMF(s) and/or base station(s).

As shown in box 18300, the SMF may determine at least one user plane rule associated with at least one PDU session for the at least one wireless device, for example, based on the at least one PCC rule. The at least one user plane rule comprise at least one of: the first parameter/Status of Electrical Supply Service; the second parameter/Electric Fault Location; the third parameter/Failure Recovery Time; and/or the fourth parameter/Affected Network.

The at least one user plane rule may comprise at least one of: at least one packet detection rule; at least one forwarding action rule; at least one QoS enforcement rule; and/or at least one usage reporting rule. The at least one packet detection rule may comprise data/traffic packet detection information, for example, one or more match fields against which incoming packets are matched and may use other user plane rules (e.g., at least one forwarding action rule, at least one QoS enforcement rule, and/or at least one usage reporting rule) to the data/traffic packets matching the packet detection rule. The at least one forwarding action rule may comprise an use action parameter, which may indicate whether a UP function may forward, duplicate, drop and/or buffer the data/traffic packet respectively. The at least one usage reporting rule may be used to measure the network resources usage in terms of traffic data volume, duration (e.g., time) and/or events, according to a measurement method in the usage reporting rule. The event may indicate a start of time service and/or a stop of time service. The at least one QoS enforcement rule may comprise instructions to request the UP function to perform QoS enforcement of the user plane traffic.

The SMF may determine a packet detection rule based on the service data flow detection information (e.g., service data flow template). The SMF may determine a forwarding action rule based on the policy control rule. The SMF may determine a usage reporting rule based on the usage monitoring control rule.

For example, the SMF may select a UPF and send to the UPF a message (e.g., N4 session establishment/modification request) 1835 comprising the at least one user plane rule. The UPF may install the user plane rules received from the SMF, for example, based on (after or in response to) receiving the message from the SMF. The UPF may send to the SMF a response message (e.g., N4 session establishment/modification response), and enforce the user plane rules.

The UPF may take one or more actions based on the at least one user plane rule, for example, based on (after or in response to) the message being received. For example, the UPF may allocate resources for the at least one user plane rule. For example, the UPF may schedule uplink and/or downlink data packet based on the at least one user plane rule. For example, the UPF may enforce the at least one user plane rule. For example, the UPF may enforce the at least one packet detection rule by matching a user data/traffic packet with service data flow template (e.g., service data flow filters and/or application identifiers) and may use other user plane rules (e.g., forwarding action rule, QoS enforcement rule, and usage reporting rule) to the data/traffic packets matched the packet detection rule. The UPF may enforce the at least one forwarding action rule by forwarding, duplicating, dropping, and/or buffering a data/traffic packet respectively. The UPF may redirect the traffic to a web portal of the operator. The UPF may enforce the at least one usage reporting rule by measuring network resources usage in terms of traffic data volume, duration (e.g., time) and/or events, according to a measurement method in the usage reporting rule. The UPF may report the network resources usage to the SMF, for example, if the quota/threshold is (are) reached, and/or event and/or another trigger is (are) met. The UPF may enforce the at least one QoS enforcement rule by using at least one of QoS parameters including 5QI, ARP, MBR, GBR to a service data flow. The UPF may enforce the at least one QoS enforcement rule by using at least one of QoS parameters including Session AMBR and default 5QI/ARP combination to a PDU session.

The at least one affected SMF may determine at least one wireless device affected by the Status of Electrical Supply Service, for example, based on the first parameter/Status of Electrical Supply Service, the second parameter/Electric Fault Location, the third parameter/Failure Recovery Time, and/or the fourth parameter/Affected Network. For example, based on the fourth parameter/Affected Network and/or user location information of the at least one wireless device, the at least one affected SMF may determine the at least one (affected) wireless device.

The at least one affected SMF may determine at least one PDU session associated with the at least one wireless device affected by the Status of Electrical Supply Service, for example, based on the first parameter/Status of Electrical Supply Service, the second parameter/Electric Fault Location, the third parameter/Failure Recovery Time, and/or the fourth parameter/Affected Network. The at least one affected SMF may determine at least one network slice associated with the at least one wireless device affected by the Status of Electrical Supply Service. The at least one affected SMF may determine to limit number of PDU session and/or number of network slice, for example, based on the first parameter/Status of Electrical Supply Service. For example, the at least one affected SMF may determine that only one PDU session and/or one network slice is allowed for the at least one wireless device considering failure of electrical supply service. The at least one affected SMF may determine to limit type of PDU session and/or type of network slice, for example, based on the first parameter/Status of Electrical Supply Service. For example, the at least one affected SMF may determine that only IP type of PDU session and/or URLLC network slice is allowed for the at least one wireless device considering failure of electrical supply service.

The SMF may determine/derive at least one QoS policy/parameters for the allowed services, for example, based on the first parameter/Status of Electrical Supply Service, the second parameter/Electric Fault Location, the third parameter/Failure Recovery Time, the fourth parameter/Affected Network, and/or the at least one PCC rule. The at least one QoS policy/parameters may comprise at least one QoS parameters including 5QI/QCI, ARP, RQA, GFBR, MFBR, maximum packet loss, RQI, and/or the like. The at least one QoS policy/parameters determined/derived by the SMF (e.g., 5QI/QCI, ARP, RQA, GFBR, MFBR, maximum packet loss, RQI) may be the same as the at least one QoS parameter in the at least one PCC rule.

The SMF may determine allowed service for the at least one (affected) wireless device, for example, based on the first parameter/Status of Electrical Supply Service, the second parameter/Electric Fault Location, the third parameter/Failure Recovery Time, the fourth parameter/Affected Network, and/or the at least one PCC rule. For example, the SMF may determine allowing metering service based on failure of electrical supply service. For example, the SMF may determine allowing video service based on recovery of electrical supply service.

The at least one affected SMF may send a message (e.g., NAS message, PDU Session Modification Command) 1855 to the at least one wireless device. The PDU Session Modification Command message may be sent by the at least one affected SMF to the at least one wireless device via at least one affected AMF and/or at least one affected base station. The PDU Session Modification Command message may comprise at least one of: the first parameter/Status of Electrical Supply Service; the second parameter/Electric Fault Location; the third parameter/Failure Recovery Time; the fourth parameter/Affected Network; and/or the at least one QoS policy/parameters. The PDU Session Modification Command may comprise at least one of: PDU Session ID; QoS rule(s); QoS Flow level QoS parameters if needed for the QoS Flow(s) associated with the QoS rule(s), QoS rule operation and QoS Flow level QoS parameters operation, and/or Session-AMBR. The QoS rule(s), QoS Flow level QoS parameters if needed for the QoS Flow(s) associated with the QoS rule(s), QoS rule operation and QoS Flow level QoS parameters operation may comprise the at least one QoS policy/parameters.

The SMF may send a message (e.g., Namf_Communication_N1N2MessageTransfer) 1837 to the at least one affected AMF (e.g., N11 as shown in FIG. 17). The Namf_Communication_N1N2MessageTransfer message may comprise at least one of: the first parameter/Status of Electrical Supply Service; the second parameter/Electric Fault Location; the third parameter/Failure Recovery Time; and/or the fourth parameter/Affected Network. The Namf_Communication_N1N2MessageTransfer message may comprise N2 SM information and/or N1 SM container. The N2 SM information may comprise information sent to the base station. The N1 SM container may comprise information sent to the wireless device. The N2 SM information may comprise at least one of: PDU Session ID; QFI(s); QoS Profile(s); Alternative QoS Profile(s); Session-AMBR; CN Tunnel Info(s); QoS Monitoring indication; QoS Monitoring reporting frequency; and/or Time Sensitive Communication Assistance Information (TSCAI(s)). The N1 SM container may comprise the PDU Session Modification Command message.

The at least one affected AMF may take one or more actions, for example, based on (after or in response to) the message being received from the PCF and/or the at least one affected SMF. The at least one affected AMF may determine at least one affected base station by the status of the electrical supply service, for example, based on the first parameter/Status of Electrical Supply Service, the second parameter/Electric Fault Location, the third parameter/Failure Recovery Time, and/or the fourth parameter/Affected Network. The at least one affected AMF may determine at least one affected base station, for example, based on the fourth parameter/Affected Network indicating affected network and/or network functions (e.g., (R)ANs). The at least one affected AMF may determine the at least one affected base station, for example, based on the second parameter/Electric Fault Location and/or the location of base station(s).

The at least one affected AMF may determine at least one wireless device affected by the Status of Electrical Supply Service, for example, based on the first parameter/Status of Electrical Supply Service, the second parameter/Electric Fault Location, the third parameter/Failure Recovery Time, and/or the fourth parameter/Affected Network.The at least one affected AMF may determine the at least one (affected) wireless device, for example, based on the fourth parameter/Affected Network and/or user location information of the at least one wireless device.

The at least one affected AMF may send a message (e.g., N2 message, PDU Session Resource Setup) 1857 to the at least one affected base station. The PDU Session Resource Setup message may be associated with the at least one affected wireless device.

The PDU Session Resource Setup message may comprise parameters/information elements received from the PCF and/or the at least one affected SMF. The PDU Session Resource Setup message may comprise at least one of: the first parameter/Status of Electrical Supply Service; the second parameter/Electric Fault Location; the third parameter/Failure Recovery Time; the fourth parameter/Affected Network; the N2 SM information; and/or the N1 SM container (PDU Session Modification Command).

The PDU Session Resource Setup message may comprise at least one of: AMF UE NGAP ID; RAN UE NGAP ID; RAN Paging Priority; NAS-PDU; PDU Session Resource Setup Request List; and/or UE Aggregate Maximum Bit Rate. The PDU Session Resource Setup Request List may comprise list of PDU session(s) to be setup by the at least one affected base station. For example, the PDU Session Resource Setup Request List may comprise at least one of: PDU Session ID (s); S-NSSAI; PDU Session NAS-PDU; and/or PDU Session Resource Setup Request Transfer. The PDU Session NAS-PDU may comprise a NAS message sent from core network (e.g., at least one affected SMF/AMF) to the at least one affected wireless device. The PDU Session Resource Setup Request Transfer may comprise PDU session information to be setup by the base station, wherein the PDU session information may be associated with the at least one affected SMF.

The at least one base station (e.g., (R)AN as shown in FIG. 18) may take one or more actions, for example, based on (after or in response to) the message being received. For example, based on the first parameter/Status of Electrical Supply Service, the second parameter/Electric Fault Location, the third parameter/Failure Recovery Time, and/or the fourth parameter/Affected Network, the at least one affected base station may determine at least one wireless device affected by the Status of Electrical Supply Service. For example, based on the fourth parameter/Affected Network and/or user location information of the at least one wireless device, the at least one affected base station may determine the at least one (affected) wireless device.

The at least one affected base station may send an RRC message (e.g., RRCReconfiguration) 1865 to the at least one affected wireless device. The RRC message may comprise the PDU Session Modification Command message. The RRC message may comprise at least one of: the first parameter/Status of Electrical Supply Service; the second parameter/Electric Fault Location; the third parameter/Failure Recovery Time; and/or the fourth parameter/Affected Network. The RRC message may indicate allowed service. The RRC message may indicate allowed number of PDU session and/or number of network slice. The RRC message may indicate allowed type of PDU session and/or type of network slice.

The at least one wireless device may receive an application level message from the AF via application level signaling. The application level message may comprise at least one of: the first parameter/Status of Electrical Supply Service; the second parameter/Electric Fault Location; the third parameter/Failure Recovery Time;
and/or the fourth parameter/Affected Network.

The at least one wireless device may take one or more actions, for example, based on (after or in response to) the message being received from the at least one affected base station/at least one affected AMF/at least one affected SMF/the AF. The at least one wireless device may use allowed services, for example, based on the RRC message (e.g., the first parameter/Status of Electrical Supply Service, allowed service). The at least one wireless device may use allowed number of PDU session and/or number of network slice. The at least one wireless device may use allowed type of PDU session and/or type of network slice.

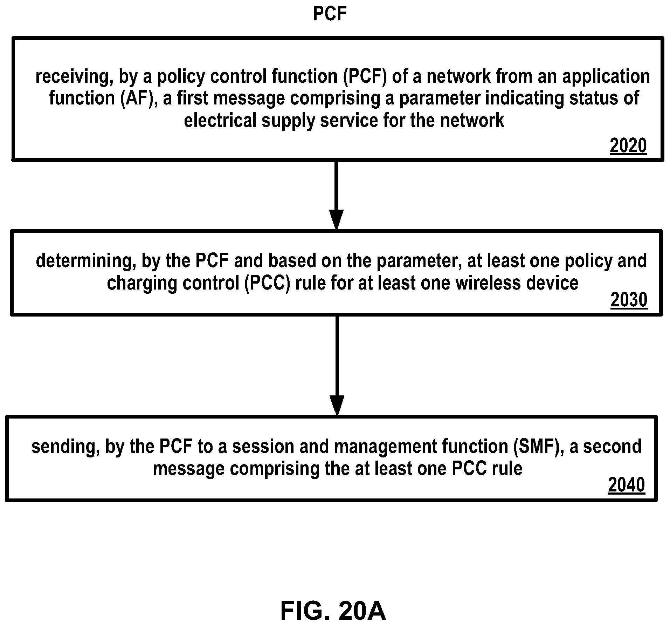

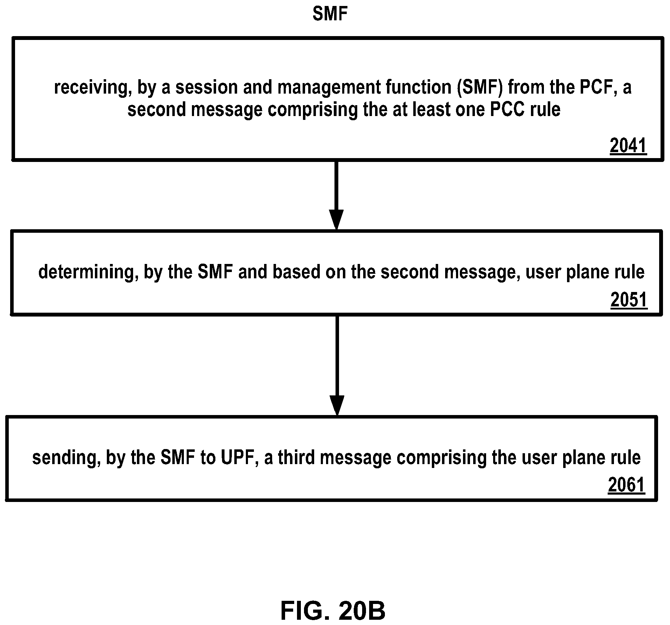

FIG. 20A and FIG. 20B show example methods for communicating information about an electrical supply service. The methods may be performed by one or more of a PCF and/or an SMF. The example actions shown in FIG. 20A may be from the perspective of the PCF. The example actions shown in FIG. 20B may be from the perspective of the SMF. At step 2020 (in FIG. 20A), a PCF of a network may receive, from an AF, a first message comprising a parameter indicating status of electrical supply service for the network. At step 2030, the PCF may determine, based on the parameter, at least one PCC rule for at least one wireless device. At step 2040, the PCF may send (e.g., transmit), to a SMF, a second message comprising the at least one PCC rule. At step 2041 (in FIG. 20B), the SMF may receive, from the PCF, a second message comprising the at least one PCC rule. At step 2051, the SMF may determine user plane rule, based on the second message being received. At step 2061, the SMF may send (e.g., transmit), to a UPF, a third message comprising the user plane rule.

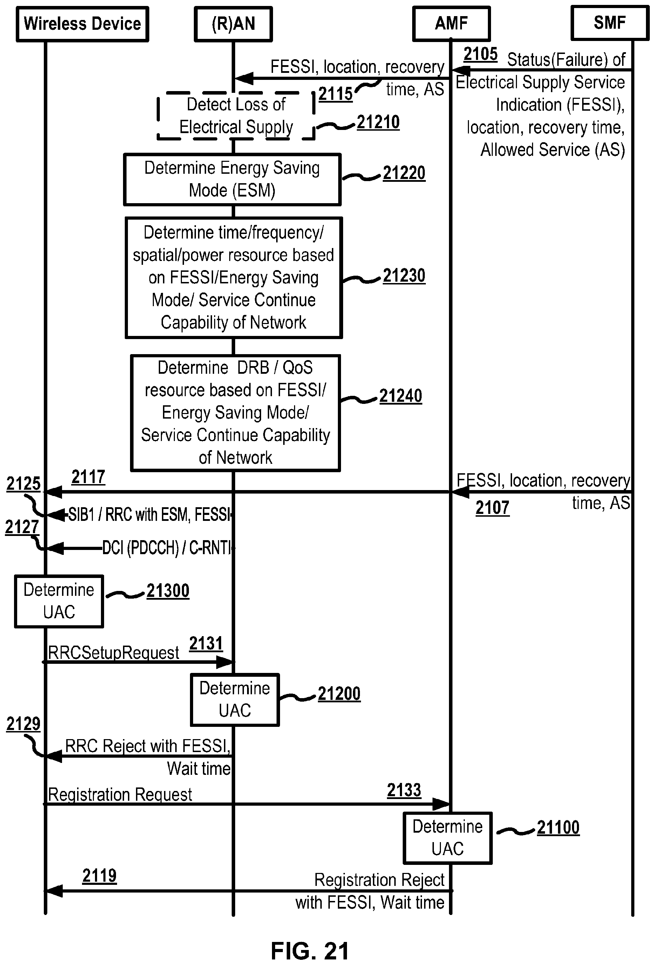

FIG. 21 shows an example of communicating information about an electrical supply service. A base station (e.g., (R)AN as shown in FIG. 21) may receive a first message 2115 from a network function, wherein the first message may comprise a parameter indicating status of electrical supply service for the network. The network function may comprise an AMF, an SMF, an OAM, a NWDAF, an AF, and/or the like. The network function may comprise an authentication, authorization, and accounting (AAA) server. For example, the base station may receive the first message from an AAA server of a data network. The data network may be part of the power system. The power system may detect a fault of power line/power equipment, and the power system may be unable to provide electrical supply service to the network. The base station of the network may be affected by the fault of power line/power equipment. An AF (e.g., AF of the power system) may send a message to the (affected) base station indicating status of electrical supply service for the network. The (affected) base station may receive the first message from an SMF via an AMF (e.g., message 2105 and message 2115 in FIG. 21). The base station may receive the first message (e.g., N2 message, PDU Session Resource Setup) from an AMF. The PDU Session Resource Setup message may comprise at least one of: a first parameter (e.g., Status of Electrical Supply Service); a second parameter (e.g., Electric Fault Location); a third parameter (e.g., Failure Recovery Time), and/or a fourth parameter (e.g., Affected Network). The definition/content of the first parameter/Status of Electrical Supply Service may be similar to the definition/content of the first parameter/Status of Electrical Supply Service as described in FIG. 18. The definition/content of the second parameter/Electric Fault Location may be similar to the definition/content of the second parameter/Electric Fault Location as described in FIG. 18. The definition/content of the third parameter/Failure Recovery Time may be similar to the definition/content of the third parameter/Failure Recovery Time as described in FIG. 18. The definition/content of the fourth parameter/Affected Network may be similar to the definition/content of the fourth parameter/Affected Network as described in FIG. 18. The PDU Session Resource Setup message may be associated with at least one (affected) wireless device affected by the status of the electrical supply service.

The PDU Session Resource Setup message may comprise parameters/information elements received from the SMF. The PDU Session Resource Setup message may comprise at least one of: the first parameter/Status of Electrical Supply Service; the second parameter/Electric Fault Location; the third parameter/Failure Recovery Time; the fourth parameter/Affected Network; the N2 SM information; and/or the N1 SM container (PDU Session Modification Command), such as described with respect to FIG. 18.

The PDU Session Resource Setup message may comprise at least one of: AMF UE NGAP ID; RAN UE NGAP ID; RAN Paging Priority; NAS-PDU; PDU Session Resource Setup Request List; and/or UE Aggregate Maximum Bit Rate. The PDU Session Resource Setup Request List may comprise list of PDU session(s) to be setup by at least one affected base station. For example, the PDU Session Resource Setup Request List may comprise at least one of: PDU Session ID (s); S-NSSAI; PDU Session NAS-PDU; and/or PDU Session Resource Setup Request Transfer. The PDU Session NAS-PDU may comprise a NAS message sent from core network (e.g., at least one affected SMF/AMF) to the at least one affected wireless device. The PDU Session Resource Setup Request Transfer may comprise PDU session information to be setup by the base station, wherein the PDU session information may be associated with the at least one affected SMF.

The base station may detect status of electrical supply service of the network (e.g., the base station). For example, as shown in box 21210, the base station may detect failure/loss of electrical supply service. For example, the base station may detect recovery of electrical supply service. The (affected) base station may take one or more actions, for example, based on (after or in response to) the message being received, and/or based on (after or in response to) detecting status of electrical supply service. For example, based on detected status of electrical supply service, the first parameter/Status of Electrical Supply Service, the second parameter/Electric Fault Location, the third parameter/Failure Recovery Time, and/or the fourth parameter/Affected Network, the (affected) base station may determine at least one wireless device affected by the Status of Electrical Supply Service. For example, based on detecting status of electrical supply service by the (affected) base station, the fourth parameter/Affected Network and/or user location information of the at least one wireless device, the (affected) base station may determine the at least one (affected) wireless device.

As shown in box 21220, the (affected) base station may determine an energy saving mode for the at least one (affected) wireless device, for example, based on detected status of electrical supply service, the first parameter/Status of Electrical Supply Service, the second parameter/Electric Fault Location, the third parameter/Failure Recovery Time, and/or the fourth parameter/Affected Network, service continue capability of the network. The (affected) base station may determine a fifth parameter/Energy Saving Mode indicating an energy saving mode for the (affected) base station and/or the at least one (affected) wireless device. The energy saving mode may indicate network (e.g., the base station) energy consumption is decreased. The energy saving mode may indicate the base station decreases time resource for the at least one (affected) wireless device. The energy saving mode may indicate the base station decreases frequency resource for the at least one (affected) wireless device. The energy saving mode may indicate the base station decreases spatial resource for the at least one (affected) wireless device. The energy saving mode may indicate the base station reduce power for the at least one (affected) wireless device. The service continue capability of the network may comprise at least one of: time for service continue; area for service continue; and/or backup sources of electric power. The definition/content of the service continue capability of the network may be similar to the definition/content of the service continue capability of the network such as described with respect to FIG. 18.

As shown in box 21230 and box 21240, the (affected) base station may determine time resource, frequency resource, spatial resource, power resource, and/or DRB/QoS resource for the at least one (affected) wireless device, for example, based on detected status of electrical supply service, the first parameter/Status of Electrical Supply Service, the second parameter/Electric Fault Location, the third parameter/Failure Recovery Time, the fourth parameter/Affected Network, the fifth parameter/Energy Saving Mode, and/or service continue capability of the network. The (affected) base station may determine to limit/decrease the time resource, frequency resource, spatial resource, power resource, and/or DRB/QoS resource for the at least one (affected) wireless device, for example, based on failure of electrical supply service. The (affected) base station may determine to increase the time resource, frequency resource, spatial resource, power resource, and/or DRB/QoS resource for the at least one (affected) wireless device, for example, based on recovery of electrical supply service.

The (affected) base station may send a message (e.g., MIB message, SIB message, RRC message, RRCReconfiguration) 2125 to the at least one (affected) wireless device, the message may indicate the energy saving mode and/or status of electrical supply service. The at least one (affected) wireless device may be a common/general wireless device, and the common/general wireless device may be used for any kind of application services. Referring to FIG. 15, the (affected) base station may send a SIB/MIB message to the common/general wireless device indicating energy saving mode and/or status of electrical supply service. The at least one (affected) wireless device may be a specific purpose wireless device, for example, a wireless device dedicated for smart energy. The (affected) base station may send an RRC message to the specific purpose wireless device. For example, the (affected) base station may send a RRCReconfiguration message (not shown) to the at least one (affected) wireless device, the RRCReconfiguration message may comprise at least one of: the first parameter/Status of Electrical Supply Service; the second parameter/Electric Fault Location; the third parameter/Failure Recovery Time; the fourth parameter/Affected Network; and/or the fifth parameter/Energy Saving Mode. The RRC/SIB/MIB message may indicate allowed service for the at least one (affected) wireless device. The RRC/SIB/MIB message may indicate allowed number of PDU session and/or number of network slice. The RRC/SIB/MIB message may indicate allowed type of PDU session and/or type of network slice.

The (affected) base station may send a second message 2127 to the at least one (affected) wireless device. The second message may comprise at least one of: Downlink Control Information (DCI), and/or a Cell Radio Network Temporary Identifier (C-RNTI). The second message may be a MAC layer message. The second message may be a physical layer message. The (affected) base station may send the second message to the wireless device via a PDCCH. The m may indicate time and/or frequency resource for the allowed services. The C-RNTI may indicate an RRC Connection and scheduling, wherein the RRC Connection and scheduling are dedicated to the at least one (affected) wireless device.

The at least one (affected) wireless device may take one or more actions, for example, based on (after or in response to) the message being received. The at least one (affected) wireless device may use allowed services, for example, based on the RRC message (e.g., the first parameter/Status of Electrical Supply Service, allowed service). The at least one (affected) wireless device may use allowed number of PDU session and/or number of network slice. The at least one (affected) wireless device may use allowed type of PDU session and/or type of network slice. The at least one (affected) wireless device may use unified access control (UAC). As shown in box 21300, the at least one (affected) wireless device may determine UAC. The UAC may comprise a set of mechanism (algorithm) to determine whether to allow a wireless device for a specific (allowed) services or state changes. For example, the at least one (affected) wireless device may receive an indication from application layer requesting an eMBB network slice, the at least one (affected) wireless device may determine that the allowed network slice/allowed service does not comprise the eMBB network slice, so, by using the UAC, the at least one (affected) wireless device may reject to the application layer and may not initiate a PDU session for the eMBB network slice.

The at least one (affected) wireless device may send an RRC request message 2131 to the (affected) base station requesting an RRC connection for a data service/a PDU session/a network slice. As shown in box 21200, the (affected) base station may determine UAC control for the at least one (affected) wireless device, for example, based on (after or in response to) the message being received, and based on the status of electrical supply service of the network (e.g., the affected base station). The status of electrical supply service of the network may be received by the (affected) base station from the AMF. The status of electrical supply service of the network may be detected by the (affected) base station. The UAC control may allow the RRC connection for the data service/the PDU session/the network slice. The UAC control may not allow the RRC connection for the data service/the PDU session/the network slice. The (affected) base station may not allow data service for the at least one (affected) wireless device, for example, based on failure of electrical supply service. The data service may provide data downloading web access, video service and other data packet service for the at least one (affected) wireless device. The (affected) base station may send an RRC response message to the at least one (affected) wireless device, for example, based on the determining. The RRC response message may indicate accepting the RRC request. For example, the RRC response may be a RRCReconfiguration message, wherein the RRCReconfiguration message may comprise at least one of: the first parameter/Status of Electrical Supply Service; the second parameter/Electric Fault Location; the third parameter/Failure Recovery Time; the fourth parameter/Affected Network; and/or the fifth parameter/Energy Saving Mode. The RRC response message may indicate allowed service for the at least one (affected) wireless device. The RRC response message may indicate allowed number of PDU session and/or number of network slice. The RRC response message may indicate allowed type of PDU session and/or type of network slice.

The RRC response message may indicate rejecting the RRC request. For example, the RRC response may be an RRC reject (or RRCReject) message 2129, wherein the RRC reject message may comprise at least one of: the first parameter/Status of Electrical Supply Service; the second parameter/Electric Fault Location; the third parameter/Failure Recovery Time; the fourth parameter/Affected Network; the fifth parameter/Energy Saving Mode; and/or a wait time. The wait time may indicate a time value that the wireless device should wait, for example, after reception of RRC reject message until a new RRC connection request message is sent. The at least one (affected) wireless device may start a timer, for example, after receiving an RRC reject message with a waitTime IE. The at least one (affected) wireless device may not be allowed to send another RRCConnectionRequest message for mobile originating calls, mobile originating signaling, mobile terminating access and/or mobile originating CS fallback on the same cell on which RRC reject message is received until the expiry of the timer with the value of waitTime. The RRC reject message may indicate allowed service for the at least one (affected) wireless device. The RRC reject message may indicate allowed number of PDU session and/or number of network slice. The RRC reject message may indicate allowed type of PDU session and/or type of network slice.

The AMF may receive a message (e.g., Namf_Communication_N1N2MessageTransfer) 2107 from the SMF. The Namf_Communication_N1N2MessageTransfer message may comprise at least one of: the first parameter/Status of Electrical Supply Service; the second parameter/Electric Fault Location; the third parameter/Failure Recovery Time; and/or the fourth parameter/Affected Network. The Namf_Communication_ N1N2MessageTransfer message may comprise N2 SM information and/or N1 SM container. The N2 SM information may comprise information sent to the base station. The N1 SM container may comprise information sent to the wireless device (see arrow 2117). The N2 SM information may comprise at least one of: PDU Session ID; QFI(s); QoS Profile(s); Alternative QoS Profile(s); Session-AMBR; CN Tunnel Info(s); QoS Monitoring indication; QoS Monitoring reporting frequency; and/or Time Sensitive Communication Assistance Information (TSCAI(s)). The N1 SM container may comprise the PDU Session Modification Command message. The definition/content of the Namf_Communication_N1N2MessageTransfer message may be similar to the definition/content of the Namf_Communication_N1N2MessageTransfer message 1837 as described in FIG. 18. For brevity, further description will not be repeated here.

The AMF may detect status of electrical supply service of the network (e.g., the AMF, at least one (affected) base station). For example, the AMF may detect failure/loss of electrical supply service. The AMF may detect recovery of electrical supply service. The AMF may determine at least one (affected) wireless device by the status of the electrical supply service as described with respect to FIG. 18, for example, based on (after or in response to) the Namf_Communication_N1N2MessageTransfer message and/or detecting status of electrical supply service for the network.

The AMF may receive a registration request message 2133 from the at least one (affected) wireless device. The registration request message requesting register to the network for a data service/a PDU session/a network slice for the at least one (affected) wireless device. As shown in box 21100, the AMF may determine UAC control for the at least one (affected) wireless device, for example, based on (after or in response to) the message being received, and based on the status of electrical supply service of the network (e.g., affected AMF, affected base station, the at least one (affected) wireless device). The status of electrical supply service of the network may be received by the AMF from the SMF. The status of electrical supply service of the network may be detected by the AMF. The UAC control may allow the registration request for the data service/the PDU session/the network slice. The UAC control may not allow the registration request for the data service/the PDU session/the network slice. For example, based on failure of electrical supply service, the AMF may not allow data service for the at least one (affected) wireless device. For example, based on the determining, the AMF may send a registration response message to the at least one (affected) wireless device. The registration response message may indicate accepting the registration request. For example, the registration response may be a registration accept message, wherein the registration accept message may comprise at least one of: the first parameter/Status of Electrical Supply Service; the second parameter/Electric Fault Location; the third parameter/Failure Recovery Time; the fourth parameter/Affected Network; and/or the fifth parameter/Energy Saving Mode. The registration response message may indicate allowed service for the at least one (affected) wireless device. The registration response message may indicate allowed number of PDU session and/or number of network slice. The registration response message may indicate allowed type of PDU session and/or type of network slice.

The registration response message may indicate rejecting the registration request. For example, the registration response may be a registration reject message 2119, wherein the registration reject message may comprise at least one of: the first parameter/Status of Electrical Supply Service; the second parameter/Electric Fault Location; the third parameter/Failure Recovery Time; the fourth parameter/Affected Network; the fifth parameter/Energy Saving Mode; and/or a wait time. The wait time may indicate a time value that the wireless device should wait, for example, after reception of registration reject message until a new registration request message is sent. The registration reject message may indicate allowed service for the at least one (affected) wireless device. The registration reject message may indicate allowed number of PDU session and/or number of network slice. The registration reject message may indicate allowed type of PDU session and/or type of network slice.

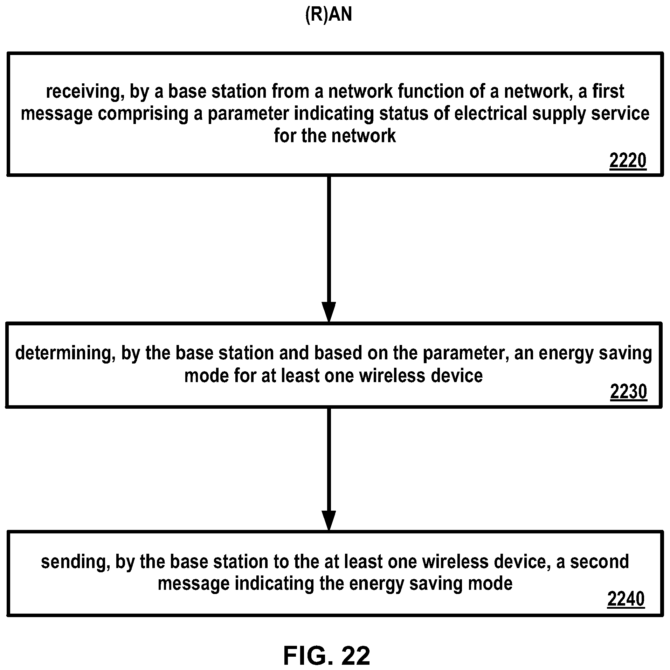

FIG. 22 shows example method for communicating information about an electrical supply service. A base station may be, for example, an (R)AN. At step 2220, a base station may receive, from a network function of a network, a first message comprising a parameter indicating status of electrical supply service for the network. At step 2230, the base station may determine, based on the parameter, an energy saving mode for at least one wireless device. At step 2240, the base station may send (e.g., transmit), to the at least one wireless device, a second message indicating the energy saving mode. The determining of the energy saving mode for the at least one wireless device may also be based on a result of detecting loss of electricial supply by the base station, as illustrated in FIG. 21.

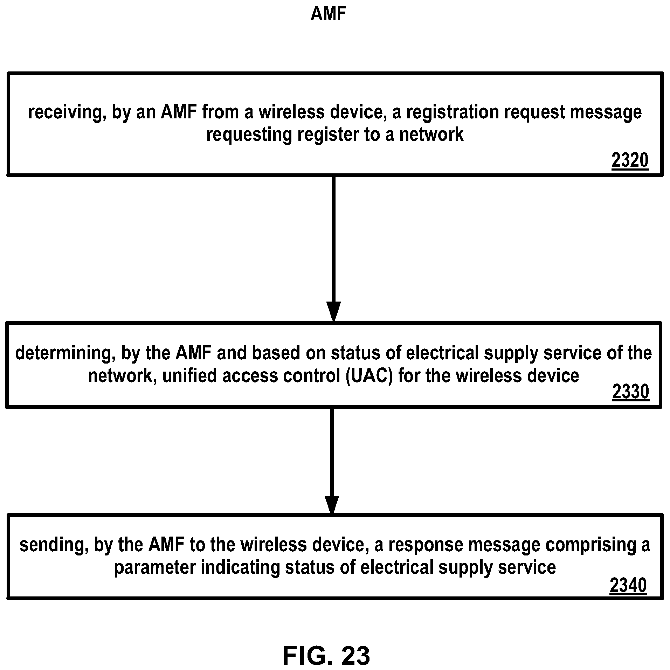

FIG. 23 shows example method for communicating information about an electrical supply service. of the method may be performed by an AMF. At step 2320, an AMF may receive, from a wireless device, a registration request message requesting register to a network. At step 2330, the AMF may determine, based on status of electrical supply service of the network, a UAC for the wireless device. At step 2340, the AMF may send (e.g., transmit), to the wireless device, a response message comprising a parameter indicating status of electrical supply service.

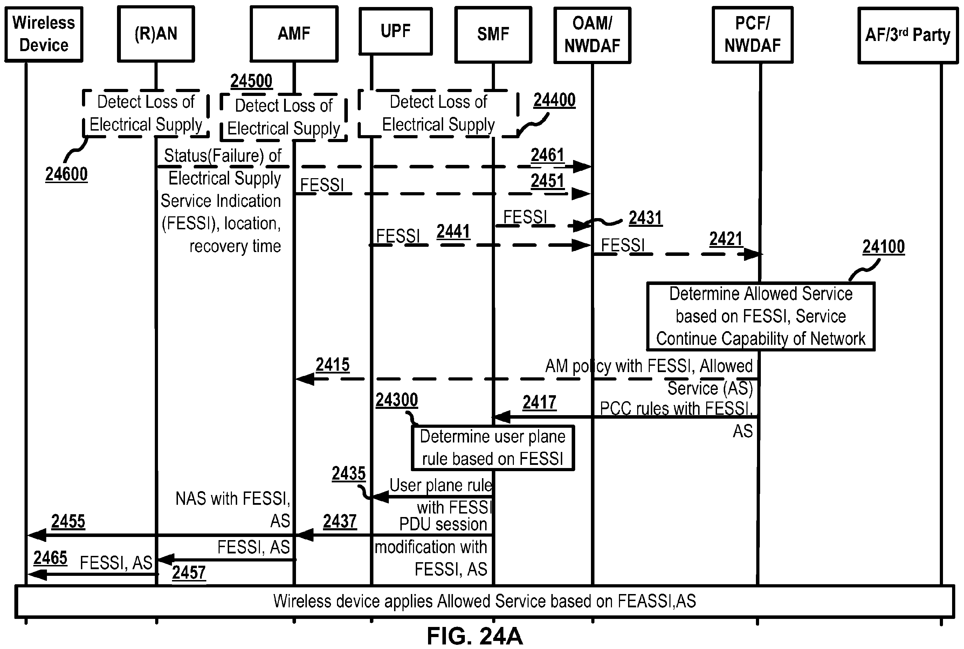

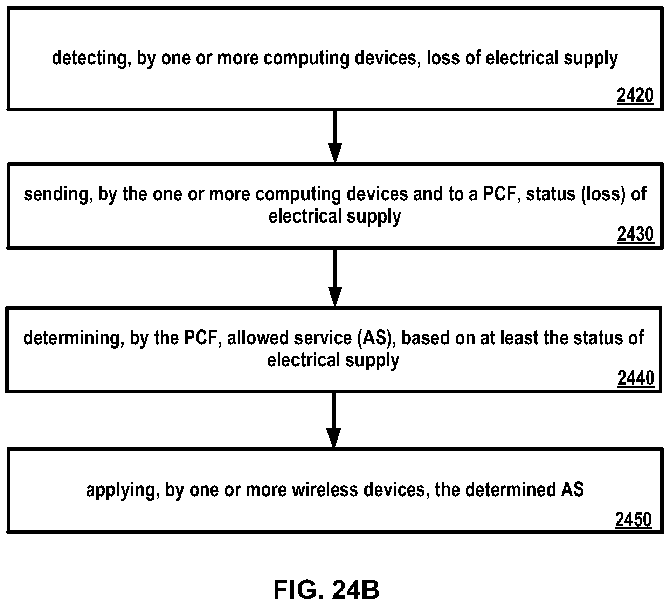

FIG. 24A and FIG. 24B show examples of communicating information about an electrical supply service. A base station may detect status of electrical supply service of the network (e.g., the base station). For example, as shown in box 24600, the base station may detect failure/loss of electrical supply service. For example, the base station may detect recovery of electrical supply service. The base station may send a message (e.g., Electrical Supply Status Report) 2461 to a network function (e.g., OAM, NWDAF, AMF, SMF, PCF, AAA), for example, based on (after or in response to) detecting the status of electrical supply service. The base station may send the Electrical Supply Status Report message to an OAM/NWDAF. The Electrical Supply Status Report message may comprise at least one of: the first parameter/Status of Electrical Supply Service; the second parameter/Electric Fault Location; the third parameter/Failure Recovery Time; the fourth parameter/Affected Network; the parameter/service continue capability of the network; the identity of the base station; and/or at least one identity of at least one affected wireless device. The definition/content of the first parameter/Status of Electrical Supply Service used in FIG. 24A may be similar to the definition/content of the first parameter/Status of Electrical Supply Service as described in FIG. 18. The definition/content of the second parameter/Electric Fault Location used in FIG. 24A may be similar to the definition/content of the second parameter/Electric Fault Location as described in FIG. 18. The definition/content of the third parameter/Failure Recovery Time used in FIG. 24A may be similar to the definition/content of the third parameter/Failure Recovery Time as described with respect to FIG. 18. The definition/content of the fourth parameter/Affected Network used in FIG. 24A may be similar to the definition/content of the fourth parameter/Affected Network as described with respect to FIG. 18. The definition/content of the parameter/service continue capability of the network used in FIG. 24A may be similar to the definition/content of the parameter/service continue capability of the network as described with respect to FIG. 18.

An AMF may detect status of electrical supply service of the network (e.g., the AMF, at least one affected base station). For example, as shown in box 24500, the AMF may detect failure/loss of electrical supply service. For example, the AMF may detect recovery of electrical supply service. The AMF may send a message (e.g., Electrical Supply Status Report) 2451 to a network function (e.g., OAM, NWDAF, SMF, PCF, AAA), for example, based on (after or in response to) detecting the status of electrical supply service. The AMF may send the Electrical Supply Status Report message to an OAM/NWDAF. The Electrical Supply Status Report message may comprise at least one of: the first parameter/Status of Electrical Supply Service; the second parameter/Electric Fault Location; the third parameter/Failure Recovery Time; the fourth parameter/Affected Network; the parameter/service continue capability of the network; the identity of the AMF; at least one identity of at least one affected base station; and/or at least one identity of at least one affected wireless device. The AMF may send a message (e.g., N2 message, PDU Session Resource Setup) 2457 to the at least one affected base station. The at least one affected base station may send an RRC message (e.g., RRCReconfiguration) 2465 to the at least one affected wireless device.

An SMF may detect status of electrical supply service of the network (e.g., the SMF, at least one affected AMF, at least one affected base station). For example, as shown in box 24400, the SMF may detect failure/loss of electrical supply service. For example, the SMF may detect recovery of electrical supply service. The SMF may send a message (e.g., Electrical Supply Status Report) 2431 to a network function (e.g., OAM, NWDAF, PCF, AAA), for example, based on (after or in response to) detecting the status of electrical supply service. The SMF may send the Electrical Supply Status Report message to an OAM/NWDAF. The Electrical Supply Status Report message may comprise at least one of: the first parameter/Status of Electrical Supply Service; the second parameter/Electric Fault Location; the third parameter/Failure Recovery Time; the fourth parameter/Affected Network; the parameter/service continue capability of the network; the identity of the SMF; at least one identity of at least one affected AMF; at least one identity of at least one affected base station; and/or at least one identity of at least one affected wireless device. As shown in box 24300, the SMF may determine, at least one user plane rule associated with at least one PDU session for the at least one wireless device, for example, based on the at least one PCC rule. The SMF may send the at least one user plane rule to an UPF (see message 2435 in FIG. 24A). The SMF may send a message (e.g., NAS message, PDU Session Modification Command) 2455 to the at least one wireless device via at least one affected AMF (see message 2437) and/or at least one affected base station.

An UPF may detect status of electrical supply service of the network (e.g., the UPF). For example, as shown in box 24400, the UPF may detect failure/loss of electrical supply service. For example, the UPF may detect recovery of electrical supply service. The UPF may send a message (e.g., Electrical Supply Status Report) 2441 to a network function (e.g., OAM, NWDAF, SMF, PCF, AAA), for example, based on (after or in response to) detecting the status of electrical supply service. The UPF may send the Electrical Supply Status Report message to an OAM/NWDAF. The Electrical Supply Status Report message may comprise at least one of: the first parameter/Status of Electrical Supply Service; the second parameter/Electric Fault Location; the third parameter/Failure Recovery Time; the fourth parameter/Affected Network; the parameter/service continue capability of the network; and/or the identity of the UPF. The SMF may send/forward the Electrical Supply Status Report message to a network function (e.g., OAM, NWDAF, PCF, AAA), for example, based on (after or in response to) the message being received.

In FIG. 24B, at step 2420, one or more computing devices (e.g., base station (e.g., (R)AN), AMF, UPF, SMF, or network node) may detect status of electrical supply (e.g., loss of electrical supply). At step 2430, the one or more computing devices may send the status (loss) of electrical supply to a PCF. At step 2440, the PCF may determine allowed service (AS) based on at least the status of electrical supply being received. At step 2450, the determined AS may be sent eventually to one or more wireless devices and the one or more wireless devices may use the determined AS.

The OAM/NWDAF/AAA may detect status of electrical supply service of the network (e.g., at least one affected PCF, at least one affected SMF, at least one affected UPF, at least one affected AMF, at least one affected base station). For example, the OAM/NWDAF/AAA may detect failure/loss of electrical supply service. For example, the OAM/NWDAF/AAA may detect recovery of electrical supply service. As shown by message 2421, the OAM/NWDAF/AAA may send/forward the Electrical Supply Status Report message to a PCF, for example, based on (after or in response to) the message being received from the base station/AMF/SMF/LTPF and/or based on (after or in response to) detecting status of electrical supply service. The Electrical Supply Status Report message may comprise at least one of: the first parameter/Status of Electrical Supply Service; the second parameter/Electric Fault Location; the third parameter/Failure Recovery Time; the fourth parameter/Affected Network; the parameter/service continue capability of the network; at least one identity of at least one affected PCF; at least one identity of at least one affected SMF; at least one identity of at least one affected UPF; at least one identity of at least one affected AMF; at least one identity of at least one affected base station; and/or at least one identity of at least one affected wireless device.

The PCF may detect status of electrical supply service of the network (e.g., the PCF, at least one affected SMF, at least one affected UPF, at least one affected AMF, at least one affected base station). For example, the PCF may detect failure/loss of electrical supply service. For example, the PCF may detect recovery of electrical supply service. The PCF may take one or more actions, for example, based on (after or in response to) the message being received from the AMF/SMF/UPF/OAM/NWDAF/AAA and/or based on (after or in response to) detecting status of electrical supply service of the network. The PCF may determine affected network(s) and/or network function(s) by the status of electrical supply service as described in FIG. 18, for example, based on the message received from the AMF/SMF/UPF/OAM/NWDAF/AAA and/or based on detecting status of electrical supply service of the network.

The PCF may determine at least one wireless device affected by the status of electrical supply service as described with respect to FIG. 18, for example, based on the message received from the AMF/SMF/UPF/OAM/NWDAF/AAA and/or based on detecting status of electrical supply service of the network. The PCF may determine at least one policy and charging control (PCC) rule for at least one (affected) wireless device as described in FIG. 18, for example, based on the message received from the AMF/SMF/UPF/OAM/NWDAF/AAA and/or based on detecting status of electrical supply service of the network. For example, based on the message received from the AMF/SMF/UPF/OAM/NWDAF/AAA and/or based on detecting status of electrical supply service of the network, the PCF may send a message (e.g., Npcf_SMPolicyControl_UpdateNotify, SM Policy Modification Request) 2417 to at least one affected SMF as described in FIG. 18.

As shown in box 24100, the PCF may determine access and mobility related policy information for allowed services as described with respect to FIG. 18, for example, based on the message received from the AMF/SMF/UPF/OAM/NWDAF/AAA and/or based on detecting status of electrical supply service of the network. The PCF may send a message (e.g., Npcf_AMPolicyControl_UpdateNotify, AM Policy Modification Request) 2415 to at least one affected AMF as described in FIG. 18, for example, based on the message received from the AMF/SMF/UPF/OAM/NWDAF/AAA and/or based on detecting status of electrical supply service of the network. The at least one affected SMF/UPF/AMF/base station/wireless device may take one or more actions as described in FIG. 18. For brevity, further description will not be repeated here.

The PCF may determine an energy saving mode, for example, based on the message received from the AMF/SMF/UPF/OAM/NWDAF/AAA and/or based on detecting status of electrical supply service of the network. The PCF may send a message to the (affected) AMF/SMF/UPF/base station indicating energy saving mode. The PCF may send a message to the (affected) AMF/SMF/UPF/base station indicating to lower the equipment power supply of the (affected) AMF/SMF/UPF/base station. The PCF may send a message to the (affected) AMF/SMF/UPF/base station indicating to shut down the equipment power supply of the (affected) AMF/SMF/UPF/base station.

A PCF may receive a first message from a network function of a network, the first message may comprise a parameter indicating status of electrical supply service for the network. For example, based on the parameter, the PCF may determine an energy saving mode for the network function. The PCF may send to the network function, a second message indicating the energy saving mode. The network function may comprise at least one of: an AMF; an SMF; a UPF; and/or a base station. The second message may comprise a parameter indicating to lower the equipment power supply of the network function. The second message may comprise a parameter indicating to shut down the equipment power supply of the network function. The PCF may receive the parameter from the second network function, wherein the second network function may comprise at least one of: an AF; an AAA; an OAM; and/or an NWDAF. The PCF may detect the status of electrical supply service for the network.

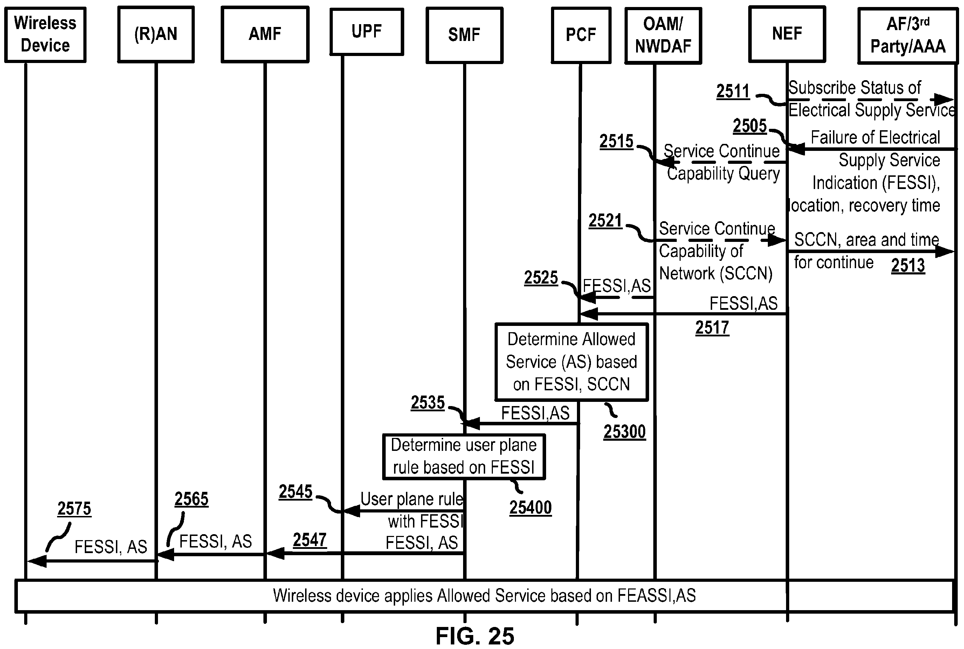

FIG. 25 shows an example of communicating information about an electrical supply service. A NEF of a network may send a message (e.g., Nnef_APISupportCapability_Subscribe Response, HTTP PUT, HTTP POST, Subscribe Status of Electrical Supply Service) 2511 to a network function (e.g., AF, AAA, OAM, NWDAF, a data network of power system) indicating subscribing changing of the status of electrical supply service for the network. The network may comprise a communication system (e.g., 5G communication system). The network/communication system may comprise at least one of: the PCF; at least one SMF; at least one AMF; at least one UPF; at least one base station; at least one Operations, Administration and Maintenance (OAM); and/or at least one Network Data Analytics Function (NWDAF). The AF may be part of the network deployed by the same operator. The AF may be provided by an external 3^{rd} party service provider. The AF may be provided by the operator/service provider of the power system. The AF may be belonged to the operator/service provider of the power system. The AF may be part of the power system. The operator/service provider of the power system may own, operate, administrate, and/or maintain the power system. The operator/service provider of the power system may monitor and operate switchboards and related equipment in electrical control centers to control the electrical power in transmission, sub-transmission and distribution networks.

The definition/content of the status of electrical supply service for the network may indicate a failure of electrical supply service for the network. For example, the status of electrical supply service for the network may indicate that the power system is not able to provide the electrical supply service to the network/communication system. The status of electrical supply service for the network may indicate a recovery of electrical supply service for the network. For example, the status of electrical supply service for the network may indicate that the power system is able to provide the electrical supply service to the network/communication system again. Subscribing changing of the status of electrical supply service for the network may indicate that the NEF may receive a notification 2505 from the AF, for example, if the status of electrical supply service for the network is changed. The AF may inform the NEF, for example, if the AF detects that the electrical supply service for the network is failure. The AF may inform the NEF, for example, if the AF detects that the electrical supply service for the network is recovered (e.g., available again).

The Subscribe Status of Electrical Supply Service message may comprise at least one identity of the network and/or at least one identity of at least one network function (e.g., the NEF, PCF, NWDAF, OAM, SMF, UPF, AMF, (R)AN, and/or the like) of the network. The Subscribe Status of Electrical Supply Service message may comprise location information of the network. The Subscribe Status of Electrical Supply Service message may comprise location information of the at least one network function of the network. The at least one identity of the network, the at least one identity of at least one network function of the network, the location information of the network; and/or the location information of the at least one network function of the network may indicate that subscribing changing of the status of electrical supply service for the network may be used for the network and/or the at least one network function with the location information. The Subscribe Status of Electrical Supply Service message may comprise at least one identity of the network (e.g., an identity of a public land mobile network (PLMN)) and/or location information (e.g., geography area 1) of the network. This may indicate that the NEF may receive a notification from the AF, for example, if the status of electrical supply service has an impact to the PLMN located in the geography area 1. The Subscribe Status of Electrical Supply Service message may comprise at least one identity of the NEF (e.g., NEF ID) and/or location information (e.g., serving area 1) of the NEF. This may indicate that the NEF may receive a notification from the AF, for example, if the status of electrical supply service has an impact to the NEF located in the serving area 1.

The NEF may receive a first message from a network function, wherein the first message may comprise a parameter indicating status of electrical supply service for the network. The network function may comprise an AF, an AAA, an OAM, a NWDAF, and/or the like. The network function may comprise an authentication, authorization, and accounting (AAA) server. For example, the NEF may receive the first message from an AAA server of a data network. For example, the data network may be part of the power system. The power system may detect a fault of power line/power equipment, and the power system may be unable to provide electrical supply service to the network. The AF (e.g., AF of the power system) may send a message (e.g., Diameter AA-Request (AAR) command, HTTP POST, HTTP PUT) to the NEF indicating status of electrical supply service for the network. The Diameter AA-Request command may comprise at least one of: a first parameter (e.g., Status of Electrical Supply Service); a second parameter (e.g., Electric Fault Location); a third parameter (e.g., Failure Recovery Time); and/or a fourth parameter (e.g., Affected Network). The first parameter/Status of Electrical Supply Service may indicate status of electrical supply service for the network. The definition/content of the status of electrical supply service for the network may be similar to the definition/content of the status of electrical supply service for the network as described herein.

The definition/content of the second parameter/Electric Fault Location may be similar to the definition/content of the second parameter/Electric Fault Location as described with respect to FIG. 18. The definition/content of the third parameter / Failure Recovery Time may be similar to the definition/content of the third parameter / Failure Recovery Time as described with respect to FIG. 18. The definition/content of the fourth parameter/Affected Network may be similar to the definition/content of the fourth parameter/Affected Network as described with respect to FIG. 18.

The NEF may take one or more actions, for example, based on (after or in response to) the message being received. For example, the NEF may send a message (e.g., Service Continue Capability Query) 2515 to a second network function (e.g., OAM, NWDAF) indicating querying service continue capability of the network and/or network function (s). The Service Continue Capability Query message may comprise at least one of: the first parameter/Status of Electrical Supply Service, the second parameter/Electric Fault Location, the third parameter/Failure Recovery Time, and/or the fourth parameter/Affected Network.

The second network function (e.g., OAM, NWDAF) may determine at least one affected PCF, for example, based on the Service Continue Capability Query message (e.g., the second parameter/Electric Fault Location, the fourth parameter/Affected Network). The second network function (e.g., OAM, NWDAF) may send to the at least one affected PCF a message 2525 comprising at least one of: the first parameter/Status of Electrical Supply Service, the second parameter/Electric Fault Location, the third parameter/Failure Recovery Time, and/or the fourth parameter/Affected Network.

The NEF may receive a response message (e.g., Service Continue Capability Query Response) 2521 from the second network function, wherein the Service Continue Capability Query Response message may indicate service continue capability of the network. For example, the Service Continue Capability Query Response message may comprise a parameter (e.g., service continue capability of the network), wherein the parameter/service continue capability of the network may indicate capability of the network to continue to provide communication services, for example, after losing electrical supply service from the power system. The definition/content of the parameter/service continue capability of the network may be similar to the parameter/service continue capability of the network as described in FIG. 18. For brevity, further description will not be repeated here.

The NEF may send a response message (e.g., Diameter AA-Answer (AAA) command) 2513 to the network function (e.g., AF, AAA), for example, based on (after or in response to) the message being received, wherein the Diameter AA-Answer (AAA) command may comprise the parameter/service continue capability of the network. The network function may take some actions, for example, based on (after or in response to) the message being received. For example, based on the parameter/service continue capability of the network, the network function/power system may recover the electrical supply service as soon as possible. For example, the power system may provide additional backup sources of electric power for the network.

The NEF may determine at least one affected PCF, for example, based on the message received from the AF (e.g., the second parameter/Electric Fault Location, the fourth parameter/Affected Network). The NEF may send a message (e.g., Npcf_Policy Authorization Response) 2517 to the at least one affected PCF. The Npcf_Policy Authorization Response message may comprise at least one of: the first parameter/Status of Electrical Supply Service; the second parameter/Electric Fault Location; the third parameter/Failure Recovery Time; and/or the fourth parameter/Affected Network.

The PCF may detect status of electrical supply service of the network (e.g., the PCF, at least one affected SMF, at least one affected UPF, at least one affected AMF, at least one affected base station). For example, the PCF may detect failure/loss of electrical supply service. For example, the PCF may detect recovery of electrical supply service. The PCF may take one or more actions, for example, based on (after or in response to) the message being received from the NEF and/or based on (after or in response to) detecting status of electrical supply service of the network. For example, based on the message received from the NEF and/or based on detecting status of electrical supply service of the network, the NEF may determine affected network(s) and/or network function(s) by the status of electrical supply service as described with respect to FIG. 18.

The PCF may determine at least one wireless device affected by the status of electrical supply service as described with respect to FIG. 18, for example, based on the message received from the NEF and/or based on detecting status of electrical supply service of the network. For example, based on the message received from the NEF and/or based on detecting status of electrical supply service of the network, the PCF may determine at least one policy and charging control (PCC) rule for at least one (affected) wireless device as described with respect to FIG. 18. The PCF may send a message (e.g., Npcf_SMPolicyControl_UpdateNotify, SM Policy Modification Request) to at least one affected SMF as described with respect to FIG. 18, for example, based on the message received from the NEF and/or based on detecting status of electrical supply service of the network.

The PCF may determine access and mobility related policy information for allowed services as described with respect to FIG. 18, for example, based on the message received from the NEF and/or based on detecting status of electrical supply service of the network. The PCF may send a message (e.g.,
Npcf_AMPolicyControl _UpdateNotify, AM Policy Modification Request) to at least one affected AMF as described with respect to FIG. 18, for example, based on the message received from the NEF and/or based on detecting status of electrical supply service of the network. The at least one affected SMF/UPF/AMF/base station/wireless device may take one or more actions as described with respect to FIG. 18. As shown in box 25300, the PCF may determine at least one allowed service for at least one wireless device based on at least the status of electrical supply service. The PCF may send a message 2535 to the SMF, and the message may comprise the allowed service(s) (e.g., PCC rule). As shown in box 25400, the SMF may determine at least one user plane rule associated with at least one PDU session based on the status of electrical supply service. The SMF may send a message 2545 to a UPF, and the message may comprise at least the user plane rule. The SMF may send a NAS message 2575 to at least one affected wireless device, and the NAS message may comprise at least one QoS policy/parameters. The SMF may send a N1N2 message 2547 to the at least one affected AMF, and the N1N2 message may comprise at least one of: at least one QoS policy/parameters for allowed services; the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The base station may receive a message 2565 from the AMF, and the message may indicate the status of electrical supply service.

A base station, one or more wireless devices, and/or a core network device may perform a method comprising multiple operations. A policy control function (PCF) of a network may receive a first message from an application function (AF), and the first message may comprise a parameter indicating status of electrical supply service for the network. The PCF may determine at least one policy and charging control (PCC) rule for at least one wireless device based on the parameter. The PCF may send a second message to a session and management function (SMF), and the second message may comprise the at least one PCC rule. The status of electrical supply service may impact part of the network, or all network elements of the network. The status of electrical supply service for the network may indicate a failure of electrical supply service for the network. The failure of electrical supply service may indicate a power system is not able to provide electrical supply service to the network. The status of electrical supply service for the network may indicate a recovery of electrical supply service for the network. The recovery of electrical supply service may indicate a power system is able to provide electrical supply service to the network. The at least one PCC rule may indicate allowed service for the at least one wireless device, wherein the at least one wireless device may be in an affected area by the status of electrical supply service. The at least one PCC rule may comprise at least one application identifier identifying the allowed service. The at least one PCC rule may comprise at least one QoS flow identifier for the allowed service. The at least one PCC rule may comprise at least one service data flow (SDF) template for the allowed service. The at least one PCC rule may comprise at least one QoS parameters for the allowed service, wherein the at least one QoS parameters comprises at least one of: 5QI; QCI; ARP; RQA; GFBR; MFBR; maximum packet loss; and/or RQI. The PCF may determine a smaller bandwidth for the at least one QoS parameters for the allowed service, based on a failure of the electrical power supply service. The at least one PCC rule may be for per (affected) area, cell, routing area, and/or a physical location. The PCF may determine at least one affected network, based on affected area/location of the status of electrical supply service. The PCF may determine at least one affected network function of affected network based on affected area/location of the status of electrical supply service, wherein the at least one affected network function may comprise at least one of: SMF; UPF; AMF; and/or base station. The PCF may determine at least one affected wireless device, based on affected area/location of the status of electrical supply service. The network may indicate a communication system. The network may comprise at least one of: the PCF; the SMF; at least one UPF; at least one access and mobility management function (AMF); at least one base station; at least one Operations, Administration and Maintenance (OAM); and/or at least one Network Data Analytics Function (NWDAF). The first message may further comprise at least one of: a second parameter indicating an affected area by the status of electrical supply service; a third parameter indicating recovery time of electrical supply service; and/or a fourth parameter indicating at least one network and/or at least one network function of the at least one network affected by the status of electrical supply service. The PCF may determine the at least one PCC rule based on at least one of: the second parameter; the third parameter; and/or the fourth parameter. The PCF may send a third message to the AF, and the third message may indicate subscribing changing of the status of electrical supply service for the network. The third message may comprise an identity of the network, wherein the identity of the network may comprise an identity of a public land mobile network (PLMN). The third message may comprise location information (e.g., geography area 1) of the network. The third message may comprise an identity of at least one network function of the network, wherein the at least one network function comprises at least one of: the PCF; at least one NWDAF; at least one OAM; at least one SMF; at least one UPF; at least one AMF; and/or at least one base station. The third message may comprise location information of the at least one network function of the network.

The PCF may send to a network function, a Service Continue Capability Query message indicating querying service continue capability of the network, wherein the Service Continue Capability Query message may comprise at least one of: an identity of the network; a parameter indicating status of electrical supply service for the network; a second parameter indicating an affected area by the status of electrical supply service; a third parameter indicating recovery time of electrical supply service; and/or a fourth parameter indicating at least one network and/or at least one network function of the at least one network affected by the status of electrical supply service. The PCF may receive from the network function, a Service Continue Capability Query Response message indicating service continue capability of the network, wherein the service continue capability of the network may comprise at least one of: time for service continue; area for service continue; and/or backup sources of electric power. The backup sources of electric power may comprise at least one of: a battery; an uninterruptible power supply (UPS); and/or a diesel. The network function may comprise at least one of: an Operations, Administration and Maintenance (OAM); and/or Network Data Analytics Function (NWDAF). The PCF may send the service continue capability of the network to the AF. The second message may further comprise at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The second message may further comprise at least one of: an identity of the at least one wireless device affected by the status of the electrical supply service; an identifier of at least one PDU session associated with the at least one wireless device; a network slice identifier (e.g., S-NSSAI) associated with the at least one wireless device; and/or a DNN associated with the at least one wireless device. The PCF may determine access and mobility related policy information for allowed services, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The access and mobility related policy information may comprise at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The PCF may send the access and mobility related policy information to an AMF. The PCF may send to an AMF, at least one of: an identity of the at least one wireless device affected by the status of the electrical supply service; an identifier of at least one PDU session associated with the at least one wireless device; a network slice identifier (e.g., S-NSSAI) associated with the at least one wireless device; and/or a DNN associated with the at least one wireless device. The SMF may determine, at least one user plane rule associated with at least one protocol data unit (PDU) session for the at least one wireless device, based on the at least one PCC rule. The at least one user plane rule may comprise at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may send the at least one user plane rule to a UPF. The PCF may receive the first message from a network function, wherein the network function may comprise at least one of: a NEF; an OAM; a NWDAF; and/or an AAA. The PCF may receive the first message from a data network of a power system. The PCF may comprise one or more processors; and memory storing instructions that, when executed by the one or more processors, cause the PCF to perform the described method, additional operations, and/or include the additional elements. A system may comprise the PCF configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A session and management function (SMF) of a network may receive a first message from a policy control function (PCF), the first message may comprise a parameter indicating status of electrical supply service for the network. The SMF may determine at least one user plane rule associated with at least one protocol data unit (PDU) session based on the parameter. The SMF may send the at least one user plane rule to a user plane function (UPF). The SMF may determine at least one wireless device affected by the Status of Electrical Supply Service, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may determine at least one PDU session and/or at least one network slice associated with the at least one wireless device affected by the Status of Electrical Supply Service, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may determine limit number of PDU session and/or number of network slice, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may determine type of PDU session and/or type of network slice, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may determine at least one QoS policy/parameters for the allowed services, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may send a NAS message to at least one affected wireless device, and the NAS message may comprise the at least one QoS policy/parameters. The SMF may determine at least one AMF and/or at least one base station affected by the Status of Electrical Supply Service, based on at least one of: the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may send a N1N2 message to the at least one affected AMF, and the N1N2 message may comprise at least one of: at least one QoS policy/parameters for allowed services; the parameter; a second parameter indicating an affected area by the status of electrical supply service; a third parameter indicating recovery time of electrical supply service; and/or a fourth parameter indicating at least one network and/or at least one network function of the at least one network affected by the status of electrical supply service. The SMF may comprise one or more processors; and memory storing instructions that, when executed by the one or more processors, cause the SMF to perform the described method, additional operations, and/or include the additional elements. A system may comprise the SMF configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A policy control function (PCF) of a network may receive a first message from a network function, and the first message may comprise a parameter indicating status of electrical supply service for the network. The PCF may send a second message to a session and management function (SMF), the second message may comprise at least one policy and charging control (PCC) rule, based on the parameter. The network function may comprise at least one of: an application function (AF); a network exposure function (NEF); an SMF; a UPF; an AMF; and/or a base station. The PCF may comprise one or more processors; and memory storing instructions that, when executed by the one or more processors, cause the PCF to perform the described method, additional operations, and/or include the additional elements. A system may comprise the PCF configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may receive a first message from a network function of a network, and the first message may comprise a parameter indicating status of electrical supply service for the network. The base station may determine an energy saving mode for at least one wireless device based on the parameter. The base station may send to the at least one wireless device, a second message indicating the energy saving mode. The energy saving mode may indicate network energy consumption is decreased. The energy saving mode may indicate the base station decreases time resource for the at least one wireless device. The energy saving mode may indicate the base station decreases frequency resource for the at least one wireless device. The energy saving mode may indicate the base station decreases spatial resource for the at least one wireless device. The energy saving mode may indicate the base station reduce power for the at least one wireless device. The network function may comprise at least one of: an access and mobility management function (AMF); a session management function (SMF); an OAM; a NWDAF; and/or an AAA. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may determine status of electrical supply service for the base station. The base station may send to at least one wireless device, a message comprising a parameter indicating status of electrical supply service. The base station may detect electrical supply service is not available. The determining may be based on the detecting. The base station may detect electrical supply service is recovered. The base station may receive a first message from an AMF, and the first message may indicate electrical supply service is not available. The determining may be based on the first message. The base station may determine time resource for the at least one wireless device based on the status of electrical supply service. The base station may determine frequency resource for the at least one wireless device based on the status of electrical supply service. The base station may determine spatial resource for the at least one wireless device based on the status of electrical supply service. The base station may determine power resource for the at least one wireless device based on the status of electrical supply service. The base station may determine DRB or QoS resource for the at least one wireless device based on the status of electrical supply service. The base station may determine at least one of: time resource for the at least one wireless device; frequency resource for the at least one wireless device; spatial resource for the at least one wireless device; power resource for the at least one wireless device; and/or DRB/QoS resource for the at least one wireless device. The determining may be based on at least one of: the parameter; a second parameter indicating an affected area by the status of electrical supply service; a third parameter indicating recovery time of electrical supply service; a fourth parameter indicating at least one network and/or at least one network function of the at least one network affected by the status of electrical supply service; a fifth parameter indicating energy saving mode; and/or service continue capability of the network. The service continue capability of the network may comprise at least one of: time for service continue; area for service continue; and/or backup sources of electric power. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may receive from a wireless device, an RRC request message requesting establishment of an RRC connection. The base station may determine unified access control (LTAC) for the wireless device based on status of electrical supply service of the base station. The base station may send to the wireless device, an RRC reject message comprising a parameter indicating status of electrical supply service. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. An AMF may receive from a wireless device, a registration request message requesting register to a network. The AMF may determine unified access control (UAC) for the wireless device, based on status of electrical supply service of the network. The AMF may send to the wireless device, a response message comprising a parameter indicating status of electrical supply service. The AMF may comprise one or more processors; and memory storing instructions that, when executed by the one or more processors, cause the AMF to perform the described method, additional operations, and/or include the additional elements. A system may comprise the AMF configured to perform the described method, additional operations and/or include the additional elements; one or more wireless devices configured to communicate with the base station; and/or the core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A session and management function (SMF) of a network may receive a first message from a network function, and the first message may comprise a parameter indicating status of electrical supply service for the network. The SMF may determine QoS parameters for at least one wireless device based on the parameter. The SMF may send to the at least one wireless device, a second message comprising the QoS parameters. The network function may comprise at least one of: a policy control function; and/or a network exposure function (NEF). The first message may further comprise at least one of: a second parameter indicating an affected area by the status of electrical supply service; and/or a third parameter indicating recovery time of electrical supply service. The SMF may determine the QoS parameters based on at least one of: the second parameter; and/or the third parameter. The second message may further comprise at least one of: the parameter; a second parameter indicating an affected area by the status of electrical supply service; and/or a third parameter indicating recovery time of electrical supply service. The SMF may comprise one or more processors; and memory storing instructions that, when executed by the one or more processors, cause the SMF to perform the described method, additional operations, and/or include the additional elements. A system may comprise the SMF configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A PCF may receive a first message from a network function of a network, and the first message may comprise a parameter indicating status of electrical supply service for the network. The PCF may determine an energy saving mode for the network function based on the parameter. The PCF may send to the network function, a second message indicating the energy saving mode. The network function may comprise at least one of: an AMF; an SMF; a UPF; and/or a base station. The second message may comprise a parameter indicating to lower the equipment power supply of the network function. The second message may comprise a parameter indicating to shut down the equipment power supply of the network function. The PCF may receive the parameter from the second network function, wherein the second network function may comprise at least one of: an AF; an AAA; an OAM; and/or an NWDAF. The PCF may detect the status of electrical supply service for the network. The PCF may comprise one or more processors; and memory storing instructions that, when executed by the one or more processors, cause the PCF to perform the described method, additional operations, and/or include the additional elements. A system may comprise the PCF configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A base station may receive a first message from a computing device comprising a parameter indicating a status of a power supply for a wireless communication network associated with the base station and the computing device. The base station may determine an energy saving mode for at least one wireless device based on the parameter. The base station may send to the at least one wireless device, a second message indicating the energy saving mode. The parameter indicating the status of the power supply for the wireless communication network may be based on at least one policy and charging control (PCC) rule for the at least one wireless device. The first message may comprise at least one PCC rule for the at least one wireless device, and the at least one PCC rule may comprise the parameter indicating the status of the power supply for the wireless communication network. The base station may determine that a failure of the power supply has occurred, based on the parameter indicating the status of the power supply for the wireless communication network. The determining the energy saving mode may be based on the determining the failure of the power supply. The determining the energy saving mode for the at least one wireless device of the wireless communication network may be based on a failure of a primary power supply and may comprise using a backup power supply to determine the energy saving mode. The power supply for the wireless communication network may comprise an electrical supply service, and the status of the power supply for the wireless communication network may indicate at least one of: a Failure of Electrical Supply Service Indication (FESSI); a location of a failure of at least one portion of the power supply for the wireless communication network; or a recovery time for a failure of at least one portion of the power supply for the wireless communication network to resume operation. The second message may be configured to disable at least one first operation of the at least one wireless device while maintaining operation of at least one second operation of the at least one wireless device. The first message may further comprise: an indication of a backup power supply for use by the wireless communication network; and a quantity of power reduction of an electrical supply service for the wireless communication network. The computing device may comprise at least one of: an access and mobility management function (AMF) device; a user plane function (UPF) device; a session management function (SMF) device; a policy control function (PCF) device; or an application function (AF) device. The base station may comprise one or more processors; and memory storing instructions that, when executed by the one or more processors, cause the base station to perform the described method, additional operations, and/or include the additional elements. A system may comprise the base station configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A first computing device may receive a first message from a second computing device comprising a parameter indicating a status of a power supply for a wireless communication network associated with the first computing device and the second computing device. The first computing device may determine at least one policy and charging control (PCC) rule for at least one wireless device, based on the parameter. The first computing device may send a second message to a third computing device of the wireless communication network, and the second message may comprise the at least one PCC rule. The second message may further comprise an indication of an energy saving mode, and the at least one PCC rule may comprise the parameter indicating the status of the power supply for the wireless communication network. The first computing device may determine that a failure of the power supply has occurred, based on the parameter indicating the status of the power supply for the wireless communication network, and the determining the at least one PCC rule may be based on the determining the failure of the power supply. The power supply for the wireless communication network may comprise an electrical supply service, and the status of the power supply for the wireless communication network may indicate at least one of: a Failure of Electrical Supply Service Indication (FESSI); a location of a failure of at least one portion of the power supply for the wireless communication network; or a recovery time for a failure of at least one portion of the power supply for the wireless communication network to resume operation. The second message may be configured to disable at least one first operation of at least one wireless device while maintaining operation of at least one second operation of at least one wireless device. The second message may further comprise: an indication of a backup power supply for use by the wireless communication network; and a quantity of power reduction of an electrical supply service for the wireless communication network. The first computing device may comprise at least one of: an access and mobility management function (AMF) device; a user plane function (UPF) device; a session management function (SMF) device; a policy control function (PCF) device; or an application function (AF) device. The second computing device may comprise at least one of an AF device, a network data analytics function (NWDAF) device, an operation administration and maintenance function (OAM) device, or a network exposure function (NEF) device. The third computing device may comprise at least one of an AMF device; a UPF device; or an SMF device. The first computing device may comprise one or more processors; and memory storing instructions that, when executed by the one or more processors, cause the first computing device to perform the described method, additional operations, and/or include the additional elements. A system may comprise the first computing device configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

A base station, one or more wireless devices, and/or a core network device may perform a method comprising multiple operations. A computing device may determine a failure of a primary power supply for a wireless communication network associated with the computing device. The computing device may determine, using a backup power supply and based on the failure of the primary power supply, an energy saving mode for at least one wireless device associated with the wireless communication network. The computing device may send an indication of the energy saving mode to a second computing device associated with the wireless communication network. The computing device may receive a first message, and the first message may comprise a parameter indicating a status of a power supply for the wireless communication network. The power supply for the wireless communication network may comprise the primary power supply. The computing device may determine at least one policy and charging control (PCC) rule for the at least one wireless device, based on the parameter, and the at least one PCC rule may comprise an indication of the energy saving mode. The sending the indication of the energy saving mode may comprise sending a second message, and the second message may comprise the at least one PCC rule. The primary power supply for the wireless communication network may comprise an electrical supply service, and the sending the indication of the energy saving mode may comprise sending an indication of at least one of: a Failure of Electrical Supply Service Indication (FESSI); a location of a failure of at least one portion of the primary power supply for the wireless communication network; or a recovery time for a failure of at least one portion of the primary power supply for the wireless communication network to resume operation. The sending the indication of the energy saving mode may be configured to disable at least one first operation of at least one wireless device while maintaining operation of at least one second operation of at least one wireless device. The computing device may send an indication of a quantity of power reduction of an electrical supply service for the wireless communication network. The computing device may comprise at least one of: an access and mobility management function (AMF) device; a user plane function (UPF) device; a session management function (SMF) device; a policy control function (PCF) device; or an application function (AF) device. The computing device may comprise one or more processors; and memory storing instructions that, when executed by the one or more processors, cause the computing device to perform the described method, additional operations, and/or include the additional elements. A system may comprise the computing device configured to perform the described method, additional operations and/or include the additional elements; one or more wireless devices configured to communicate with the base station; and/or a core network device configured to communicate with the base station. A computer-readable medium may store instructions that, when executed, cause performance of the described method, additional operations, and/or include the additional elements.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a base station from a computing device, a first message comprising a parameter indicating a status of a power supply for a wireless communication network associated with the base station and the computing device.

Clause 2. The method of clause 1, further comprising: determining, by the base station and based on the parameter, an energy saving mode for at least one wireless device.

Clause 3. The method of any one of clauses 1 to 2, further comprising: sending, by the base station to the at least one wireless device, a second message indicating the energy saving mode.

Clause 4. The method of any one of clauses 1 to 3, wherein at least one of: the parameter indicating the status of the power supply for the wireless communication network is based on at least one policy and charging control (PCC) rule for the at least one wireless device, or the first message comprises at least one policy and charging control (PCC) rule for the at least one wireless device and wherein the at least one PCC rule comprises the parameter indicating the status of the power supply for the wireless communication network.

Clause 5. The method of any one of clauses 1 to 4, further comprising: determining, based on the parameter indicating the status of the power supply for the wireless communication network, that a failure of the power supply has occurred, wherein the determining the energy saving mode is based on the determining the failure of the power supply.

Clause 6. The method of any one of clauses 1 to 5, wherein the determining the energy saving mode for the at least one wireless device of the wireless communication network is based on a failure of a primary power supply and comprises using a backup power supply to determine the energy saving mode.

Clause 7. The method of any one of clauses 1 to 6, wherein the power supply for the wireless communication network comprises an electrical supply service, and wherein the status of the power supply for the wireless communication network indicates at least one of: a Failure of Electrical Supply Service Indication (FESSI); a location of a failure of at least one portion of the power supply for the wireless communication network; or a recovery time for a failure of at least one portion of the power supply for the wireless communication network to resume operation.

Clause 8. The method of any one of clauses 1 to 7, wherein the second message is configured to disable at least one first operation of the at least one wireless device while maintaining operation of at least one second operation of the at least one wireless device.

Clause 9. The method of any one of clauses 1 to 8, wherein the first message further comprises: an indication of a backup power supply for use by the wireless communication network; and a quantity of power reduction of an electrical supply service for the wireless communication network.

Clause 10. The method of any one of clauses 1 to 9, wherein the computing device comprises at least one of: an access and mobility management function (AMF) device; a user plane function (UPF) device; a session management function (SMF) device; a policy control function (PCF) device; or an application function (AF) device.

Clause 11. A computing device comprising: one or more processors; and memory storing instructions that, when executed by the one or more processors, cause the computing device to perform the method of any one of clauses 1 to 10.

Clause 12. A system comprising: a base station configured to perform the method of any one of clauses 1 to 10; and a wireless device configured to communicate with the base station.

Clause 13. A computer-readable medium storing instructions that, when executed, cause performance of the method of any one of clauses 1 to 10.

Clause 14. A method comprising: receiving, by a first computing device from a second computing device, a first message comprising a parameter indicating a status of a power supply for a wireless communication network associated with the first computing device and the second computing device.

Clause 15. The method of clause 14, further comprising: determining, by the first computing device and based on the parameter, at least one policy and charging control (PCC) rule for at least one wireless device.

Clause 16. The method of any one of clauses 14 to 15, further comprising: sending, by the first computing device to a third computing device of the wireless communication network, a second message comprising the at least one PCC rule.

Clause 17. The method of any one of clauses 14 to 16, wherein the second message further comprises an indication of an energy saving mode, and wherein the at least one PCC rule comprises the parameter indicating the status of the power supply for the wireless communication network.

Clause 18. The method of any one of clauses 14 to 17, further comprising: determining, based on the parameter indicating the status of the power supply for the wireless communication network, that a failure of the power supply has occurred, wherein the determining the at least one PCC rule is based on the determining the failure of the power supply.

Clause 19. The method of any one of clauses 14 to 18, wherein the power supply for the wireless communication network comprises an electrical supply service, and wherein the status of the power supply for the wireless communication network indicates at least one of: a Failure of Electrical Supply Service Indication (FESSI); a location of a failure of at least one portion of the power supply for the wireless communication network; or a recovery time for a failure of at least one portion of the power supply for the wireless communication network to resume operation.

Clause 20. The method of any one of clauses 14 to 19, wherein the second message is configured to disable at least one first operation of at least one wireless device while maintaining operation of at least one second operation of at least one wireless device.

Clause 21. The method of any one of clauses 14 to 20, wherein the second message further comprises: an indication of a backup power supply for use by the wireless communication network; and a quantity of power reduction of an electrical supply service for the wireless communication network.

Clause 22. The method of any one of clauses 14 to 21, wherein the first computing device comprises at least one of: an access and mobility management function (AMF) device; a user plane function (UPF) device; a session management function (SMF) device; a policy control function (PCF) device; or an application function (AF) device; the second computing device comprises at least one of an AF device, a network data analytics function (NWDAF) device, an operation administration and maintenance function (OAM) device, or a network exposure function (NEF) device; and/or the third computing device comprises at least one of an AMF device; a UPF device; or an SMF device.

Clause 23. A computing device comprising: one or more processors; and memory storing instructions that, when executed by the one or more processors, cause the computing device to perform the method of any one of clauses 14 to 22.

Clause 24. A system comprising: a network device configured to perform the method of any one of clauses 14 to 22; and a wireless device configured to communicate with the network device.

Clause 25. A computer-readable medium storing instructions that, when executed, cause performance of the method of any one of clauses 14 to 22.

Clause 26. A method comprising: determining, by a computing device, a failure of a primary power supply for a wireless communication network associated with the computing device.

Clause 27. The method of clause 26, further comprising: determining, using a backup power supply and based on the failure of the primary power supply, an energy saving mode for at least one wireless device associated with the wireless communication network.

Clause 28. The method of any one of clauses 26 to 27, further comprising: sending, to a second computing device associated with the wireless communication network, an indication of the energy saving mode.

Clause 29. The method of any one of clauses 26 to 28, further comprising: receiving a first message comprising a parameter indicating a status of a power supply for the wireless communication network, wherein the power supply for the wireless communication network comprises the primary power supply; and determining, based on the parameter, at least one policy and charging control (PCC) rule for the at least one wireless device, wherein the at least one PCC rule comprises an indication of the energy saving mode, and wherein the sending the indication of the energy saving mode comprises sending a second message comprising the the at least one PCC rule.

Clause 30. The method of any one of clauses 26 to 29, wherein the primary power supply for the wireless communication network comprises an electrical supply service, and wherein the sending the indication of the energy saving mode comprises sending an indication of at least one of: a Failure of Electrical Supply Service Indication (FESSI); a location of a failure of at least one portion of the primary power supply for the wireless communication network; or a recovery time for a failure of at least one portion of the primary power supply for the wireless communication network to resume operation.

Clause 31. The method of any one of clauses 26 to 30, wherein the sending the indication of the energy saving mode is configured to disable at least one first operation of at least one wireless device while maintaining operation of at least one second operation of at least one wireless device.

Clause 32. The method of any one of clauses 26 to 31, further comprising sending an indication of a quantity of power reduction of an electrical supply service for the wireless communication network.

Clause 33. The method of any one of clauses 26 to 32, wherein the computing device comprises at least one of: an access and mobility management function (AMF) device; a user plane function (UPF) device; a session management function (SMF) device; a policy control function (PCF) device; or an application function (AF) device.

Clause 34. A computing device comprising: one or more processors; and memory storing instructions that, when executed by the one or more processors, cause the computing device to perform the method of any one of clauses 26 to 33.

Clause 35. A system comprising: a network device configured to perform the method of any one of clauses 26 to 33; and a wireless device configured to communicate with the network device.

Clause 36. A computer-readable medium storing instructions that, when executed, cause performance of the method of any one of clauses 26 to 33.

Clause 37. A computing device comprising: one or more processors; and memory storing instructions that, when executed by the one or more processors, cause the computing device to perform: the method of any one of clauses 26 to 33.

Clause 38. A system comprising: a base station configured to perform the method of any one of clauses 26 to 33; and a computing device configured to receive the indication of the energy saving mode.

Clause 39. A computer-readable medium storing instructions that, when executed, cause performance of: the method of any one of clauses 26 to 33.

Clause 40. A method comprising: receiving, by a policy control function (PCF) of a network from an application function (AF), a first message comprising a parameter indicating status of electrical supply service for the network.

Clause 41. The method of clause 40, further comprising: determining, by the PCF and based on the parameter, at least one policy and charging control (PCC) rule for at least one wireless device.

Clause 42. The method of any one of clauses 40 to 41, further comprising: sending, by the PCF to a session and management function (SMF), a second message comprising the at least one PCC rule.

Clause 43. The method of any one of clauses 40 to 42, wherein the status of electrical supply service impacts part of the network, or all network elements of the network.

Clause 44. The method of any one of clauses 40 to 43, wherein the status of electrical supply service for the network indicates a failure of electrical supply service for the network.

Clause 45. The method of any one of clauses 40 to 44, wherein the failure of electrical supply service indicates a power system is not able to provide electrical supply service to the network.

Clause 46. The method of any one of clauses 40 to 45, wherein the status of electrical supply service for the network indicates a recovery of electrical supply service for the network.

Clause 47. The method of any one of clauses 40 to 46, wherein the recovery of electrical supply service indicates a power system is able to provide electrical supply service to the network.

Clause 48. The method of any one of clauses 40 to 47, wherein the at least one PCC rule indicates allowed service for the at least one wireless device, wherein the at least one wireless device is in an affected area by the status of electrical supply service.

Clause 49. The method of any one of clauses 40 to 48, wherein the at least one PCC rule comprises at least one application identifier identifying the allowed service.

Clause 50. The method of any one of clauses 40 to 49, wherein the at least one PCC rule comprises at least one QoS flow identifier for the allowed service.

Clause 51. The method of any one of clauses 40 to 50, wherein the at least one PCC rule comprises at least one service data flow (SDF) template for the allowed service.

Clause 52. The method of any one of clauses 40 to 51, wherein the at least one PCC rule comprises at least one QoS parameters for the allowed service, wherein the at least one QoS parameters comprises at least one of: 5QI; QCI; ARP; RQA; GFBR; MFBR; maximum packet loss; or RQI.

Clause 53. The method of any one of clauses 40 to 52, based on a failure of the electrical power supply service, the PCF determines a smaller bandwidth for the at least one QoS parameters for the allowed service.

Clause 54. The method of any one of clauses 40 to 53, wherein the at least one PCC rule is for per (affected) area, cell, routing area, or a physical location.

Clause 55. The method of any one of clauses 40 to 54, further comprising determining, by the PCF and based on affected area/location of the status of electrical supply service, at least one affected network.

Clause 56. The method of any one of clauses 40 to 55, further comprising determining, by the PCF and based on affected area/location of the status of electrical supply service, at least one affected network function of affected network, wherein the at least one affected network function comprises at least one of: SMF; UPF; AMF; or base station.

Clause 57. The method of any one of clauses 40 to 56, further comprising determining, by the PCF and based on affected area/location of the status of electrical supply service, at least one affected wireless device.

Clause 58. The method of any one of clauses 40 to 57, wherein the network indicates a communication system.

Clause 59. The method of any one of clauses 40 to 58, wherein the network comprises at least one of: the PCF; the SMF; at least one UPF; at least one access and mobility management function (AMF); at least one base station; at least one Operations, Administration and Maintenance (OAM); or at least one Network Data Analytics Function (NWDAF).

Clause 60. The method of any one of clauses 40 to 59, wherein the first message further comprises at least one of: a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 61. The method of any one of clauses 40 to 60, further comprising determining, by the PCF, the at least one PCC rule based on at least one of: the second parameter; the third parameter; or the fourth parameter.

Clause 62. The method of any one of clauses 40 to 61, further comprising sending, by the PCF to the AF, a third message indicating subscribing changing of the status of electrical supply service for the network.

Clause 63. The method of any one of clauses 40 to 62, wherein the third message comprises an identity of the network, wherein the identity of the network comprises an identity of a public land mobile network (PLMN).

Clause 64. The method of any one of clauses 40 to 63, wherein the third message comprises location information (e.g., geography area 1) of the network.

Clause 65. The method of any one of clauses 40 to 64, wherein the third message comprises an identity of at least one network function of the network, wherein the at least one network function comprises at least one of: the PCF; at least one NWDAF; at least one OAM; at least one SMF; at least one UPF; at least one AMF; or at least one base station.

Clause 66. The method of any one of clauses 40 to 65, wherein the third message comprises location information of the at least one network function of the network.

Clause 67. The method of any one of clauses 40 to 66, further comprising sending, by the PCF to a network function, a Service Continue Capability Query message indicating querying service continue capability of the network, wherein the Service Continue Capability Query message comprises at least one of: an identity of the network; a parameter indicating status of electrical supply service for the network; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 68. The method of any one of clauses 40 to 67, further comprising receiving, by the PCF from the network function, a Service Continue Capability Query Response message indicating service continue capability of the network, wherein the service continue capability of the network comprises at least one of: time for service continue; area for service continue; or backup sources of electric power.

Clause 69. The method of any one of clauses 40 to 68, wherein the backup sources of electric power comprise at least one of: a battery; an uninterruptible power supply (UPS); or a diesel.

Clause 70. The method of any one of clauses 40 to 69, wherein the network function comprises at least one of: an Operations, Administration and Maintenance (OAM); or Network Data Analytics Function (NWDAF).

Clause 71. The method of any one of clauses 40 to 70, further comprising sending, by the PCF to the AF, the service continue capability of the network.

Clause 72. The method of any one of clauses 40 to 71, wherein the second message further comprising at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 73. The method of any one of clauses 40 to 72, wherein the second message further comprising at least one of: an identity of the at least one wireless device affected by the status of the electrical supply service; an identifier of at least one PDU session associated with the at least one wireless device; a network slice identifier (e.g., S-NSSAI) associated with the at least one wireless device; or a DNN associated with the at least one wireless device.

Clause 74. The method of any one of clauses 40 to 73, further comprising determining, by the PCF, access and mobility related policy information for allowed services, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 75. The method of any one of clauses 40 to 74, wherein the access and mobility related policy information comprises at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 76. The method of any one of clauses 40 to 75, further comprising sending, by the PCF to an AMF, the access and mobility related policy information.

Clause 77. The method of any one of clauses 40 to 76, further comprising sending, by the PCF to an AMF, at least one of: an identity of the at least one wireless device affected by the status of the electrical supply service; an identifier of at least one PDU session associated with the at least one wireless device; a network slice identifier (e.g., S-NSSAI) associated with the at least one wireless device; or a DNN associated with the at least one wireless device.

Clause 78. The method of any one of clauses 40 to 77, further comprising determining, by the SMF and based on the at least one PCC rule, at least one user plane rule associated with at least one protocol data unit (PDU) session for the at least one wireless device.

Clause 79. The method of any one of clauses 40 to 78, wherein the at least one user plane rule comprises at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 80. The method of any one of clauses 40 to 79, further comprising sending, by the SMF to a UPF, the at least one user plane rule.

Clause 81. The method of any one of clauses 40 to 80, further comprising receiving, by the PCF from a network function, the first message, wherein the network function comprises at least one of: a NEF; an OAM; a NWDAF; or an AAA.

Clause 82. The method of any one of clauses 40 to 81, further comprising receiving, by the PCF from a data network of a power system, the first message.

Clause 83. A computing device comprising: one or more processors; and memory storing instructions that, when executed by the one or more processors, cause the computing device to perform the method of any one of clauses 40 to 82.

Clause 84. A system comprising: a network device configured to perform the method of any one of clauses 40 to 82; and a wireless device configured to communicate with the network device.

Clause 85. A computer-readable medium storing instructions that, when executed, cause performance of the method of any one of clauses 40 to 82.

Clause 86. A method comprising: receiving, by a session and management function (SMF) of a network from a policy control function (PCF), a first message comprising a parameter indicating status of electrical supply service for the network.

Clause 87. The method of clause 86, further comprising: determining, by the SMF and based on the parameter, at least one user plane rule associated with at least one protocol data unit (PDU) session.

Clause 88. The method of any one of clauses 86 to 87, further comprising: sending, by the SMF to a user plane function (UPF), the at least one user plane rule.

Clause 89. The method of any one of clauses 86 to 88, further comprising determining, by the SMF, at least one wireless device affected by the Status of Electrical Supply Service, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 90. The method of any one of clauses 86 to 89, further comprising determining, by the SMF, at least one PDU session and/or at least one network slice associated with the at least one wireless device affected by the Status of Electrical Supply Service, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 91. The method of any one of clauses 86 to 90, further comprising determining, by the SMF, limit number of PDU session and/or number of network slice, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 92. The method of any one of clauses 86 to 91, further comprising determining, by the SMF, type of PDU session and/or type of network slice, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 93. The method of any one of clauses 86 to 92, further comprising determining, by the SMF, at least one QoS policy/parameters for the allowed services, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 94. The method of any one of clauses 86 to 93, further comprising sending, by the SMF to at least one affected wireless device, a NAS message comprising the at least one QoS policy/parameters.

Clause 95. The method of any one of clauses 86 to 94, further comprising determining, by the SMF, at least one AMF and/or at least one base station affected by the Status of Electrical Supply Service, based on at least one of: the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 96. The method of any one of clauses 86 to 95, further comprising sending, by the SMF to the at least one affected AMF, a N1N2 message comprising at least one of: at least one QoS policy/parameters for allowed services; the parameter; a second parameter indicating an affected area by the status of electrical supply service; a third parameter indicating recovery time of electrical supply service; or a fourth parameter indicating at least one network and/or at least one network function of the at least one network affected by the status of electrical supply service.

Clause 97. A computing device comprising: one or more processors; and memory storing instructions that, when executed by the one or more processors, cause the computing device to perform the method of any one of clauses 86 to 96.

Clause 98. A system comprising: a network device configured to perform the method of any one of clauses 86 to 96; and a wireless device configured to communicate with the network device.

Clause 99. A computer-readable medium storing instructions that, when executed, cause performance of the method of any one of clauses 86 to 96.

Clause 100. A method comprising: receiving, by a session and management function (SMF) of a network from a network function, a first message comprising a parameter indicating status of electrical supply service for the network.

Clause 101. The method of clause 100, further comprising: determining, by the SMF and based on the parameter, QoS parameters for at least one wireless device.

Clause 102. The method of any one of clauses 100 to 101, further comprising: sending, by the SMF to the at least one wireless device, a second message comprising the QoS parameters.

Clause 103. The method of any one of clauses 100 to 102, wherein the network function comprises at least one of: a policy control function; or a network exposure function (NEF).

Clause 104. The method of any one of clauses 100 to 103, wherein the first message further comprises at least one of: a second parameter indicating an affected area by the status of electrical supply service; or a third parameter indicating recovery time of electrical supply service.

Clause 105. The method of any one of clauses 100 to 104, further comprising determining, by the SMF, the QoS parameters based on at least one of: the second parameter; or the third parameter.

Clause 106. The method of any one of clauses 100 to 105, wherein the second message further comprising at least one of: the parameter; a second parameter indicating an affected area by the status of electrical supply service; or a third parameter indicating recovery time of electrical supply service.

Clause 107. A computing device comprising: one or more processors; and memory storing instructions that, when executed by the one or more processors, cause the computing device to perform the method of any one of clauses 100 to 106.

Clause 108. A system comprising: a network device configured to perform the method of any one of clauses 100 to 106; and a wireless device configured to communicate with the network device.

Clause 109. A computer-readable medium storing instructions that, when executed, cause performance of the method of any one of clauses 100 to 106.

Clause 110. A method comprising: receiving, by a policy control function (PCF) of a network from a network function, a first message comprising a parameter indicating status of electrical supply service for the network.

Clause 111. The method of clause 110, further comprising: sending, by the PCF to a session and management function (SMF), a second message comprising at least one policy and charging control (PCC) rule based on the parameter.

Clause 112. The method of any one of clauses 110 to 111, wherein the network function comprises at least one of: an application function (AF); a network exposure function (NEF); an SMF; a UPF; an AMF; or a base station.

Clause 113. A computing device comprising: one or more processors; and memory storing instructions that, when executed by the one or more processors, cause the computing device to perform the method of any one of clauses 110 to 112.

Clause 114. A system comprising: a network device configured to perform the method of any one of clauses 110 to 112; and a wireless device configured to communicate with the network device.

Clause 115. A computer-readable medium storing instructions that, when executed, cause performance of the method of any one of clauses 110 to 112.

Clause 116. A method comprising: receiving, by a base station from a network function of a network, a first message comprising a parameter indicating status of electrical supply service for the network.

Clause 117. The method of clause 116, further comprising: determining, by the base station and based on the parameter, an energy saving mode for at least one wireless device.

Clause 118. The method of any one of clauses 116 to 117, further comprising: sending, by the base station to the at least one wireless device, a second message indicating the energy saving mode.

Clause 119. The method of any one of clauses 116 to 118, wherein the energy saving mode indicates network energy consumption is decreased.

Clause 120. The method of any one of clauses 116 to 119, wherein the energy saving mode indicates the base station decreases time resource for the at least one wireless device.

Clause 121. The method of any one of clauses 116 to 120, wherein the energy saving mode indicates the base station decreases frequency resource for the at least one wireless device.

Clause 122. The method of any one of clauses 116 to 121, wherein the energy saving mode indicates the base station decreases spatial resource for the at least one wireless device.

Clause 123. The method of any one of clauses 116 to 122, wherein the energy saving mode indicates the base station reduce power for the at least one wireless device.

Clause 124. The method of any one of clauses 116 to 123, wherein the network function comprises at least one of: an access and mobility management function (AMF); a session management function (SMF); an OAM; a NWDAF; or an AAA.

Clause 125. A computing device comprising: one or more processors; and memory storing instructions that, when executed by the one or more processors, cause the computing device to perform the method of any one of clauses 116 to 124.

Clause 126. A system comprising: a base station configured to perform the method of any one of clauses 116 to 124; and a wireless device configured to communicate with the base station.

Clause 127. A computer-readable medium storing instructions that, when executed, cause performance of the method of any one of clauses 116 to 124.

Clause 128. A method comprising: determining, by a base station, status of electrical supply service for the base station.

Clause 129. The method of clause 128, further comprising: sending, by the base station to at least one wireless device, a message comprising a parameter indicating status of electrical supply service.

Clause 130. The method of any one of clauses 128 to 129, further comprising detecting, by the base station, electrical supply service is not available.

Clause 131. The method of any one of clauses 128 to 130, wherein the determining is based on the detecting.

Clause 132. The method of any one of clauses 128 to 131, further comprising detecting, by the base station, electrical supply service is recovered.

Clause 133. The method of any one of clauses 128 to 132, further comprising receiving, by the base station from an AMF, a first message indicating electrical supply service is not available.

Clause 134. The method of any one of clauses 128 to 133, wherein the determining is based on the first message.

Clause 135. The method of any one of clauses 128 to 134, further comprising determining, by the base station and based on the status of electrical supply service, time resource for the at least one wireless device.

Clause 136. The method of any one of clauses 128 to 135, further comprising determining, by the base station and based on the status of electrical supply service, frequency resource for the at least one wireless device.

Clause 137. The method of any one of clauses 128 to 136, further comprising determining, by the base station and based on the status of electrical supply service, spatial resource for the at least one wireless device.

Clause 138. The method of any one of clauses 128 to 137, further comprising determining, by the base station and based on the status of electrical supply service, power resource for the at least one wireless device.

Clause 139. The method of any one of clauses 128 to 138, further comprising determining, by the base station and based on the status of electrical supply service, DRB or QoS resource for the at least one wireless device.

Clause 140. The method of any one of clauses 128 to 139, further comprising determining, by the base station, at least one of: time resource for the at least one wireless device; frequency resource for the at least one wireless device; spatial resource for the at least one wireless device; power resource for the at least one wireless device; or DRB/QoS resource for the at least one wireless device; based on at least one of: the parameter; a second parameter indicating an affected area by the status of electrical supply service; a third parameter indicating recovery time of electrical supply service; a fourth parameter indicating at least one network and/or at least one network function of the at least one network affected by the status of electrical supply service; a fifth parameter indicating energy saving mode; or service continue capability of the network.

Clause 141. The method of any one of clauses 128 to 140, wherein the service continue capability of the network comprises at least one of: time for service continue; area for service continue; or backup sources of electric power.

Clause 142. A computing device comprising: one or more processors; and memory storing instructions that, when executed by the one or more processors, cause the computing device to perform the method of any one of clauses 128 to 141.

Clause 143. A system comprising: a base station configured to perform the method of any one of clauses 128 to 141; and a wireless device configured to communicate with the base station.

Clause 144. A computer-readable medium storing instructions that, when executed, cause performance of the method of any one of clauses 128 to 141.

Clause 145. A method comprising: receiving, by a base station from a wireless device, a RRC request message requesting establishment of a RRC connection.

Clause 146. The method of clause 145, further comprising: determining, by the base station and based on status of electrical supply service of the base station, unified access control (LTAC) for the wireless device.

Clause 147. The method of any one of clauses 145 to 146, further comprising: sending, by the base station to the wireless device, a RRC reject message comprising a parameter indicating status of electrical supply service.

Clause 148. A computing device comprising: one or more processors; and memory storing instructions that, when executed by the one or more processors, cause the computing device to perform the method of any one of clauses 145 to 147.

Clause 149. A system comprising: a base station configured to perform the method of any one of clauses 145 to 147; and a wireless device configured to communicate with the base station.

Clause 150. A computer-readable medium storing instructions that, when executed, cause performance of the method of any one of clauses 145 to 147.

Clause 151. A method comprising: receiving, by an AMF from a wireless device, a registration request message requesting register to a network.

Clause 152. The method of clause 151, further comprising: determining, by the AMF and based on status of electrical supply service of the network, unified access control (UAC) for the wireless device.

Clause 153. The method of any one of clauses 151 to 152, further comprising: sending, by the AMF to the wireless device, a response message comprising a parameter indicating status of electrical supply service.

Clause 154. A computing device comprising: one or more processors; and memory storing instructions that, when executed by the one or more processors, cause the computing device to perform the method of any one of clauses 151 to 153.

Clause 155. A system comprising: a network device configured to perform the method of any one of clauses 151 to 153; and a wireless device configured to communicate with the network device.

Clause 156. A computer-readable medium storing instructions that, when executed, cause performance of the method of any one of clauses 151 to 153.

Clause 157. A method comprising: receiving, by a PCF from a network function of a network, a first message comprising a parameter indicating status of electrical supply service for the network.

Clause 158. The method of clause 157, further comprising: determining, by the PCF and based on the parameter, an energy saving mode for the network function.

Clause 159. The method of any one of clauses 157 to 158, further comprising: sending, by the PCF to the network function, a second message indicating the energy saving mode.

Clause 160. The method of any one of clauses 157 to 159, wherein the network function comprises at least one of: an AMF; an SMF; a UPF; or a base station.

Clause 161. The method of any one of clauses 157 to 160, wherein the second message may comprise a parameter indicating to lower the equipment power supply of the network function.

Clause 162. The method of any one of clauses 157 to 161, wherein the second message may comprise a parameter indicating to shut down the equipment power supply of the network function.

Clause 163. The method of any one of clauses 157 to 162, further comprising receiving, by the PCF from a second network function, the parameter, wherein the second network function comprises at least one of: an AF; an AAA; an OAM; or an NWDAF.

Clause 164. The method of any one of clauses 157 to 163, further comprising detecting, by the PCF, the status of electrical supply service for the network.

Clause 165. A computing device comprising: one or more processors; and memory storing instructions that, when executed by the one or more processors, cause the computing device to perform the method of any one of clauses 157 to 164.

Clause 166. A system comprising: a network device configured to perform the method of any one of clauses 157 to 164; and a wireless device configured to communicate with the network device.

Clause 167. A computer-readable medium storing instructions that, when executed, cause performance of the method of any one of clauses 157 to 164.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. Various examples may be used, for example, if the one or more criteria are met. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a base station from a computing device, a first message comprising a parameter indicating a status of a power supply for a wireless communication network associated with the base station and the computing device;
determining, by the base station and based on the parameter, an energy saving mode for at least one wireless device; and
sending, by the base station to the at least one wireless device, a second message indicating the energy saving mode.

2. The method of claim 1, wherein the parameter indicating the status of the power supply for the wireless communication network is based on at least one policy and charging control (PCC) rule for the at least one wireless device.

3. The method of any one of claims 1 to 2, further comprising:
determining, based on the parameter indicating the status of the power supply for the wireless communication network, that a failure of the power supply has occurred, wherein the determining the energy saving mode is based on the determining the failure of the power supply.

4. The method of any one of claims 1 to 3, wherein the computing device comprises at least one of:
an access and mobility management function (AMF) device;
a user plane function (UPF) device;
a session management function (SMF) device;
a policy control function (PCF) device; or
an application function (AF) device.

5. The method of any one of claims 1 to 4, wherein the determining the energy saving mode for the at least one wireless device of the wireless communication network is based on a failure of a primary power supply and comprises using a backup power supply to determine the energy saving mode.

6. A method comprising:
receiving, by a first computing device from a second computing device, a first message comprising a parameter indicating a status of a power supply for a wireless communication network associated with the first computing device and the second computing device;
determining, by the first computing device and based on the parameter, at least one policy and charging control (PCC) rule for at least one wireless device; and
sending, by the first computing device to a third computing device of the wireless communication network, a second message comprising the at least one PCC rule.

7. The method of claim 6, wherein the second message further comprises an indication of an energy saving mode, and wherein the at least one PCC rule comprises the parameter indicating the status of the power supply for the wireless communication network.

8. The method of any one of claims 6 to 7, further comprising:
determining, based on the parameter indicating the status of the power supply for the wireless communication network, that a failure of the power supply has occurred, wherein the determining the at least one PCC rule is based on the determining the failure of the power supply.

9. The method of any one of claims 6 to 8, wherein the first computing device comprises at least one of:
an access and mobility management function (AMF) device;
a user plane function (UPF) device;
a session management function (SMF) device;
a policy control function (PCF) device; or
an application function (AF) device.

10. The method of any one of claims 1 to 9, wherein the power supply for the wireless communication network comprises an electrical supply service, and wherein the status of the power supply for the wireless communication network indicates at least one of:
a Failure of Electrical Supply Service Indication (FESSI);
a location of a failure of at least one portion of the power supply for the wireless communication network; or
a recovery time for a failure of at least one portion of the power supply for the wireless communication network to resume operation.

11. The method of any one of claims 1 to 10, wherein the second message is configured to disable at least one first operation of the at least one wireless device while maintaining operation of at least one second operation of the at least one wireless device.

12. The method of any one of claim 1 to 11, wherein the first message further comprises:
an indication of a backup power supply for use by the wireless communication network; and
a quantity of power reduction of an electrical supply service for the wireless communication network.

13. A computing device comprising: one or more processors; and memory storing instructions that, when executed by the one or more processors, cause the computing device to perform:
the method of any one of claims 1 to 5 and 10 to 12 when depending from claim 1; or
the method of any one of claims 6 to 9 and 10 to 12 when depending from claim 6.

14. A system comprising:
a base station configured to perform the method of any one of claims 1 to 5 and 10 to 12 when depending from claim 1; and
a computing device configured to perform the method of any one of claims 6 to 9 and 10 to 12 when depending from claim 6.

15. A computer-readable medium storing instructions that, when executed, cause performance of:
the method of any one of claims 1 to 5 and 10 to 12 when depending from claim 1; or
the method of any one of claims 6 to 9 and 10 to 12 when depending from claim 6.
